(19) Europäisches Patentamt

European Patent Office

Office européen des brevets

(11) EP 0 351 842 B1

## (12) EUROPEAN PATENT SPECIFICATION

(45) Date of publication and mention
of the grant of the patent:
**11.09.1996  Bulletin 1996/37**

(51) Int Cl.$^6$: **G06F 9/44**

(21) Application number: **89113337.3**

(22) Date of filing: **20.07.1989**

(54) **Method and apparatus of automated theorem proving for information processing**

Verfahren und Vorrichtung zum automatischen Beweisen von Theoremen für
Informationsverarbeitung

Méthode et dispositif de démonstration automatique de théorèmes pour le traitement de l'information

(84) Designated Contracting States:
**DE FR GB**

(30) Priority: **20.07.1988  JP  179210/88**

(43) Date of publication of application:
**24.01.1990  Bulletin 1990/04**

(73) Proprietor: **KABUSHIKI KAISHA TOSHIBA
Kawasaki-shi, Kanagawa-ken 210 (JP)**

(72) Inventor: **Yamazaki, Isamu
Kawasaki-shi Kanagawa-ken (JP)**

(74) Representative: **Lehn, Werner, Dipl.-Ing. et al
Hoffmann, Eitle & Partner,
Patentanwälte,
Postfach 81 04 20
81904 München (DE)**

(56) References cited:
- **PROC. 9TH INT. CONF. ON AUTOMATED
  DEDUCTION. 23 May 1988, SPRINGER VERLAG,
  BERLIN, GERMANY pages 21 - 40; TIE CHENG
  WANG: 'Elements of Z-module reasoning.**
- **JOURNAL OF AUTOMATED REASONING vol. 3,
  no. 4, December 1987, pages 437 - 451;
  TIE-CHENG WANG: 'Case Studies of Z-module
  Reasoning: Proving Benchmark Theorems from
  Ring Theory.'**
- **AUTHUR GILL 'Applied Algebra for the
  Computer Sciences' 1976 , PRENTICE HALL,
  INC. , ENGLEWOOD CLIFFS, NEW JERSEY**

**Description**

BACKGROUND OF THE INVENTION

Field of the Invention

The present invention generally relates to the field of information processing and artificial intelligence and, more particularly, to a method and an apparatus of automated theorem proving in which an answer to a posed question is automatically sought on a basis of and derived, if possible, from a given set of knowledge.

Description of the Background Art

Recent progress in computer science prompted the research and advance of a so called 'knowledge processing'. In this type of information processing, a language called 'Prolog' is often employed, which incorporates a mechanism for an answer to a posed question to be automatically sought on a basis of and derived, if possible, from a prescribed set of knowledge. As can be found in detail in 'Programing in Prolog', Springer-Verlag, 1981, by W.F.Clocksin and C. S.Mellish [this will be referred hereafter as Ref. 1], in Prolog, knowledge given in form of "clause" (precise definition of this and other technical terms will be given below) will be regarded as axiom and a question posed also in a form of clause will be regarded as a theorem to be proved.

Although the technique of such an automated theorem proving is mostly utilized in the field of such a knowledge processing, it is also highly useful in automatic validation of programs and logical circuits.

A detail of conventional technique of automated theorem proving can be found in 'Symbolic Logic and Mechanical Theorem Proving', Academic Press, 1973, by Chin-Liang Chang and Richard Char-Tung Lee [this will be referred hereafter as Ref. 2]. Some basic facts and relevant conventional technique which can be found in this Ref. 2 will be described in some detail below in the DETAILED DESCRIPTION OF THE PREFERRED EMBODIMENTS in relations to the present invention. Here, without giving any clear definitions to terms, the problem of the prior art will be summarized.

In the automated theorem proving, in essence, the problem of theorem proving is dealt with by transforming the problem into an equivalent problem of determining the unsatisfiability of the set of clauses, on a basis of the fact that "If a given theorem can be proved on a basis of the axioms (i.e., if a given theorem is true), then a set of clauses obtained by adding a clause representing a negation of the given theorem to a set of clauses of the axioms is unsatisfiable". That a set of clauses is satisfiable means there exists an "allotting (or interpretation)" of logical values under which all the clauses in the set of clauses can simultaneously be "true".

For the determination of the unsatisfiability of the set of clauses, a technique called the "resolution principle" has conventionally been used. The "resolution" is a kind of deduction in which a clause called "resolvent" is derived from two clauses, which is guaranteed to be true when the two original clauses are true. The unsatisfiability of the set of clauses is determined on a basis of the fact that "If a set of clauses is unsatisfiable, then it is possible to derive an 'empty clause' from this set of clauses by repeating the resolution" (the fact known as the completeness of the resolution principle).

Thus, conventionally, how fast can the empty clause be derived by repeating the resolution, or alternatively, how fast can the fact that an empty clause cannot be derived be shown, has been a critical issue.

Now, for the resolution to be able to derive a resolvent, it is necessary that one and the other of the two original clauses contains one and the other member of a complementary pair (possible complementary pair, to be exact), respectively. Consequently, in order to derive an empty clause by the resolution, it is necessary at each step of resolution (1) to find quickly a pair of clauses for which one and the other of the pair contains one and the other member of a complementary pair, respectively, and (2) to guess one pair among all such pairs from which the empty clause can be derived faster than from the other pairs.

To this end, various techniques such as a unit resolution, a linear resolution, and lock resolution have been developed. However, these conventional techniques share in common a drawback that their efficiency(i,e., speed of deriving the empty clause) varies for different clauses to be dealt with, and that when no empty clause can be derived (i.e., when the clause is satisfiable) all the possible resolutions will be attempted so that the efficiency is very low for such a case.

Furthermore, conventionally, the very nature of techniques using the resolution defied a realization of parallel processing to perform them at high-speed.

SUMMARY OF THE INVENTION

It is therefore an object of the present invention to provide a method and an apparatus of automated theorem proving for information processing which can be highly efficient irrespective of a set of clauses to be dealt with, even when it is a satisfiable one, and which can also render an easy realization of high-speed parallel processing.

According to one aspect of the present invention there is provided a method of automated theorem proving for information processing in which the provability of a statement is automatically judged on a basis of a given set of knowledge, **characterized by** the steps of:

(a) transforming the statement and the set of knowledge into expressions in terms of elements of a module, wherein the elements of the module are ordered pairs of an integer and a collection of literals, wherein each collection of literals contains all the literals appearing in each clause belonging to set of clauses for the statement and the set of knowledge, with repeated occurrences of same literal allowed, said integer indicating the number of literals which are necessary to be true in order for the element of the module to be true;

(b) constructing a linear equation with the elements of the module as coefficients and elements of a ring of scalars of the module as unknowns, wherein the linear equation is in a form

$$\sum_{i=1}^{n} \left(1, x_i\right) \cdot \alpha_i = \left(1, \phi\right)$$

where (,) denotes an ordered pair of an integer and a collection of literals giving an element of the module, $x_i$ are collections of literals, $\varnothing$ is a collection of no literal, $\alpha_i$ are elements of the ring of scalars of the module, and • denotes a suitably defined operation of the elements of the ring of scalars of the module on the elements of the module;

(c) checking the existence of a non-negative solution to the linear equation; and

(d) determining that the statement is provable when the non-negative solution exists, and not provable otherwise.

According to another aspect of the present invention there is provided an apparatus of automated theorem proving for information processing in which the provability of a statement is automatically judged on a basis of a given set of knowledge, the apparatus being characterized by comprising:

(a) means for transforming the statement and the set of knowledge into expressions in terms of elements of a module, wherein the elements of a module are ordered pairs of an integer and a collection of literals, wherein each collection of literals contains all the literals appearing in each clause belonging to set of clauses for the statement and the set of knowledge, with repeated occurrences of same literal allowed, said integer indicating the number of literals which are necessary to be true in order for the element of the module to be true;

(b) means for constructing a linear equation with the elements of the module as coefficients and elements of a ring of scalars of the module as unknowns, wherein the linear equation is in a form:

$$\sum_{i=1}^{n} \left(1, x_i\right) \cdot \alpha_i = \left(1, \phi\right)$$

where (,) denotes an ordered pair of an integer and a collection of literals giving an element of the module, $x_i$ are collections of literals, $\varnothing$ is a collection of no literal, $\alpha_i$ are elements of the ring of scalars of the module, and • denotes a suitably defined operation of the elements of the ring of scalars of the module on the elements of the module;

(c) means for checking the existence of a non-negative solution to the linear equation, and

(d) means for determining that the statement is provable when the non-negative solution exists, and not provable otherwise.

Other features and advantages of the present invention will become aparent from the following description taken in conjunction with the accompanying drawings.

BRIEF DESCRIPTION OF THE DRAWINGS

Fig. 1 is a schematic block diagram of a first embodiment of an apparatus for automated theorem proving according to the present invention.

Fig. 2 is a flow chart outlining the operation of the first and second embodiments of an apparatus for automated theorem proving according to the present invention.

Fig. 3 is a flow chart for the operation of a transformation means in the first embodiment.

Fig. 4 is an illustration of an example of a propositional symbol table to be utilized in the first embodiment.

Fig. 5 is an illustration of an example of a content of an area U of a storing means to be utilized in the first embodiment.

Fig. 6 is a flow chart for the operation of an analyzing means in the first embodiment.

Fig. 7 is an illustration of an example of an unknown table to be utilized in the first embodiment.

Fig. 8 is a schematic block diagram of an analyzing means in the second embodiment.

Fig. 9 is a flow chart for the operation of a transformation means in the second embodiment.

Fig. 10 is an illustration of an example of a predicate symbol table to be utilized in the second embodiment.

Fig. 11 is an illustration of an example of a content of an area U of a storing means to be utilized in the second embodiment.

Fig. 12 is a flow chart for the operation of an r-transformation unit in the second embodiment.

Fig. 13 is an illustration of an example of an unknown table to be utilized in the second embodiment.

Fig. 14 is a flow chart for one subroutine to be utilized by the r-transformation unit in the second embodiment.

Fig. 15 is a flow chart for another subroutine to be utilized by the r-transformation unit in the second embodiment.

Fig. 16 is an illustration of an example of a variable table to be utilized in the second embodiment.

Fig. 17 is a flow chart for the operation of a Y solving unit in the second embodiment.

Fig. 18 is an illustration of the variable table in the second embodiment, showing its intermediate state in a course of the operation by the analyzing means.

Fig. 19 is a flow chart for the first part of the operation of a Z solving unit in the second embodiment.

Fig. 20 is an illustration of the variable table in the second embodiment, showing its intermediate state in a course of the operation by the analyzing means.

Fig. 21 is an illustration of the unknown table in the second embodiment, showing its intermediate state in a course of the operation by the analyzing means.

Fig. 22 is an illustration of the variable table in the second embodiment, showing its intermediate state in a course of the operation by the analyzing means.

Fig. 23 is an illustration of the unknown table in the second embodiment, showing its intermediate state in a course of the operation by the analyzing means.

Fig. 24 is an illustration of the unknown table in the second embodiment, showing its intermediate state in a course of the operation by the analyzing means.

Fig. 25 is an illustration of the variable table in the second embodiment, showing its intermediate state in a course of the operation by the analyzing means.

Fig. 26 is an illustration of the unknown table in the second embodiment, showing its intermediate state in a course of the operation by the analyzing means.

Fig. 27 is an illustration of an example of a corresponding variable table to be utilized in the second embodiment.

Fig. 28 is a flow chart for the second part of the operation of a Z solving unit in the second embodiment.

Fig. 29 is an illustration of the variable table in the second embodiment, showing its intermediate state in a course of the operation by the analyzing means.

Fig. 30 is an illustration of the corresponding variable table in the second embodiment, showing its intermediate state in a course of the operation by the analyzing means.

Fig. 31 is a flow chart for the operation of a checking unit in the second embodiment.

Fig. 32 is an illustration of the unknown table in the second embodiment, showing its intermediate state in a course of the operation by the analyzing means.

## DETAILED DESCRIPTION OF THE PREFERRED EMBODIMENTS

### 0. INTRODUCTION

In what follows, the preferred embodiments of the present invention will be described in full detail. However, it is indispensable for the proper appreciation of the present invention to understand the underlying theoretical concepts. Since some new theoretical notions are needed for this purpose and also in order to put things in perspective, a rather detail explanation of the theoretical concepts involved will be given below.

In short, the present invention utilizes a new theory developed by the present inventor called 'algebraic proving principle' which will replace the resolution principle which has been a cornerstone of the conventional automated theorem proving. This algebraic proving principle asserts that 'the unsatisfiability of a set of clauses and the existence of non-negative solution to a proof equation is equivalent', which allows the transformation of the logical problem of automated theorem proving which can be expressed as the problem of the unsatisfiability of a set of clauses into the algebraic problem of determining the existence of a particular type of solution for a certain algebraic equation called proof equation.

Thus, the theoretical explanation will be given for (1)basic notions of the predicate logic of first order and conventional resolution principle, (2)new theoretical notions involved, (3)a proof of the algebraic proving principle, and (4) examples of automated theorem proving using the algebraic theorem proving. This will be followed by a full description of the two preferred embodiments of the present invention and, finally the effects and advantages of the present invention will be discussed.

1. PRELIMINARIES AND CONVENTIONAL TECHNIQUES

Here, some generalities of the predicate logic of first order are explained, and then the theorem proving using the resolution principle is described. This also serves to establish the terminologies and notations to be used.

**1.1 Predicate logic of first order and clausal form**

**«Expressions in the predicate logic of first order»**

The predicate logic of first order deals with statements regarding properties and relationships of objects in a logical manner. For this purpose, the individual object is represented by the individual symbols (**a, b, c,** etc.), the properties and relationships are represented by the function symbols (**f**( ), **g**( , ), etc.), and the prototypes of the statements are represented by the predicate symbols (**P**(      ), **Q**(      ,      ), etc.).

The combinations of these symbols give atomic formulas which are further combined together to form formulas by means of logical connectives. The logical connectives includes $\sim$(negation 'not'), $\vee$(logical sum 'or'), $\wedge$(logical product 'and'), $\rightarrow$(implication 'implies'), and $\leftrightarrow$(equivalent 'if and only if').

In addition, in order to express the universal proposition 'For all object, ············' and the existential proposition 'There exists an object such that ············', the variable symbols (**X, Y,** etc.) representing arbitrary object, the universal quantifier $\forall$, and the existential quantifier $\exists$ are used.

[*example 1*]

Let **F(X)** represents that **X** is a liar, **B(Y, Z)** represents that **Y** trusts **Z**, and **mt(U)** represents the mother of **U**, then the statement '**a** is a liar, and, **b** does not trust **b**'s mother' can be expressed by the following formula $G_x$:

$$G_x = F(a) \wedge (\sim B(b, mt(b)))$$

[*example 2*]

Similarly, the statement 'everyone trusts his mother' can be expressed by the following formula $G_y$:

$$G_y = \forall X[B(X, mt(X))]$$

**«Automated theorem proving»**

The automated theorem proving in the predicate logic of first order is a problem to determine whether a certain statement holds or not when prescribed other statements are regarded as axioms or assumptions, automatically (i. e. through a well defined formal procedure), by expressing the statements in forms of formulas constructed by symbols and connectives, as explained above.

[*example 3*]

When the following three formulas $G_1$, $G_2$, and $G_3$ are taken to be true, to determine whether either or both of the following formulas $G_a$ and $G_b$ are true or not is a kind of theorem proving.

$$G_1 = \forall X[F(X) \rightarrow \exists Y(\sim B(Y, X))]$$

'For every liar there exists someone who does not trust him'

$$G_2 = \forall X[\forall Y[B(X, Y) \rightarrow B(Y, X)]]$$

'Everyone is trusted by those he trusts'

$$G_3 = \forall X[\exists Y[\sim B(Y, X) \rightarrow \forall Z[\sim B(Z, X)]]]$$

'Anyone who is not trusted by someone is not trusted by everyone'

$$G_a = \forall X[\forall Y[B(X, Y) \rightarrow \forall Z[B(Y, Z) \rightarrow B(X, Z)]]$$

'Everyone trusts someone who is trusted by those who he trusts'

$$G_b = \exists X[F(X)] \rightarrow \forall Z[\forall Y[\sim B(Z, Y)]]$$

'If there is one liar, every one trusts no one'

**«Terms»**

Terms are defined by the following rules.

(1) Individual symbols are terms.

(2) Variable symbols are terms.

(3) Let **t1, t2, ⋯⋯⋯, tn** be terms and **f( ⋯⋯)** be a function with **n** arguments, then **f(t1, t2, ⋯⋯ , tn)** is a term.

**«Ground Terms»**

Terms consisting of function symbols and individual symbols (i.e., not containing variables) are called ground terms (also called constant terms).

**«Herbrand space»**

A collection of all the ground terms is called the Herbrand space.

**«Ground formulas»**

Atomic formulas with arguments consisting of ground terms (i.e., without variables) are called ground formulas.

**«Allottings(Interpretations)»**

Assigning of one logical value, either true or false, to each one of the ground formulas is called allottings of logical values, or simply allottings (often also called interpretations).

**«Logical values of formulas»**

The logical values, i.e., true or false, of the formulas under an allotting W are determined from the following rules:

(1) $\forall$ **X[G{X}]** is true only when **G{X}** is true for all **X** which is a ground formula, and is false otherwise.

(2) $\exists$ **X[G{X}]** is true when **G{X}** is true for at least one **X** which is a ground formula, and is false otherwise.

(3) The logical values of $\sim$**G, G $\vee$ H, G $\wedge$ H, G $\rightarrow$ H,** and **G $\leftrightarrow$ H** are determined from the following Table 1, according to the logical values of **G** and **H**:

Table 1

| G | H | $\sim$G | G $\vee$ H | G $\wedge$ H | G $\rightarrow$ H | G $\leftrightarrow$ H |
|---|---|---|---|---|---|---|
| T | T | F | T | T | T | T |
| T | F | F | T | F | F | F |
| F | T | T | T | F | T | F |
| F | F | T | F | F | T | T |

where T stands for true, while F stands for false.

(4) When **G** is a ground formula, the logical value is determined according to the allotting W.

**«Logical consequences»**

A formula **G** is said to be a logical consequence of a formula $G_\emptyset$ when **G** is true under every allotting under which $G_\emptyset$ is true. This can be rephrased with an expression $G_\emptyset = G_1 \wedge G_2 \wedge \cdots\cdots\cdots \wedge G_n$ as follows: **G** is a logical consequence of $\{G_{1\,..n}\}$ when **G** is true under every allotting under which all of $\{G_{1\,..n}\}$ are true. Thus, that **G** is a logical consequence of $\{G_{1\,..n}\}$ is equivalent to that a formula $((G_1 \wedge G_2 \wedge \cdots\cdots\cdots \wedge G_n)) \to G)$ is true under any allotting.

**«Theorem 1»**

If **G** is a logical consequence of $\{G_1, G_2, \cdots\cdots, G_n\}$, then $\{G_1, G_2, \cdots, G_n, {\sim}G\}$ is false under any allotting. It is necessary and sufficient for the converse to hold that there exists an allotting under which all of $\{G_1, G_2, \cdots\cdots\cdots, G_n\}$ are true. [See Ref. 2 for the proof]

**«Transformation to clausal forms»**

The expressions utilized so far are not suitable for the automated theorem proving because many logically equivalent expressions can be given. For this reason, the expressions are transformed into so called clausal forms by the following steps. [See Ref. 1]

(step 1) All the implications( $\to$ ) and the equivalences ( $\leftrightarrow$ ) are removed by means of the following equalities:

$$P \to Q = {\sim}P \vee Q$$

$$P \leftrightarrow Q = ({\sim}P \vee Q) \wedge (P \vee {\sim}Q)$$

For example, $G_1$ of the example 3 above becomes:

$$\forall\, X[{\sim}F(X) \vee \exists\, Y[{\sim}B(Y, X)]]$$

(step 2) All the negations( $\sim$ ) are brought inside brackets such that the negations appear only in front of atomic formulas (predicate symbols). For example:

$$\sim({\sim}P) = P$$

$$\sim(P \vee Q) = {\sim}P \wedge {\sim}Q$$

$$\sim(P \wedge Q) = {\sim}P \vee {\sim}Q$$

$$\sim\forall\, X[P\{X\}] = \exists\, X[{\sim}P\{X\}]$$

$$\sim\exists\, X[P\{X\}] = \forall\, X[{\sim}P\{X\}]$$

(step 3) Skolemization. That is, all the existential quantifiers( $\exists$ ) are removed by replacing variables introduced by the existential quantifiers with the Skolem constants. For example, $G_1$ of the example 3 above becomes:

$$\forall\, X[{\sim}F(X) \vee ({\sim}B(yy(X), X))]$$

Here, **Y** introduced by the existential quantifier becomes a function **yy(X)** of a variable **X** introduced by the outside universal quantifier. New designation should be given for such a function symbol which is called Skolem function.

(step 4) All the universal quantifiers ($\forall$) are simply removed, with understanding that all the variables in the formulas are introduced by the universal quantifiers. For example, $G_1$ of the example 3 above becomes:

$${\sim}F(X) \vee ({\sim}B(yy(X), X))$$

(step 5) Transformation into conjunctive normal forms. That is, all the logical products($\wedge$) are brought outside of the brackets and all the logical sums($\vee$) are brought inside the brackets by means of the following distribution laws:

$$P \vee (Q \wedge R) = (P \vee Q) \wedge (P \vee R)$$

$$(P \wedge Q) \vee R = (P \vee R) \wedge (Q \vee R)$$

(step 6) At this point, formulas are called logical formulas (or well-formed formulas often abbreviated as 'wff') which appear as logical products of smaller formulas each of which is composed as logical sums of atomic formulas and their negations (which together will be referred to as literals). These logical sums are called clauses. In other words, clauses are logical sums of literals. A set of clauses obtained by collecting of all the clauses making up the formula is called the clausal form of the formula, often denoted by S.

**«Transformation $\omega(G)$ of a formula G to its clausal form»**

Let $\omega(G)$ denote the result of the above transformation of a formula **G** to its clausal form. This transformation $\omega(G)$ may not be unique because of the freedom in choosing the Skolem constants. Also, $\omega(G)$ may involve more than one clauses.

[*example 4*]

The clausal forms of the formulas in the examples 1, 2, and 3 above are as follows.

$$\omega(G_x) = \{F(a), \sim B(b, mt(b))\}$$

$$\omega(G_y) = \{B(X, mt(X))\}$$

$$\omega(G_1) = \{\sim F(X) \vee \sim B(yy(X), X)\} = \{c_1\}$$

$$\omega(G_2) = \{\sim B(X, Y) \vee B(Y, X)\} = \{c_2\}$$

$$\omega(G_3) = \{B(Y, X) \vee \sim B(Z, X)\} = \{c_3\}$$

where **yy(········)** is a Skolem function.

**«Substitutions, target variables, introduced variables»**

The replacement of a variable X by a term **t** is denoted by "**t/X**". Also, for mutually distinct variables **X1, X2, ············ ,** a set:{**t1/X1, t2/X2, ············** } is called a substitution, denoted by $\theta$. In such a substitution $\theta$ = {**t1/X1, t2/X2, ············ },** variables **X1, X2, ············** are called target variables of the substitution $\theta$, while variables contained in **t1, t2, ············** are called introduced variables of the substitution $\theta$.

**«Substitution operation»**

A result of the replacement specified by a substitution $\theta$ for an arbitrary expression **E** is denoted by **E·$\theta$**. This means an expression in which those variables of **E** which coincide with the target variable **Xi** of the substitution $\theta$ are replaced by the corresponding **ti**. Such an act of replacement is called a substitution operation.

**«Ground substitutions and full ground substitutions»**

A substitution {**t1/X1, t2/X2, ············**} for which all of **t1, t2, ············** are ground terms, i.e., a substitution which has no introduced variable, is called a ground substitution. Also, for an expression (or, a set of expressions) **E**, a ground substitution whose target variables include all of the variables contained in **E** is called a full ground substitution of **E**. A collection of all full ground substitutions of **E** is denoted by $\Theta(E)$.

**«Ground instances of a clause c»**

For a full ground substitution $\theta$ of a clause **c**, a clause denoted by **c·$\theta$** which contains only ground formulas is called a ground instance of the clause **c**.

**«Logical values of a clause c»**

If none of the ground instances **c·$\theta$** of the clause **c** is false under the allotting W, then the clause **c** is said to be true under the allotting W. Otherwise, the clause **c** is said to be false under the allotting W.

### «Logical consequences in the clause expressions»

Let $\{c_{1 \, ..n}\}$ be clausal forms of axioms. Then, a clause **c** is said to be a logical consequence of these axioms if the clause **c** is true under each allotting under which all of $c_1$, $c_2$, $\cdots$ , $c_n$ are simultaneously true.

The relationships of the logical consequences are not conserved under the transformation $\omega$. That is, even if a formula **G** is a logical consequence of a formula $G_\emptyset$, a clause $\omega(G)$ may not be a logical consequence of a clause $\omega(G_\emptyset)$. This is due to the Skolemization. If **G** does not contain any existential quantifier $\exists$, then the relationship of the logical consequence is conserved under the transformation $\omega$.

### «Models and satisfaction»

An allotting W under which all the clauses of a formula **G** (or a clause **c**, or a set of clauses S) are true, is called a model of **G** (or **c**, or S), and W is said to satisfy **G** (or **c**, or S).

### «Satisfiability»

If a formula **G** (or a set of clauses S) has a model, then **G** (or S) is said to be satisfiable. Otherwise **G** (or S) is said to be unsatisfiable. In other words:

S is satisfiable $\leftrightarrow \exists \, \mathbf{W}[\forall \, \theta \in \Theta(\mathbf{S}) \, [\forall \, \mathbf{c} \in \mathbf{S}[\mathbf{c} \cdot \theta$ has at least one literal which is true under W]]]

### «Theorem 2»

That $\underline{n}$ formulas: $G_1$, $G_2$, $\cdots$, $G_n$ as a whole is satisfiable is equivalent to that a set of clauses $\omega(G_1) \cup \omega(G_2) \cup \cdots\cdots\cdots \cup \omega(G_n)$ is satisfiable. In other words, the satisfiability is conserved under the transformation $\omega$. [See Ref. 2 for the proof]

### 1.2 The resolution principle and automated theorem proving using the resolution principle

The resolution principle is a certain procedure of deduction for deriving a clause which is a logical consequence of a given set of clauses, proposed originally by J.A.Robinson in "A Machine Oriented Logic based on the Resolution Principle", J.ACM, Vol.12, No.1, pp.23-41(1965)[this will be referred hereafter as Ref. 3]. An essence of a conventional automated theorem proving using this resolution principle will be reviewed in this sub-section.

### «Products of substitutions»

A product of two substitutions $\sigma$ and $\tau$ can be defined by composition. Namely, with an arbitrary expression **E**, a product $\sigma \cdot \tau$ of $\sigma$ and $\tau$ is defined to satisfy an equality:

$$E \cdot (\sigma \cdot \tau) = (E \cdot \sigma) \cdot \tau$$

An actual expression of the substitution corresponding to the product $\sigma \cdot \tau$ thus defined can be obtained as follows. Namely, let $\sigma$ **= {t1/X1, t2/X2, $\cdots\cdots\cdots\cdots$ , tn/Xn}**, $\tau$ **= {u1/Y1, u2/Y2, $\cdots\cdots\cdots\cdots$ , um/Ym}**, then the product $\sigma \cdot \tau$ is a set obtained by removing from a set **{(t1·$\tau$)/X1, (t2·$\tau$)/X2, $\cdots\cdots\cdots\cdots$ , (tn·$\tau$)/Xn, u1/Y1, u2/Y2, $\cdots\cdots\cdots\cdots$ , um/Ym}** those elements **(ti·$\tau$)/Xi** for which **ti·$\tau$ = Xi** and those elements **uj/Yj** for which **Yj** $\in$ **{X1, X2, $\cdots\cdots\cdots\cdots$ , Xn}**.

[*example 5*]

$$\{f(X)/Y, \, Z/W\} \cdot \{g(a)/X, \, c/Y, \, W/Z\}$$

$$= \{f(g(a))/Y, \, g(a)/X, \, W/Z\}$$

### «Unification»

Expressions **P** and **Q** are said to be unifiable if there exists a substitution $\theta$ for which **P**·$\theta$ and **Q**·$\theta$ coincide. Such a substitution $\theta$ is called a unifier.

**«The most general unifier»**

A unifier $\theta_\emptyset$ of two expressions **P** and **Q** is called the most general unifier if for every unifier $\theta$ of **P** and **Q** there exists such a substitution $\tau$ that $\theta = \theta_\emptyset \cdot \tau$.

**«Binary resolvents»**

For two clauses $c_1$ and $c_2$, let a literal $L_1$ belonging to $c_1$ and a negation $\sim L_2$ of a literal $L_2$ belonging to $c_2$ be unifiable by a unifier $\sigma$, then a clause obtained by removing $L_1 \cdot \sigma$ and $L_2 \cdot \sigma$ from all the literals contained in $c_1 \cdot \sigma$ and $c_2 \cdot \sigma$ is called a binary resolvent of $c_1$ and $c_2$.

**«Factors»**

Let $\sigma$ be the most general unifier of unifiable literals $L_1$, $L_2$, ············ , $L_i$ belonging to a clause **c**, then a clause obtained by removing $L_2 \cdot \sigma$, ············ , $L_i \cdot \sigma$ (but not $L_1 \cdot \sigma$) from $c \cdot \sigma$ is called a factor of **c**.

**«Resolvent»**

A binary resolvent of a clause $c_1$ or its factor, and a clause $c_2$ or its factor is called a resolvent of $c_1$ and $c_2$.

**«Resolution»**

To resolve means to add a resolvent **c** of two clauses $c_1$ and $c_2$ contained in a set of clauses S to S. Such an act of addition is called a resolution, and a clause **c** is called a clause resolved from S.

It can be proved that if a set of clauses S is satisfiable, then a clause resolved from S is a logical consequence of S. [See Ref. 2, Ref. 3]

**«Completeness of the resolution principle»**

The theorem which asserts that 'it is possible to derive an empty clause from a set of clauses S by repeated applications of the resolution if and only if S is unsatisfiable' is known as the completeness theorem of the resolution principle. An empty clause is a clause which contains no literal, denoted hereafter by $\square$. An empty clause can never be true under any allotting (i.e., it is always false).

**«Proving by the resolution principle»**

The next statement follows from the theorems 1 and 2 stated above and the completeness theorem of the resolution principle: "Let $G_\emptyset$ be formulas representing axioms, **G** be a formula to be proved, and suppose that an empty clause cannot be derived from a clausal form $\omega(G_\emptyset)$ (i.e., $G_\emptyset$ is satisfiable), then the necessary and sufficient condition for **G** to be a logical consequence of $G_\emptyset$ is that an empty clause can be derived from a set of clauses $\omega(G_\emptyset) \cup \omega(\sim G)$ by resolution."

This leads to a conventional technique of proving by the resolution principle which attempts to derive an empty clause from a clausal form of formulas obtained by adding the formula for the negation of the statement to be proved to the formulas for axioms, by resolutions.

[*example 7*]

In order to prove $G_a$ of the example 3 above, its negation:

$$\sim G_a = \sim \forall\, X[\forall\, Y[B(X,\, Y) \to \forall\, Z[B(Y,\, Z) \to B(X,\, Z)]]$$

$$= \exists\, X[\exists\, Y[B(X,\, Y) \wedge \exists\, Z[B(Y,\, Z) \wedge \sim B(X,\, Z)]]$$

is Skolemized to become **B(a, b)** $\wedge$ **B(b, c)** $\wedge \sim$**B(a, c)**, from which three clauses:

$$x_\emptyset = B(a,\, b)$$

$$x_1 = B(b,\, c)$$

$$x_2 = \sim B(a, c)$$

are obtained. The attempt is then made to derive the empty clause from these three clauses $x_0$, $x_1$, and $x_2$ together with the three presumed clauses:

$$c_1 = \sim F(X) \vee \sim B(yy)(X), X)$$

$$c_2 = \sim B(X, Y) \vee \sim B(Y, X)$$

$$c_3 = B(Y, X) \vee \sim B(Z, X)$$

The result in this case is that:

$$y_0 = B(Y, c) \text{ from } x_1 \text{ and } c_3$$

$$y_1 = \square \qquad \text{ from } x_2 \text{ and } y_0$$

so that $\mathbf{G_a}$ can be proved.

## 2. THE CONSTRUCTION OF A MODULE WITH A LAW OF COMPOSITION CORRESPONDING TO DEDUCTION

### 2.1 The resolution and the law of composition

**«Possible complementary pairs»**

For literal $\mathbf{L}_1$ and $\mathbf{L}_2$, if there exist such a unifier $\theta$ that:

$$L_1 \cdot \theta = \sim L_2 \cdot \theta$$

then a pair of $\mathbf{L}_1$ and $\mathbf{L}_2$ is called a possible complementary pair.

**«Problems of the resolution as a law of composition»**

In order to perform resolution on a pair of clauses, it is necessary for the two clauses $\mathbf{c}_1$ and $\mathbf{c}_2$ to satisfy the condition that a pair of a literal $\mathbf{L}_1$ belonging to $\mathbf{c}_1$ and a literal $\mathbf{L}_2$ belonging to $\mathbf{c}_2$ is a possible complementary pair (this will be referred hereafter as a condition A). Because of this, the resolution is not uniformly defined on all pairs of the clauses, and is not associative, so that it is not possible to consider the resolution as a law of composition.

To circumvent this situation, a new law of composition will be introduced which is uniformly defined, associative and gives the same results as the resolution when the condition A holds. To this end, a mechanism for arbitrarily postponing operations of removing complementary pair in the resolution will be introduced.

### 2.2 The construction of a module D

**«Phrase, complementary phrase, equielementary phrase, equielementary clause»**

A phrase is defined to be repeated combinations of literals, or a collection of literals in which there may be repeated occurrence of the same literals. A phrase $\mathbf{x}$ which contains literals of a clause $\mathbf{c}$ is called an equielemental phrase of the clause $\mathbf{c}$, and conversely, logical sums of the literals contained in the phrase $\mathbf{x}$ is called an equielemental clause of the phrase $\mathbf{x}$. The equielemental clause of the equielemental phrase of the clause $\mathbf{c}$ always coincides with the clause $\mathbf{c}$ itself, but the equielemental phrase of the equielemental clause of the phrase $\mathbf{x}$ may not necessarily coincide with the phrase $\mathbf{x}$. Also, a phrase composed by literals which are the negations of all the literals of the phrase $\mathbf{x}$ is called a complementary phrase of $\mathbf{x}$, denoted by $\sim\mathbf{x}$.

The sum $\mathbf{x} + \mathbf{y}$ of two phrases $\mathbf{x}$ and $\mathbf{y}$ is defined as a simple concatenation of the two, i.e., a collection of all the literals of the two. The sum so defined is clearly commutative and associative.

[*example 7*]

For the following two phrases:

$$x = (P(a, f(X)), Q(Y), \sim Q(b))$$

$$y = (\sim P(a, f(X)), \sim Q(b))$$

the sum is:

$$x + y = (P(a, f(X)), Q(Y),$$

$$\sim Q(b), \sim P(a, f(X)), \sim Q(b))$$

and the complementary phrase of **x** is:

$$\sim x = (\sim P(a, f(X)), \sim Q(Y), Q(b))$$

### «Free sentence and truth multiplicity»

An ordered pair (m, **x**) of an integer $\underline{m}$ and a phrase **x** is called a free sentence, and this integer $\underline{m}$ is called a truth multiplicity. A free addition (**a** ✦ **b**) of two free sentences **a** and **b** is defined by the sum of integers for the truth multiplicities and the sum of the phrases for the phrases of the free sentences. This free addition is also commutative and associative.

[*example 8*]

For the following two free sentence:

$$a = (2, (P(a, f(X)), Q(Y), \sim Q(b)))$$

$$b = (-1, (\sim P(a, f(X)), \sim Q(b)))$$

the free addition is:

```
a ✦ b = (1, (P(a, f(X)), Q(Y),
                ∿Q(b), ∿P(a, f(X)), ∿Q(b)))
```

### «Contraction»

For a free sentence **a** whose phrase **x** contains $\underline{n}$ complementary pairs ($L_k, \sim L_k$), the operation of subtracting a number $\underline{n}$ from the truth multiplicity of the free sentence **a**, and removing all the complementary pairs from the phrase **x** of the free sentence **a** is called a contraction. The contracted free sentence is denoted by **a/r**.

[*example 9*]

The free sentence **c** = (**a** ✦ **b**) of the example 8 above has one complementary pair **(P(a, f(X)), $\sim$P(a, f(X)))**. When contracted, the result is:

$$c/r = (0, (Q(Y), \sim Q(b), \sim Q(b)))$$

There is a following theorem concerning postponability of performing contraction.

### «Theorem 3»

For two free sentences **a** and **b**,

```
(a/r ✦ b/r)/r = (a ✦ b/r)/r
```

```
= (a/r ✦ b)/r
```

```
= (a ✦ b)/r
```

[*Proof*]

Here, only the case of **(a/r ✦ b/r)/r = (a ✦ b)/r** is given. Other cases can be proved in similar manners. Let **c = (a/r ✦ b/r)/r, x** and **y** be the phrases of **a** and **b**, **p** and **q** be the number of complementary pairs in **x** and **y**, and $a_0 =$ **(p, x)**, $b_0$ **= (q, y)**. Then, clearly, $a_0/r = b_0/r = (0,\phi)$ where ø denotes an empty phrase which contains no literal. Moreover, from the definition of the contraction, it follows that **a = a/r ✦** $a_0$, **b = b/r ✦** $b_0$. Consequently:

$$(a ✦ b)/r = (a/r ✦ a_0 ✦ b/r ✦ b_0)/r$$

$$= (c ✦ a_0 ✦ b_0)/r$$

$$= c/r \qquad\qquad\qquad ■$$

**«Sentences and addition of sentences»**

A contracted free sentence, i.e., a free sentence whose phrase contains no complementary pair, is called a sentence. A collection of all the sentences will be denoted by D.

An addition **a + b** of two sentences **a** and **b** is defined as a contraction of a free addition. That is:

$$a + b = (a ✦ b)/r$$

This addition is also commutative and associative. The associativity can be shown with a help of the theorem 3 above as follows:

$$(a + b) + c = ((a ✦ b)/r ✦ c)/r$$

$$= ((a ✦ b) ✦ c)/r$$

$$= (a ✦ (b ✦ c))/r$$

$$= (a ✦ (b ✦ c)/r)/r$$

$$= a + (b + c)$$

[*example 10*]

Both of the two free sentences **a** and **b** of the example 8 above have no complementary pair, so that they are sentences. Their addition is:

$$a + b = (0, (Q(Y), {\sim}Q(b), {\sim}Q(b)))$$

**«Zero element and inverse element; a module»**

A free sentence (which is also a sentence) $(0, \phi)$ is a zero element with respect to both the free addition and the addition of sentences. This free sentence therefore is denoted by $0 = (0, \phi)$.

As a consequence, both free sentences as a whole and sentences as a whole become monoids, with free addition and addition of sentences as the law of composition, respectively.

Moreover, for a sentence **a** = (m, **x**) with the phrase **x** containing $\underline{n}$ literals, a sentence (n - m, ${\sim}$**x**) can be considered as the inverse element (**-a**) of **a** with respect to the addition of sentences. This can be seen from the fact that **x + (${\sim}$x)** is made of $\underline{n}$ complementary pairs.

Thus, sentences as a whole D is a group with the addition of sentences as the law of composition. Furthermore, since the addition of sentences is commutative, D is a module.

[*example 11*]

For the sentence **a** of the example 8 above, the inverse element -a is:

$$-a = (3\text{-}2, \sim x)$$

$$= (1, (\sim P(a, f(X)), \sim Q(Y), Q(b)))$$

## 3. RING OF SCALARS(OPERATOR DOMAIN) AND NON-NEGATIVE LINEAR COMBINATION

### 3.1 Ring of scalars(Operator Domain)

It is well known in the algebra that every module has a ring of integers Z as a ring of scalars (operator domain). In case of the module D defined above, a ring R which is larger than that of Z can be chosen as an operator domain. Such a ring R will be defined in the following.

### «Substitutions as a monoid»

All the substitutions as a whole can be considered as a semi-group with its product as the law of composition. Since a substitution of nothing by nothing: { } = empty set, which leaves an expression unchanged, can be regarded as a unit element with respect to this product, inclusion of such a substitution of nothing by nothing makes this semi-group a monoid.

### «Ring R»

In short, a ring R can be constructed by regarding substitutions as operators on the module D, and borrowing the addition from the module D (by the law of composition through values) to extend the monoid of the substitutions into a ring. More specific definition of the ring R is as follows.

### «Definition of R»

The elements of R are defined by the following four rules [r1], [r2], [r3], and [r4].

[r1] 0, and substitutions $\sigma$ are elements of R. The operations of these on a sentence (m, **x**), or the right mapping $0:D \rightarrow D$ and $\sigma:D \rightarrow D$ are defined as follows:

$$(m, x)\cdot 0 = (0, \phi)$$

$$(m, x)\cdot\sigma = (m, x\cdot\sigma)/r$$

[r2] For two elements of R, $\alpha$ and $\beta$, and an arbitrary sentence, **d**, a product $(\alpha\cdot\beta)$, which is a right mapping $\alpha\cdot\beta:D \rightarrow D$, defined as follows is also an element of R.

$$d\cdot(\alpha\cdot\beta) = (d\cdot\alpha)\cdot\beta$$

[r3] For two elements of R, $\alpha$ and $\beta$, and an arbitrary sentence, **d**, a sum $(\alpha + \beta)$ which is a right mapping $\alpha\cdot\beta:D \rightarrow D$, defined as follows is also an element of R.

$$d\cdot(\alpha + \beta) = d\cdot\alpha + d\cdot\beta$$

[r4] For an element of R, $\alpha$, and an arbitrary sentence, **d**, an inverse $(-\alpha)$, which is a right mapping $-\alpha:D \rightarrow D$, defined as follows is also an element of R.

$$d\cdot(-\alpha) = (-d)\cdot\alpha$$

**«Compatibiliy of R and the addition of sentences»**

For **R** so defined and arbitrary sentences **a** = (m, **x**), **b** = (n, **y**), the following relationships hold.

$$\text{(A)} \qquad (a + b){\cdot}\alpha = a{\cdot}\alpha + b{\cdot}\alpha$$

which can be derived from the following (A1), (A2), (A3), and (A4) by induction.

(A1) let $\alpha$ be one of 0, and substitutions $\sigma$, then

$$(a + b){\cdot}0 = (0, \phi) = a{\cdot}0 + b{\cdot}0$$

$$(\mathbf{a} \ + \ \mathbf{b}){\cdot}\boldsymbol{\sigma} \ = \ ((\mathbf{m,} \ \mathbf{x}) \ + \ (\mathbf{n,} \ \mathbf{y})){\cdot}\boldsymbol{\sigma}$$

$$= \ ((\mathbf{m,} \ \mathbf{x}{\cdot}\boldsymbol{\sigma}) \ \blacklozenge \ (\mathbf{n,} \ \mathbf{y}{\cdot}\boldsymbol{\sigma}))/\mathbf{r}$$

$$= \ \mathbf{a}{\cdot}\boldsymbol{\sigma} \ + \ \mathbf{b}{\cdot}\boldsymbol{\sigma}$$

(A2) let $\alpha = \beta{\cdot}\gamma$ where both $\beta$ and $\gamma$ satisfy the relation (A), then

$$(a + b){\cdot}\alpha = (a + b){\cdot}(\beta{\cdot}\gamma)$$

$$= ((a + b){\cdot}\beta){\cdot}\gamma$$

$$= (a{\cdot}\beta + b{\cdot}\beta){\cdot}\gamma$$

$$= (a{\cdot}\beta){\cdot}\gamma + (b{\cdot}\beta){\cdot}\gamma$$

$$= a{\cdot}(\beta{\cdot}\gamma) + b{\cdot}(\beta{\cdot}\gamma)$$

$$= a{\cdot}\alpha + b{\cdot}\alpha$$

(A3) let $\alpha = \beta + \gamma$ where both $\beta$ and $\gamma$ satisfy the relation (A), then

$$(a + b){\cdot}\alpha = (a + b){\cdot}(\beta+\gamma)$$

$$= (a + b){\cdot}\beta + (a + b){\cdot}\gamma$$

$$= a{\cdot}\beta + b{\cdot}\beta + a{\cdot}\gamma + b{\cdot}\gamma$$

$$= a{\cdot}(\beta + \gamma) + b{\cdot}(\beta + \gamma)$$

$$= a{\cdot}\alpha + b{\cdot}\alpha$$

(A4) let $\alpha = -\beta$ where $\beta$ satisfies the relation (A), then

$$(a + b){\cdot}\alpha = (a + b){\cdot}(-\beta)$$

$$= (-(a + b)){\cdot}\beta$$

$$= (-a){\cdot}\beta + (-b){\cdot}\beta$$

$$= a{\cdot}(-\beta) + b{\cdot}(-\beta)$$

$$= (a + b){\cdot}\alpha$$

By the similar arguments, the following (B) also holds for an arbitrary $\alpha \in R$.

$$(B) \qquad (0, \phi)\cdot\alpha = (0, \phi)$$

### «R as a ring of scalars(operator domain)»

When the above relation (A) hold, R is said to be a ring of scalars (operator domain) of D. Then, an element $\alpha$ of R is called an (right) operator on the module D.

### «R as a ring»

That R is a ring can be seen from the following.

(1) 0 is a unit element for addition, and a zero element for multiplication.

(2) $-\alpha$ is an inverse element of $\alpha$ with respect to addition. Because, for an arbitrary sentence **d**:

$$d\cdot(a + (-a)) = d\cdot\alpha + d\cdot(-\alpha)$$

$$= d\cdot\alpha + (-d)\cdot\alpha$$

$$= d\cdot\alpha + (-d)\cdot\alpha$$

$$= (0, \phi)\cdot\alpha$$

$$= (0, \phi)$$

$$= d\cdot0$$

(3) 1, or the empty substitution, is a unit element for multiplication.

(4) As the multiplication is defined by:

$$d\cdot(\alpha\cdot\beta) = (d\cdot\alpha)\cdot\beta$$

the multiplication is associative (but not commutative).

(5) As the addition is defined through the addition of sentences by:

$$d\cdot(\alpha + \beta) = d\cdot\alpha + d\cdot\beta$$

the addition is both associative and commutative.

(6) The distributive law holds between multiplication and addition. Because, for an arbitrary sentence **d**:

$$d\cdot((\alpha + \beta)\cdot\gamma = (d\cdot(\alpha + \beta))\cdot\gamma$$

$$= (d\cdot\alpha + d\cdot\beta)\cdot\gamma$$

$$= (d\cdot\alpha)\cdot\gamma + (d\cdot\beta)\cdot\gamma$$

$$= d\cdot(\alpha\cdot\gamma) + d\cdot(\beta\cdot\gamma)$$

$$= (d\cdot(\alpha\cdot\gamma + \beta\cdot\gamma)$$

### 3.2 Non-negative operators and non-negative linear combinations

### «Multiplicity of operators»

For an arbitrary operator $\alpha$, an integer $\mu(\alpha)$ defined as follows is called a multiplicity of $\alpha$.

$$\mu(0) = 0$$

$$\mu(\sigma) = 1$$

$$\mu(\alpha \cdot \beta) = \mu(\alpha) \cdot \mu(\beta)$$

$$\mu(\alpha + \beta) = \mu(\alpha) + \mu(\beta)$$

$$\mu(-\alpha) = -\mu(\alpha)$$

It follows that $\mu(\alpha) = \alpha$ for $\alpha \in Z$ (by induction).

**«Homomorphism $\mu$»**

Regarded as a mapping $\mu : R \to Z$, $\mu(\alpha)$ is an isomorphism. Thus, when an equality relation between elements $\alpha_i$ holds on R, an equality relation of the same form holds for $\mu(\alpha_i)$ on Z. Namely, let $E(X_i)$ be an expression with $X_i$ as variables, then

$$E(\alpha_i) = 0 \to E(\mu(\alpha_i)) = 0$$

**«Non-negative operators»**

If an operator $\alpha$ can be shown as an element of R by using only the rules [r1], [r2], and [r3] given above, without using the rule [r4], then $\alpha$ is said to be non-negative, which is denoted by $\alpha \geqq 0$.

**«Linear combinations of sentences»**

Let $\alpha_{1 ..n} \in R$, then the sum of sentences for a set of sentences $B = \{d_{1 ..n}\}$ of the following form:

$$\sum_{i=1}^{n} d_i \cdot \alpha_i \ = \ d_1 \cdot \alpha_1 \ + \ d_2 \cdot \alpha_2 \ + \ \text{----------} \ + \ d_n \cdot \alpha_n$$

is called a linear combination of B.

**«Non-negative linear combinations»**

A linear combination whose coefficients $\alpha_i$ are all non-negative is called a non-negative linear combination.

4. ADDITION OF SENTENCES AND DEDUCTION

In this section, it is shown that the law of composition for the algebraic system constructed in the previous section, i.e., the addition of sentences, can be considered as a kind of deduction.

**«Logical values of (free) sentences»**

For a ground substitution $\tau$ of a phrase **x**, a number of literals which are in **x**$\cdot\tau$ and are true under an allotting W will be denoted by T(W, **x**$\cdot\tau$). Then, the logical value of a sentence, or a free sentence, (m, **x**) is defined as follows:

$$\forall \ \tau \in \Theta(x) \ [T(W, x \cdot \tau) - m \geqq 0] \leftrightarrow \text{True}$$

$$\exists \ \tau \in \Theta(x) \ [T(W, x \cdot \tau) - m < 0] \leftrightarrow \text{False}$$

The following lemmas immediately follow from this definition.

[*Lemma 1*]

When **x** is an equielemental phrase of a clause **c**, the logical value of a sentence (1, **x**) and the that of the clause **c** coincide under any allotting.

This is because that the logical sum of a certain collection of literals is true is equivalent to that at least one of its literals is true.

[*Lemma 2*]

When **c** is an equielemental clause of a phrase **x**, the logical value of a sentence (1, **x**) and the that of the clause **c** coincide under any allotting.

Here, let θ be a full ground substitution of **x**. Then, one literal in the clause **c** may be included more than once by the sentence **x**, but if **c**·θ is true under W then at least one literal in **x**·θ is true, whereas if **c**·θ is not true under W then no literal in **x**·θ is true since **x**·θ does not contain any literal that is not contained by **c**, so that the lemma 2 holds.

These two lemmas imply that the truth multiplicity, which has been introduced as a mechanism for postponing the removal of complementary pairs arbitrarily, indicates a number of literals in the phrase which are necessary to be true in order for the sentence or the free sentence to be true (under an arbitrary allotting).

**«Extension of the logical consequences»**

For a set of sentences B, if a sentence $a_{\emptyset}$ is true under any allotting under which all the sentences of B is true, then $a_{\emptyset}$ is said to be an extended logical consequence of B.

**«Logical values under free addition, contraction, and addition of sentences»**

If two free sentences are true under an allotting W, then their free addition is also true under W. This can be shown as follows. Let two sentence be (m, **x**) and (n, **y**). Then, by assumption,

$$T(W, x \cdot \sigma) - m \geqq 0 \text{ and } T(W, y \cdot \sigma) - n \geqq 0$$

so that,

$$T(W, (x + y) \cdot \sigma) - (m - n)$$

$$= T(W, x \cdot \sigma) + T(W, y \cdot \sigma) - m - n \geqq 0$$

Also, the logical value of a free sentence is conserved by the contraction operation on the free sentence under any allotting. For, a complementary pair has one and only one true literal under any allotting so that by removing one complementary pair from the phrase of a free sentence and subtracting 1 from its truth multiplicity at the same time, a value of $T(W, x \cdot \tau) - m$ remains unchanged.

From these next lemma 3 follows.

[*Lemma 3*]

If two sentences are true under an allotting W, then their sum is also true under W.

**«Logical value under non-negative operator»**

For an action of a non-negative operator α on a sentence **a**, the following lemma 4 holds.

[*Lemma 4*]

For a non-negative operator α , if a sentence **a** is true under an allotting w, then **a**·α is also true under W.

This can be shown from by induction using the following three facts, because an operator α is recognized to be non-negative by applying the aforementioned rules [r1], [r2], and [r3]. Throughout the following (1), (2), and (3), let **a** be an arbitrary sentence.

(1) The lemma is obvious when α is either 1 or 0. As for the case in which α is a substitution σ, when τ is an arbitrary full ground substitution of **a**·α, the substitution α·τ is a full ground substitution of **a**, and if **a** is true under W then $\forall \theta \in \Theta[T(W, x \cdot \theta) - m \geqq 0]$. In particular $T(W, x \cdot \sigma \cdot \tau) - m \geqq 0$, which implies that **a**·σ is true under W, so that (**a**·α)/**r** is also true under W. Thus, the lemma also holds for this case.

(2) For the case of α = β·γ where β and γ are non-negative and for which the lemma holds, since **a**·β is true under an allotting **W** under which **a** is true, (a·β)·γ = a·(β·γ) = **a**·α is also true under W. Thus, the lemma also holds for this case.

(3) For the case of α = β + γ where β and γ are non-negative and for which the lemma holds, since **a**·β and **a**·γ are true under an allotting W under which **a** is true, **a**·α = **a**·β + **a**·γ is also true under W from the lemma 3 above. Thus, the lemma also holds for this case.

**«Logical value of non-negative linear combination»**

The next lemma 5 follows from the lemmas 3 and 4.

[*Lemma 5*]

If all the sentences of a set of sentences B are true under an allotting W, then a non-negative linear combination of B is also true under W.

In other words, the non-negative linear combination of B is an extended logical consequence of B.

5. ALGEBRAIC DEDUCTION PRINCIPLE AND ALGEBRAIC PROVING PRINCIPLE

**«Theorem 4 (The algebraic deduction principle)»**

Let $S = \{\mathbf{c}_1, \mathbf{c}_2, \cdots\cdots\cdots, c_n\}$ be a set of clauses, each of which contains no complementary pair, and $\mathbf{x}_i$ be an equielemental phrase of $\mathbf{c}_i$. If the truth multiplicity of the non-negative linear combination:

$$\mathbf{a} = \sum_{i=1}^{n} (1, \mathbf{x}_i) \cdot \boldsymbol{\alpha}_i$$

is equal to (or greater than) 1, then an equielemental clause **c** of a phrase **a** is a logical consequence of S.

[*Proof*]

Let

$$\mathbf{a} = \sum_{i=1}^{n} (1, \mathbf{x}_i) \cdot \boldsymbol{\alpha}_i = (\mathbf{m}, \mathbf{x})$$

and assume S is satisfied by an allotting W. Then, a sentence $(1, \mathbf{x}_i)$ is true under W from Lemma 1. Now, by assumption m is not liess than 1 and $\alpha_i$ is non-negative, so that all of $\alpha_i$ cannot be zero. It follows that **a** which is a non-negative linear combination of the sentence $(1, \mathbf{x}_i)$ is true under W. On the other hand, that **a** is true under W by definition means that for an arbitrary full ground substitution $\tau$ no less than m literals of $\mathbf{x}\cdot\tau$ are true under W, so that if m $\geqq$ 1, then for an equielemental clause **c** of **x**, **c**·τ is true under W. Since τ is an arbitrary full ground substitution, this implies that **c** is true under any allotting under which S is true. Thus, **c** is a logical consequence of S. ∎

**«Horn conditions»**

The following conditions, collectively called the Horn conditions, on a set of clauses S are actually equivalent to each other.

[Normal Horn condition]   Every clause in S has at most one positive literal.
[Invert Horn condition]   Every clause in S has at most one negative literal.
[Latent Horn condition]   There exists an allotting under which every clause in S has at most one true literal.

The equivalence can be seen as follows. If S satisfies the invert Horn condition, then by re-defining every predicate symbol $\mathbf{A}_j$ as $\mathbf{B}_j = \sim\mathbf{A}_j$, S in terms of $\mathbf{B}_j$ satisfies the normal Horn condition. Also, if S satisfies the latent Horn condition, then by re-defining every predicate symbol $\mathbf{A}_j$ which is false under the allotting as $\mathbf{B}_j = \sim\mathbf{A}_j$ and remaining predicate symbols **Aj** as **Bj** = **Aj**, S in terms of $\mathbf{B}_j$ satisfies the normal Horn condition.

**«Lemma 6»**

If sentences **a**, **b** and clauses **c, d, e** satisfy the following five conditions:

(1) each of **a** and **b** contains at most one negative literal,

(2) the truth multiplicities of both **a** and **b** are 1,

(3) **c** and **d** are equielemental clauses of phrases of **a** and **b**, respectively,

(4) none of **c**, **d**, and **e** contains a complementary pair,

(5) **c** is a resolvent of **d** and **e**,
then there exists a non-negative linear combination of **a** and **b**:

(6)

$$a_1 = a{\cdot}\beta + b{\cdot}\gamma \ (\beta,\ \gamma \geqq 0)$$

which satisfies the following three conditions:

(7) $a_1$ contains at most one negative literal,

(8) the truth multiplicity of $a_1$ is 1,

(9) **c** is an equielemental clause of a phrase of $a_1$.

[*Proof*]

Let $\theta$ be the unifier for the resolution of **c** from **d** and **e** in the condition (5) (here, if **c** is the binary resolvent from one or both of the factors **d**$\cdot\sigma$ and **e**$\cdot\tau$ of **d** and **e**, respectively, such substitutions $\sigma$ and $\tau$ for the factorizations are considered to be included in $\theta$). The conditions (1) and (3) imply that each of **d** and **e** also contains at most one negative literal. Thus, a negative literal of a complementary pair to be removed at the resolution of **c** is either (A) a negative literal $\sim$**Lb** in **e**$\cdot\theta$, or (B) a negative literal $\sim$**La** in **d**$\cdot\theta$. By the symmetry between cases (A) and (B), an argument for (A) suffices for both.

Thus, concentrating on the case (A), in this case the positive literal of the complementary pair to be removed is **Lb** in **d**$\cdot\theta$. By the condition (3), **a** may contain more than one **Lb**. So, let the number of such **Lb** contained in **a** be nb, and consider a free sentence: $a_0 = $ **a**$\cdot\theta$ ✦ (**b**$\cdot\theta$)$\cdot$nb. Clearly, the truth multiplicity of $a_0$ is 1 + nb. Now, $a_0$ contains nb positive literals **Lb** coming from **a**$\cdot\theta$ and **nb** negative literals $\sim$**Lb** coming from **b**$\cdot(\theta\cdot$nb). In other words, $a_0$ contains nb complementary pairs (**Lb, **$\sim$**Lb**). Then, the following construction:

$$a_1 = a_0/r$$

$$= a{\cdot}\theta + b{\cdot}(\theta{\cdot}nb)$$

$$= a{\cdot}\beta = b{\cdot}\gamma \text{ where } \beta = \theta,\ \gamma = \theta{\cdot}nb$$

satisfies the condition (8) because the truth multiplicity of $a_1$ is (1 + nb) - nb = 1.

Meanwhile, all the literals in **a**$\cdot\theta$ except for nb positive literals **Lb** remain in $a_1$, whereas nb times of all the literals in **b**$\cdot\theta$ except negative literals $\sim$**Lb** appear in $a_1$. On the other hand, the literals contained in **c** are those contained in **d**$\cdot\theta$ and **e**$\cdot\theta$ which are not removed as complementary pairs at the resolution of **c**. Thus, the condition (9) holds.

Finally, if $a_1$ contains any negative literal, it could only be the one negative literal $\sim$**La** which is originally contained in **a**$\cdot\theta$, so that the condition (7) holds.

Since $a_1$ constructed above has a correct form of non-negative linear combination of (6), the lemma holds for the case (A). The case (B) can be proved silimarly.

**«Theorem 5 (The algebraic proving principle)»**

For a set of complementary-pair-free clauses $S = \{c_1,\ c_2,\ \cdots,\ c_n\}$ which is satisfying the Horn conditions, the necessary and sufficient condition for S to be unsatisfiable is that there exist non-negative solution $\alpha_i$ for a linear

equation (the proof equation):

$$\sum_{i=1}^{n} (1, \mathbf{x}_i) \cdot \alpha_i = (1, \phi)$$

where $\mathbf{x}_i$ is an equielemental phrase of $\mathbf{c}_i$.

Note that 'the existence of non-negative solution to the proof equation implies that the set of clauses S is unsatisfiable' follows directly from the algebraic resolution principle(Theorem 4), without S being satisfying the Horn condition. However, the converse cannot be proved unless S is satisfying the Horn condition.

[*Proof*] (Sufficiency)

If the proof equation has non-negative solution, then all of $\alpha_i$ cannot be zero. Therefore, these $\alpha_i$ can be identified with $\alpha_i$ in the non-negative linear combination of Theorem 4. It then follows from the Theorem 4 that S is unsatisfiable.

(necessity)

The following argument for the invert Horn condition suffices, as the Horn conditions are transformable from one to another.

First, for $\mathbf{c}_i$ and its equielemental phrase $\mathbf{x}_i$ let $\mathbf{d}_i = (1, \mathbf{x}_i)$, where $1 \leqq i \leqq n$. Then, the following five conditions holds for every such $\mathbf{c}_i$ and $\mathbf{d}_i$.

(1) $\mathbf{d}_i$ is a non-negative linear combination of $\mathbf{d}_1, \mathbf{d}_2, \cdots\cdots\cdots, d_n$,

(2) $\mathbf{d}_i$ contains at most one negative literal,

(3) the truth multiplicity of $\mathbf{d}_i$ is 1,

(4) $\mathbf{c}_i$ is an equielemental clause of a phrase of $\mathbf{d}_i$,

(5) $\mathbf{c}_i$ contains no complementary pair.

Now, assume S is unsatisfiable. Then, by the completeness of the resolution principle, an empty clause can be derived from this set of clauses by resolutions. Let $\mathbf{c}_{n+1}, \mathbf{c}_{n+2}, \cdots\cdots\cdots, \mathbf{c}_m (=\square)$ be those clauses which are sequentially added to this set of clauses at each resolution, then such $\mathbf{c}_j$ ($n+1 \leqq j \leqq m$) can be assumed to contain no complementary pair. Now, for each such $\mathbf{c}_j$, it can be shown by induction that there exists a corresponding $\mathbf{d}_j$ satisfying the conditions (1) to (4) as follows. Consider some j where $n \leqq j < m$. Now, assume there exists $\mathbf{d}_i$ for which the conditions (1) to (4) holds with $n \leqq i \leqq j$. Then, since $\mathbf{c}_{j+1}$ is a resolvent from two clauses $\mathbf{c}_k$ and $\mathbf{c}_l$ of a set of clauses $\{\mathbf{c}_1, \mathbf{c}_2, \cdots, \mathbf{c}_j\}$, and these $\mathbf{c}_{j+1}, \mathbf{c}_k, \mathbf{c}_l$, and $\mathbf{d}_k, \mathbf{d}_l$ satisfy the conditions of Lemma 6, so that by Lemma 6 there exists a non-negative linear combination $\mathbf{d}_{j+1}$ of $\mathbf{d}_k$ and $\mathbf{d}_l$ of the form:

$$\mathbf{d}_{j+1} = \mathbf{d}_k \cdot \beta_k + \mathbf{d}_l \cdot \beta_l$$

where $\beta_k, \beta_\ell \in \mathbf{R}$ are non-negative which satisfies the conditions (2) to (4). Furthermore, since $\mathbf{d}_k$ and $\mathbf{d}_\ell$ are some of $\mathbf{d}_i$ ($1 \leqq i \leqq j$) they are non-negative linear combinations of $\mathbf{d}_1, \mathbf{d}_2, \cdots\cdots\cdots, d_n$ by the condition (1), $\mathbf{d}_{j+1}$ which is a non-negative linear combination of these is also a non-negative linear combination of $\mathbf{d}_1, \mathbf{d}_2, \cdots\cdots\cdots, \mathbf{d}_n$, so that this $\mathbf{d}_{j+1}$ also satisfies the condition (1).

In particular, $\mathbf{d}_m$ corresponding to $\mathbf{c}_m (=\square)$ is also a non-negative linear combination of $\mathbf{d}_1, \mathbf{d}_2, \cdots\cdots\cdots, \mathbf{d}_n$ so that for a suitable $\alpha_i \in R$, it can be written as:

$$\mathbf{d}_m = \sum_{i=1}^{n} (1, \mathbf{x}_i) \cdot \alpha_i$$

By the conditions (3) and (4), **dm** must be a sentence with the truth multiplicity 1, and the equielemental clause of its phrase is an empty clause. Since $(1, \phi)$ is the only such sentence, it follows that

$$(1, \phi) = \sum_{i=1}^{n} (1, \mathbf{x}_i) \cdot \alpha_i$$

so that the proof equation has non-negative solution $\alpha_i \in R$. ∎

This theorem reduces the problem of theorem proving in the predicate logic of first order, or equivalent problem of satisfiability of a set of clauses, to the algebraic problem of the existence of non-negative solution $\alpha_i \in R$ for the proof equation. This theorem is at the heart of the present invention.

6. DIRECT SUM DECOMPOSITION OF A MODULE D AND SIMULTANEOUS FORM OF THE PROOF EQUATION

In this section, the proof equation of Theorem 5 in the previous section is shown to be expressible in the simultaneous form, i.e., as a system of simultaneous equations.

**«Submodule $D_k$»**

Let $\underline{\ell}$ be the number of predicate symbols. Now, if each of two sentences $d_1$ and $d_2$ satisfies the following two conditions:

(a) it contains at most only the k-th predicate symbols,

(b) a number of negative literals minus the truth multiplicity is zero,

then, the sum of the two also satisfies these two conditions. For, by the contraction associated with the addition the same number as the number of negative literals removed will be subtracted from the truth multiplicity. Also, the zero element $(0, \phi)$ satisfies these two conditions. Therefore, the collection of those sentences satisfying these two conditions, denoted by $D_k$, is a submodule of the module D. Furthermore, for $d \in D_k$ and $\alpha \in R$, $d \cdot \alpha \in D_k$ so that $D_k$ is a right-R submodule.

**«Submodule $D_\emptyset$»**

Next, let $D_\emptyset$ denote the collection of sentences $(m, \phi)$, which satisfy the condition:

(c) it is an empty sentence,

Then $D_\emptyset$ contains the zero element, and is closed under addition (which in this case is just a sum of truth multiplicities). Therefore $D_\emptyset$ is also a submodule of the module D.

Furthermore, for $\alpha \in R$, $(m, \emptyset) \cdot \alpha = (m \cdot \mu(\alpha), \emptyset) \in D_\emptyset$ so that $D_\emptyset$ is also a right-R submodule.

**«Additive independence of $D_{\emptyset \cdots \ell}$»**

With the submodules $D_\emptyset$, and $D_k$ so far introduced, which is collectively denoted by $D_{\emptyset \cdots \ell}$, it is obvious that,
$D_i \cap$ (direct sum of $D_j$ $(j \neq i)$) = { $(0, \phi)$ }
Such a set of $D_k$ is said to be additively independent.

**«Decomposition of a sentence and its uniqueness»**

An arbitrary sentence **d** can be decomposed into at most $\ell + 1$ sentences $d_k \in D_k$, which is denoted as:

$$d = \sum_{k=0}^{\ell} d_k$$

where $d_k$ is called a k-th component of **d**.

This decomposition is unique from the additive independence of $D_k$.

[*example 12*]

$$d = (3, (P(f(a), X), \sim P(Y, b), Q(b), Q(b)))$$

$$= (2, \phi) + 1, (P(f(a), X), \sim P(Y, b)))$$

$$+ (0, (Q(b), Q(b)))$$

**«Direct sum decomposition of a module D»**

As shown above, since an arbitrary element of D can be decomposed as a unique sum of elements of $D_k$, it follows that $D_{\emptyset..\ell}$ is a direct sum decomposition of D.

**«Simultaneous form of the proof equation»**

From the uniqueness of the k-th component, it follows that if the proof equation has solution then the k-th components of the both sides of the equation are equal. Namely, let $\{c_{1..n}\}$ be a set of clauses, $x_{1..n}$ be their equielemental phrases, $d_{k\,i}$ be the k-th component of $(1, x_i)$, and $e_k$ be the k-th component of $(1, \phi)$, then the proof equation can be written as:

$$\sum_{i=1}^{n} d_{k\,i} \cdot \alpha_i = e_k, \qquad (0 \le k \le \ell)$$

which is called the simultaneous form of the proof equation.

**«Generators of $D_k$»**

Let $P_k$ be the k-th predicate symbol, and $(X1, X2, \cdots\cdots\cdots\cdots)$ be a set of variable symbols, then,

$$b_k = (0, (P_k(X1, X2, \cdots\cdots\cdots\cdots\cdots\cdots))), (0 \le k \le 1)$$

is a generator of $D_k (k \ne 0)$. In other words, an arbitrary $d_k \in D_k$ can be written, in terms of a suitable $\alpha_k \in R$, as

$$d_k = b_k \cdot \alpha_k$$

Conversely, $b_k \cdot \alpha \in D_k$ for an arbitrary $\alpha \in R$.

**«Generator of $D_\emptyset$ »**

Also, clearly,

$$b_\emptyset = (1, \phi)$$

is a generator of $D_\emptyset$. In other words, an arbitrary $d_\emptyset \in D_\emptyset$ can be written, in terms of a suitable $\alpha_\emptyset \in R$, as

$$d_\emptyset = b_\emptyset \cdot \alpha_\emptyset \; ( = b_\emptyset \cdot \mu(\alpha_\emptyset) = (\mu(\alpha_\emptyset), \emptyset) \; )$$

Conversely, $b_\emptyset \cdot \alpha \in D_\emptyset$ for an arbitrary $\alpha \in R$.

**«K-th coefficient of a sentence»**

Therefore, the k-th component of an arbitrary sentence **d** can be written as $b_k \cdot \alpha_k$, or:

$$d = \sum_{k=\emptyset}^{\ell} d_k = \sum_{k=\emptyset}^{\ell} b_k \cdot \alpha_k$$

where $\alpha_k$ is called the k-th coefficient of **d**.

7. A CASE OF PROPOSITIONAL LOGIC

Up to this point, the explanation has been given for the predicate logic of first order. A case of the propositional logic will be briefly treated in this section.

In the propositional logic, what corresponding to the predicate symbols in the predicate logic of first order are atomic propositional symbols, which can be considered as predicates without argument. Thus, in the propositional logic, a statements are expressed as such atomic propositional symbols connected by logical connectives, where variable symbols, universal quantifier, and existential quantifier do not appear. Therefore, there is no Skolemization in the transformation $\omega$, nor substitutions for variables.

In a case of the propositional logic, a module D can still be constructed in exactly the same manner as with the predicate logic of first order. Since there is no substitution in the propositional logic, a ring of scalars R of the module D is nothing but a ring of integers Z. Furthermore, the generators $b_{0..1}$ also serve as the bases. That is, $b_{0..1}$ are linearly independent, so that the k-th component of an arbitrary element a of D is uniquely determined. As a consequence, the simultaneous form of the proof equation reduces to simultaneous equations on Z among its coefficients. Thus, in the propositional logic, the problem of the existence of non-negative solution to the proof equation is just the problem of the existence of non-negative solution to the system of simultaneous equations on Z, and this fact renders an enormous simplification for the case of propositional logic.

8. EXAMPLES AND METHODS OF THEOREM PROVING BY ALGEBRAIC PROVING PRINCIPLE AND REMARKS.

In this section, two examples of theorem proving by the algebraic proving principle developed so far will be described, which also serve to demonstrate certain methods of solving the proof equation. Some remarks concerning practical implementation of the methods are made at the end.

### 8.1 A case of propositional logic

Here, an example of the proving problem is that given the next two statements as axioms:

1: "If it is a holiday and Taro has money, then Taro goes to shopping"

2: "If it is a work day, then Taro goes to work" to determine whether the following statement is true:

3: "Taro does not go to shopping on a work day"

First, in order to translate these statements into the expressions of the propositional logic, the following atomic propositions are defined:

$P$ = "It is a work day"

$Q$ = "Taro has money"

$R$ = "Taro goes to shopping"

$T$ = "Taro goes to the office"

in terms of these, the statements 1, 2, and 3 can be written as:

$$1: \quad \sim P \wedge Q \rightarrow R = G_1$$

$$2: \quad P \rightarrow T = G_2$$

$$3: \quad P \rightarrow \sim R = G_3$$

Next, $G_1$, $G_2$, and $\sim G_3$ are transformed into clausal forms as follows:

$$\begin{cases} \omega(G_1) = P \vee \sim Q \vee R \\ \omega(G_2) = \sim P \vee T \\ \omega(\sim G_3) = P \wedge R \end{cases}$$

from which the following set of clauses S can be obtained:

$$S \begin{cases} c_1 = P \vee \sim Q \vee R \\ c_2 = \sim P \vee T \\ x_1 = P \\ x_2 = R \end{cases}$$

Thus, if this set of clauses S is shown to be unsatisfiable, then $\mathbf{G}_3$ can be proved from $\mathbf{G}_1$ and $\mathbf{G}_2$.

Now, it can easily be seen that S satisfies the invert Horn condition, so that the algebraic proving principle is applicable. Therefore, the unsatisfiability of S can be checked by determining the existence of non-negative solution $\alpha_i, \beta_i \in Z$ for the proof equation which in this case has the following form:

$$d_1 \cdot \alpha_1 + d_2 \cdot \alpha_2 + e_1 \cdot \beta_1 + e_2 \cdot \beta_2 = (1, \phi) \tag{1}$$

where $\mathbf{d}_i$ and $\mathbf{e}_i$ are the following sentences obtained from the clauses $\mathbf{c}_i$ and $\mathbf{x}_i$, respectively:

$$\left\{ \begin{array}{rcl} \mathbf{d}_1 & = & (1, (P, \sim Q, R)) \\ \mathbf{d}_2 & = & (1, (\sim P, T)) \\ \mathbf{e}_1 & = & (1, (P)) \\ \mathbf{e}_2 & = & (1, (R)) \end{array} \right. \qquad \cdots\cdots (2)$$

As mentioned in the previous section, no variable nor substitution are involved in the propositional logic so that the ring of scalars R of the module D coincides with the ring of integers Z, and the generators of the module D are also the bases which in this case are:

$$\left\{ \begin{array}{rcl} \mathbf{b}_0 & = & (1, \emptyset) \\ \mathbf{b}_1 & = & (0, (P)) \\ \mathbf{b}_2 & = & (0, (Q)) \\ \mathbf{b}_3 & = & (0, (R)) \\ \mathbf{b}_4 & = & (0, (T)) \end{array} \right.$$

so that the proof equation in the simultaneous form becomes simple equations on Z, each for each basis, which in this case can be written in matrix form as follows:

$$\begin{pmatrix} 0 & 0 & 1 & 1 \\ 1 & -1 & 1 & 0 \\ -1 & 0 & 0 & 0 \\ 1 & 0 & 0 & 1 \\ 0 & 1 & 0 & 0 \end{pmatrix} \cdot \begin{pmatrix} \alpha_1 \\ \alpha_2 \\ \beta_1 \\ \beta_2 \end{pmatrix} = \begin{pmatrix} 1 \\ 0 \\ 0 \\ 0 \\ 0 \end{pmatrix} \qquad \cdots\cdots (3)$$

which can be solved by any known method such as by elimination.

At any rate, this system of simultaneous equations do not have any solution, so there is obviously no non-negative solution. Thus, the set of clauses S is satisfiable, which implies that $\mathbf{G}_3$ cannot be proved from $\mathbf{G}_1$ and $\mathbf{G}_2$.

### 8.2 A case of predicate logic of first order

Here, an example of the proving problem is from the example 3 of the section 1 above. Namely, given the following $\mathbf{G}_1$, $\mathbf{G}_2$, and $\mathbf{G}_3$ as axioms:

$\mathbf{G}_1$: "For every liar there exists someone who does not trust him"

$\mathbf{G}_2$: "Everyone is trusted by those he trusts"

$\mathbf{G}_3$: "Anyone who is not trusted by someone is not trusted by everyone"

to determine whether the following $\mathbf{G}_b$ is true:

$\mathbf{G}_b$: "If there is one liar, no one trusts no one"

This problem is equivalent to that of satisfiability of the following set of clauses S:

$$S \begin{cases} c_1 &= \sim F(X) \ \lor \ \sim B(yy(X), \ X) \\ c_2 &= \sim B(X, \ Y) \ \lor \ B(Y, \ X) \\ c_3 &= B(Y, \ X) \ \lor \ \sim B(Z, \ X) \\ s_1 &= F(a) \\ s_2 &= B(b, \ c) \end{cases}$$

where $s_1$ and $s_2$ are clauses added from the clausal form of the negation of $G_b$:

$$\omega(\sim G_b) = F(a) \land B(b, c)$$

and **a**, **b**, and **c** are Skolem constants.

Now, it can easily be seen that this S satisfies the normal Horn condition, so that the algebraic proving principle is applicable. Therefore, the unsatisfiability of S can be checked by determining the existence of non-negative solution $\alpha_i, \beta_i \in R$ for the proof equation which in this case has the following form:

$$d_1 \cdot \alpha_1 + d_2 \cdot \alpha_2 + d_3 \cdot \alpha_3 + e_1 \cdot \beta_1 + e_2 \cdot \beta_2 = (1, \phi) \tag{4}$$

where $d_i$ and $e_i$ are the following sentences obtained from the clauses $c_i$ and $s_i$, respectively:

$$\begin{cases} d_1 &= (1, \ (\sim F(X), \ \sim B(yy(X), \ X))) \\ d_2 &= (1, \ (\sim B(X, \ Y), \ B(Y, \ X))) \\ d_3 &= (1, \ (B(Y, \ X), \ \sim B(Z, \ X))) \\ c_1 &= (1, \ (F(a))) \\ e_2 &= (1, \ (B(b, \ c))) \end{cases}$$

The generators in this case are:

$$\begin{cases} b_0 &= (1, \ \emptyset) \\ b_1 &= (0, \ (F(A))) \\ b_2 &= (0, \ (B(C, \ D))) \end{cases}$$

so that the proof equation in the simultaneous form becomes a system of three simultaneous equations, each for each generator, which in this case can be written in matrix form as follows:

$$\begin{bmatrix} -b_0 & 0 & 0 & b_0 & b_0 \\ f_1 & 0 & 0 & f_0 & 0 \\ a_1 & a_2 & a_3 & 0 & a_0 \end{bmatrix} \begin{bmatrix} \alpha_1 \\ \alpha_2 \\ \alpha_3 \\ \beta_1 \\ \beta_2 \end{bmatrix} = \begin{bmatrix} b_0 \\ 0 \\ 0 \end{bmatrix}$$

$$\cdots\cdots (5)$$

where

$$\begin{cases} \mathbf{f_1} & = -(0, \ (F(X))) \\ \mathbf{f_0} & = \ \ (0, \ (F(a))) \\ \mathbf{a_1} & = -(0, \ (B(yy(X), \ X))) \\ \mathbf{a_2} & = -(0, \ (B(X, \ Y))) \ + \ (0, \ (B(Y, \ X))) \\ \mathbf{a_3} & = \ \ (0, \ (B(Y, \ X))) \ - \ (0, \ (B(Z, \ X))) \\ \mathbf{a_0} & = \ \ (0, \ (B(b, \ c))) \end{cases}$$

This system of simultaneous equations can be solved as follows.

First of all, the first equation is, by definition of R, equivalent to the following equation:

$$-\mu(\alpha_1) + \mu(\beta_1) + \mu(\beta_2) = 1 \tag{6}$$

This alone does not tell anything specific about $\alpha_1$, $\beta_1$, and $\beta_2$. This will be utilized later as a constraint to be imposed upon $\alpha_1$, $\beta_1$, and $\beta_2$ obtained from second and third equations.

The second and third equations are transformed to equations homomorphic to them, as follows.

Note that these equations are composed as sums and differences of the terms (in a usual sense) of a general form such as:

$$(0, (F(t1)))\cdot\gamma1 \text{ or } (0, (B(t2, t3)))\cdot\gamma2$$

In order to deal with such terms, a transformation called r-transformation which transforms these terms to other expressions in other module is defined by the following three rules:

[r1]

$$(0, F(t1)))\cdot\gamma1 \rightarrow F(t1)\cdot\gamma1$$

$$(0, (B(t2, t3)))\cdot\gamma2 \rightarrow B(t2, t3)\cdot\gamma2$$

[r2]

$$F(t1)\cdot\gamma1 \rightarrow F1*t1*\gamma1$$

$$B(t2, t3)\cdot\gamma2 \rightarrow (B1*t2 + B2*t3)*\gamma2$$

$$= B1*t2*\gamma2 + B2*t3*\gamma2$$

[r3]

$$f(t4, t5, \dots\dots\dots) \rightarrow f1*t4 + f2*t5 + \dots\dots\dots$$

where "+" is a commutative addition, "*" is a non-commutative product, and different symbols generally are distinct. This r-transformation gives a kind of homomorphism, so that if the original equation Eq. has a solution, then the r-transformed equation r(Eq.) also has a solution. The converse, however, may not be true, i.e., even if the r-transformed equation r(Eq.) has a solution, Eq. may not has one. The main reason to introduce this r-transformation is calculational, i.e., it is much easier to solve r(Eq.) than Eq. itself.

By this r-transformation, the second and third equations of the simultaneous equations to be solved are transformed as follows:

$$-F1*X*\alpha_1 + F1*a*\beta_1 = 0 \tag{7a}$$

$$-B1*yy*X*\alpha_1 - B2*X*\alpha_1 - B1*X*\alpha_2 - B2*Y*\alpha_2$$

$$+ B1*Y*\alpha_2 + B2*X*\alpha_2 + B1*Y*\alpha_3 + B2*X*\alpha_3$$

$$- B1*Z*\alpha_3 - B2*X*\alpha_3 + B1*b*\beta_2 + B2*c*\beta_2 = 0 \qquad (7b)$$

Substituting (in a usual sense):

$$
\begin{array}{ll}
X*\alpha_1 = X1 & Y*\alpha_2 = Y2 \\
X*\alpha_2 = X2 & Y*\alpha_3 = Y3 \\
X*\alpha_3 = X3 & Z*\alpha_3 = Z3
\end{array}
\left.\begin{array}{l} \\ \\ \\ \end{array}\right\} \qquad \cdots\cdots\cdots ( 8 )
$$

these equations are simplified to:

$$- F1*X1 + F1*a*\beta_1 = 0 \qquad (9a)$$

$$- B1*yy*X1 - B2*X1 - B1*X2 - B2*Y2 + B1*Y2 + B2*X2$$

$$+ B1*Y3 + B2*X3 - B1*Z3 - B2*X3 + B1*b*\beta_2 + B2*c*\beta_2$$

$$= 0 \qquad (9b)$$

Now, collecting terms with coefficient **F1, B1**, and **B2** separately, these equation becomes:

$$- X1 + a*\beta_1 = 0 \qquad (9a1)$$

$$- yy*X1 - X2 + Y2 + Y3 - Z3 + b*\beta_2 = 0 \qquad (9b1)$$

$$- X1 - Y2 + X2 + X3 - X3 + c*\beta_2 = 0 \qquad (9b2)$$

From eq.(9a1), it follows:

$$X1 = a*\beta_1 \qquad (10)$$

Substituting (in a usual sense) eq.(10) into eq.(9b2) and rearranging, it follows:

$$X2 - Y2 = a*\beta_1 - c*\beta_2$$

Recalling that the solutions to be found are non-negative ones, the possible solutions must be in the following forms:

$$X2 = a*\beta_1 + E1 \qquad (11)$$

$$Y2 = c*\beta_2 + E1 \qquad (12)$$

where **E1** is an arbitrary element which can be set to zero. On the other hand, substituting (in a usual sense) eqs.(10), (11), and (12) into eq.(9b1), it follows:

$$Y3 - Z3 = yy*a*\beta_1 + a*\beta_1 - c*\beta_2 - b*\beta_2$$

Again, recalling that the solutions to be found are non-negative ones, the possible solutions must be in the following forms:

$$Y3 = yy*a*\beta_1 + a*\beta_1 + E2 \qquad (13)$$

$$Z3 = b*\beta_2 + c*\beta_2 + E2 \qquad (14)$$

where **E2** is an arbitrary element which can be set to zero. Now, since both **Y3** and **Z3** have at least two terms, $\alpha_3$ must be a sum of at least two substitutions. Thus, let:

$$\alpha_3 = \alpha_{31} + \alpha_{32} \qquad (15)$$

$$X3 = X*\alpha_3 = X*\alpha_{31} + X*\alpha_{32} = X31 + X32$$

$$Y3 = Y*\alpha_3 = Y*\alpha_{31} + Y\alpha_{32} = Y31 + Y32$$

$$Z3 = Z*\alpha_3 = Z*\alpha_{31} + Z*\alpha_{32} = Z31 + Z32$$

$$Y31 = yy*a*\beta_1, \qquad Y32 = a*\beta_1 \tag{16}$$

$$Z31 = b*\beta_2, \qquad Z32 = c*\beta_2 \tag{17}$$

while **X3 = X31 + X32** remains to be specified.

At this point, auxiliary variables called correlating variables are introduced for the purpose of bookkeeping of various terms. Namely, a term such as **B1**$*$**Y**$*\alpha_2$ + **B2**$*$**X**$*\alpha_2$, for example, originates from a single term **(0, (B(Y, X)))**$\cdot\alpha_2$ of the original third equation which appear as separate terms as a result of r-transformation. Therefore, when cancelling such terms, a care must be taken to cancel these terms together, so as not to have only a fraction of the original terms remaining. To show such correspondences among the terms explicitly, different correlating variables are to be multiplied on terms originating from different original terms. The result for eqs.(9b1) and (9b2), taking eqs.(15), (16), and (17) into account, are as follows:

$$- p*yy*X1 - q*X2 + r*Y2 + s*Y31 + t*Y32$$

$$- u*Z31 + v*Z32 + w*b*\beta_2 = 0 \tag{9b3}$$

$$- p*X1 - q*Y2 + r*X2 + s*X31 + t*X32$$

$$- u*X31 - v*X32 + w*c*\beta_2 = 0 \tag{9b4}$$

where, **p, q, r, s, t, u, v**, and **w** are correlating variables. By means of these correlating variables, it can easily be recognized that, for example, if the first and the fourth terms are to cancel in eq.(9b3), then **p = s** so that the first and fourth terms in eq.(9b4) also cancel. Furthermore, if **p** and **s** is not equal to any other correlating variables, then the first term can cancel only with the fourth term.

Now, substituting (in a usual sense) eqs.(10), (11), (12), (16), and (17) into eq.(9b3), it follows:

$$- p*yy*a*\beta_1 - q*a*\beta_1 + r*c*\beta_2 + s*yy*a*\beta_1$$

$$+ t*a*\beta_1 - u*b*\beta_2 - v*c*\beta_2 + w*b*\beta_2 = 0$$

which, upon rearranging, becomes:

$$(s - p)*yy*a*\beta_1 + (t - q)*a*\beta_1$$

$$+ (r - v)*c*\beta_2 + (w - u)*b*\beta_2 = 0$$

which implies:

$$s = p, t = q, r = v, w = u \tag{18}$$

On the other hand, substituting (in a usual sense) eqs.(10), (11), (12), and (18) into eq.(9b4), it follows:

$$- p*a*\beta_1 - q*c*\beta_2 + v*a*\beta_1 + p*X31 + q*X32$$

$$- u*X31 - v*X32 + u*c*\beta_2 = 0$$

which, upon rearranging, becomes:

$$p*X31 + q*X32 - u*X31 - v*X32$$

$$= p*a*\beta_1 + q*c*\beta_2 - v*a*\beta_1 - u*c*\beta_2$$

Recalling that the solutions to be found are non-negative ones, and remembering that **u** $\neq$ **v**, the possible solutions must be in the following forms:

$$X31 = a*\beta_1 \tag{19}$$

$$X32 = c*\beta_2 \tag{20}$$

From eqs.(10, (11), (12), (16), (17), (19), and (20), undoing the substitutions (in a usual sense) of eqs.(8) and (15), and setting $\beta_1 = 1$, $\beta_2 = 1$, it follows:

$$X \cdot \alpha_1 = a, \qquad X \cdot \alpha_2 = a, \qquad Y \cdot \alpha_2 = c$$
$$X \cdot \alpha_{31} = a, \qquad Y \cdot \alpha_{31} = yy*a, \qquad Z \cdot \alpha_{31} = c$$
$$X \cdot \alpha_{32} = c, \qquad Y \cdot \alpha_{32} = a, \qquad Z \cdot \alpha_{32} = b$$

$$\cdots\cdots\cdots (21)$$

from which the following candidate for the solutions can be obtained:

$$\alpha_1 = \{a/X\}$$
$$\alpha_2 = \{a/X, \; c/Y\}$$
$$\alpha_3 = \alpha_{31} + \alpha_{32}$$
$$= \{a/X, \; yy(a)/Y, \; c/Z\} + \{c/X, \; a/Y, \; b/Z\}$$

$$\cdots\cdots (22)$$

It can be verified that these solutions satisfy the second and third equations of the simultaneous form of the proof equation. Moreover, it can also be verified that these solutions also satisfy the first equation of the simultaneous form of the proof equation. Thus, these are the desired non-negative solutions.

Since the proof equation has a non-negative solution in this example, the set of clauses S is unsatisfiable, and therefore $G_b$ is proved from $G_1$, $G_2$, and $G_3$.

### 8.3 Remarks on Horn conditions

In the section 5, it is shown in the proof of the algebraic proving principle(Theorem 5) that the Horn conditions must be satisfied by the set of clauses in order for the theorem to hold. On the other hand, in the above examples, the problems are such that this Horn conditions are satisfied from the beginning. In practice, a need may arise for checking that a given set of clauses actually satisfies the Horn conditions. However, it has been shown that in the predicate logic of first order, an arbitrary set of clauses can be transformed without affecting the satisfiability to another set of clauses which satisfies the Horn conditions. (See "Logic for problem solving" by R.Kowalsky, The COMPUTER SCIENCE LIBRARY: Artificial Intelligence Series; North-Holland, 1979)

Furthermore, the known algorithm exists for checking the Horn conditions for a set of clauses. Thus, the Horn conditions do not restrict an applicability of the algebraic proving principle in a practical circumstances. For this reason, the Horn conditions on the set of clauses are assumed in the following description of the embodiments of an apparatus for the automated theorem proving.

9. EMBODIMENTS OF AN APPARATUS FOR AUTOMATED THEOREM PROVING BY THE ALGEBRAIC PROVING PRINCIPLE

### 9.1 First embodiment (for propositional logic)

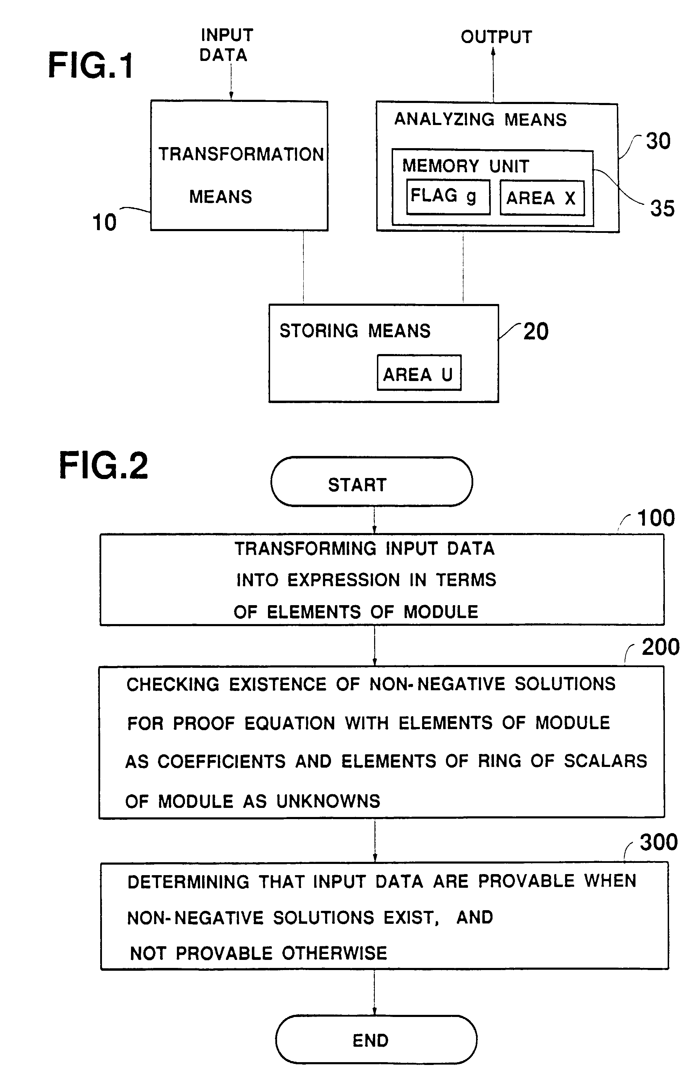

Referring now to Fig. 1, there is shown a first embodiment of an apparatus for automated theorem proving according to the present invention, which is designed to deal with the problems in the propositional logic.

This first embodiment of apparatus for automated theorem proving comprises a transformation means 10 for suitably transforming externally supplied input data, storing means 20 for storing data transformed by the transforming means 10, and an analyzing means 30 for analyzing the data stored by the storing means 20 in a manner to be described in detail below and producing a result of analysis as an output. The storing means 20 has an area U to be used interactively with the transforming means 10, while the analyzing means 30 has its own memory unit 35 which serves as a temporary memory to be utilized in a course of analysis. In particular, there are provided an area X and a solvability flag g in this memory unit 35 which will be utilized in the analysis.

The operation of this embodiment of apparatus for automated theorem proving is outlined in a flow chart of Fig. 2. Namely, first, at the step 100, the input data representing the set of clauses $S = \{c_{1 \; ..n}\}$ to be proved are transformed by the transforming means 10 into an expression $E : \{a_{1 \; ..n}\}$ in terms of elements of the module D, and stored in the storing means 20. Next, at the step 200, the analyzing means 30 checks the existence of non-negative solutions to the proof equation with $\{a_{1 \; ..n}\}$ as coefficients and elements $\alpha_{1 \; ..n}$ of the ring of scalars R of the module D as unknowns. Then, at the step 300, the input data are determined as unsatisfiable when the non-negative solutions exist, and satisfiable otherwise. On the basis of such determination of the satisfiability of the input data, the output is produced to indicate that the problem is provable if the input data are determined as unsatisfiable, or not so otherwise.

A detail of the operation outlined above will now be described. Here, for the sake of definiteness, the problem used in the section 8.1 above (referred hereafter as the problem A) will be taken as a worked out example to illustrate the operation.

First of all, in this embodiment, externally supplied input data are to be given in a form of a set of clauses which is described by representing each atomic proposition by a capital letter ( referred hereafter as a propositional symbol), and negation by "-", with the whole set as well as each clause in the set being enclosed between "(" and ")" and adjacent clauses in the set being separated by ";". It is also assumed that the input data are already put in such a form that the set is satisfying one of the Horn conditions.

For the problem A, the input data have the following form:

$$((P, -Q, R));(-P, T); (P);(R))$$

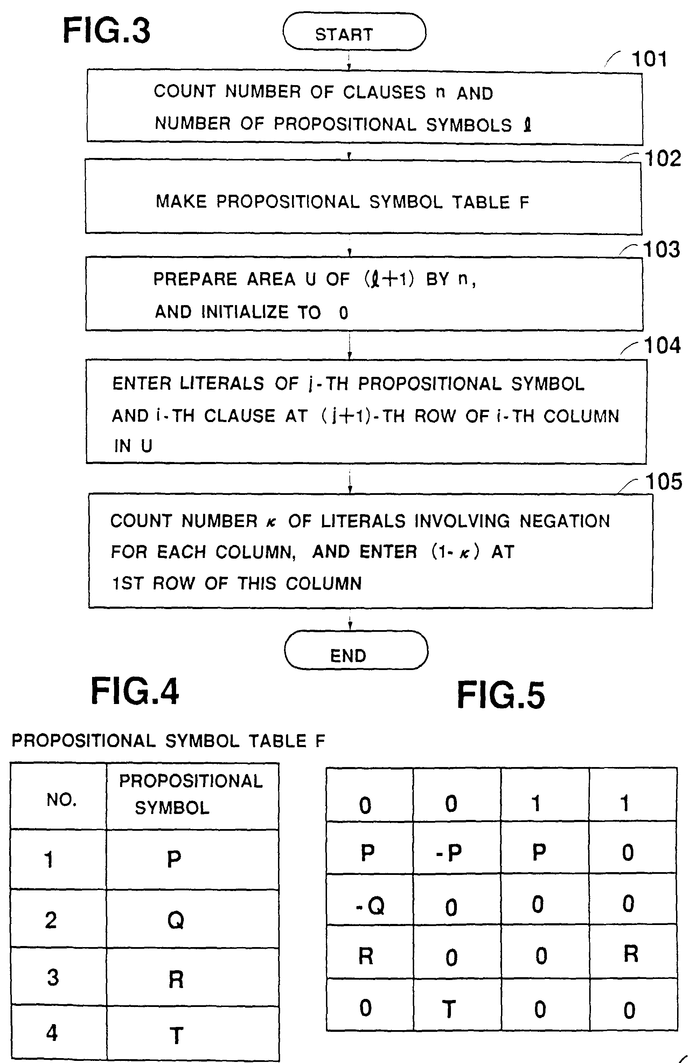

The transformation means 10 utilizes the storing means 20 to transform such input data, in accordance with a flow chart of Fig. 3, as follows.

At the step 101, a number of clauses $\underline{n}$ and a number of propositional symbols $\underline{\ell}$ are counted. Meanwhile, at the step 102, all the propositional symbols are tabulated in a form of a propositional symbol table F, as shown in Fig. 4 for the problem A which involves four propositional symbols **P, Q, R,** and **T**.

Then, at the step 103, an area U of $(\ell+1)$ rows by $\underline{n}$ columns are prepared in the storing means 20. An entire area U is initialized to 0 at this point. For the problem A which involves four clauses and four propositional symbols, the area U has the size of 5 by 4.

Next, at the step 104, the literals in each clause are registered at the area U by the rule that a literal having the j-th propositional symbol in the i-th clause is to be entered at the (j+1)-th row of the i-th column. Here, the propositional symbols are ordered by their order of appearance in the propositional symbol table F, from top to bottom, whereas the clauses are ordered by their order of appearance in the input data, from left to right.

Finally, at the step 105, a number $\underline{\kappa}$ of literals involving the negation symbol "-" is counted for each column, and a number $(1 - \kappa)$ is entered at the first row of this column. This completes the transformation.

At this point, the entries in the area U, for the problem A, appears as shown in Fig. 5. Note that these entries of the area U corresponds to the coefficient matrix of the simultaneous form of the proof equation, eg.(3).

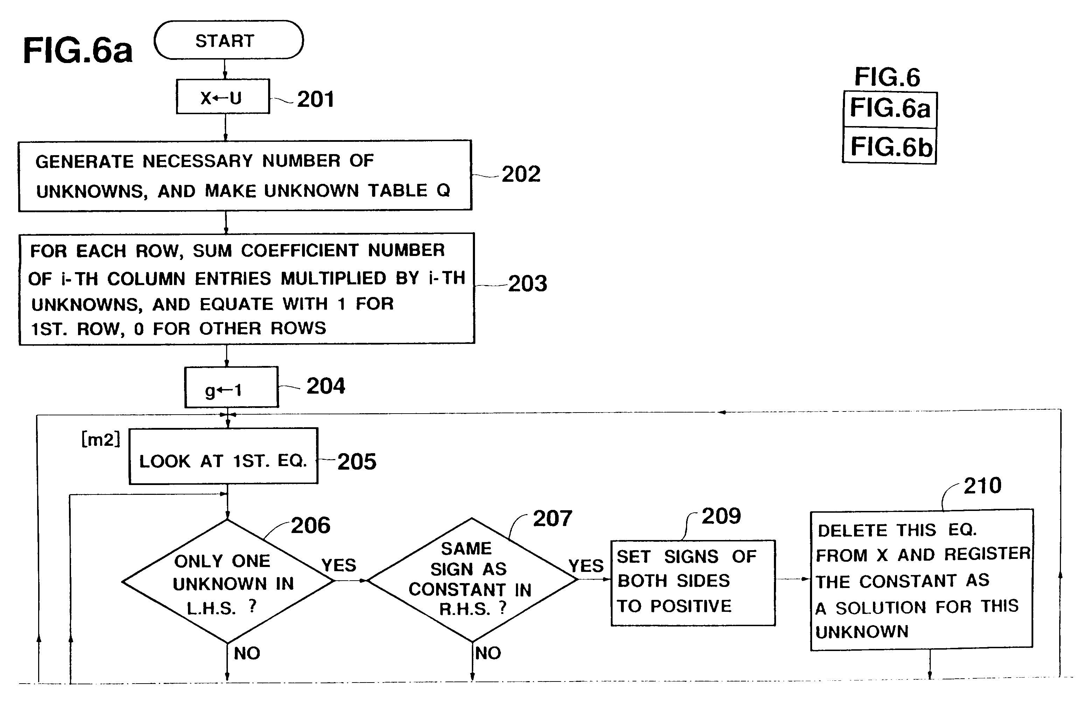

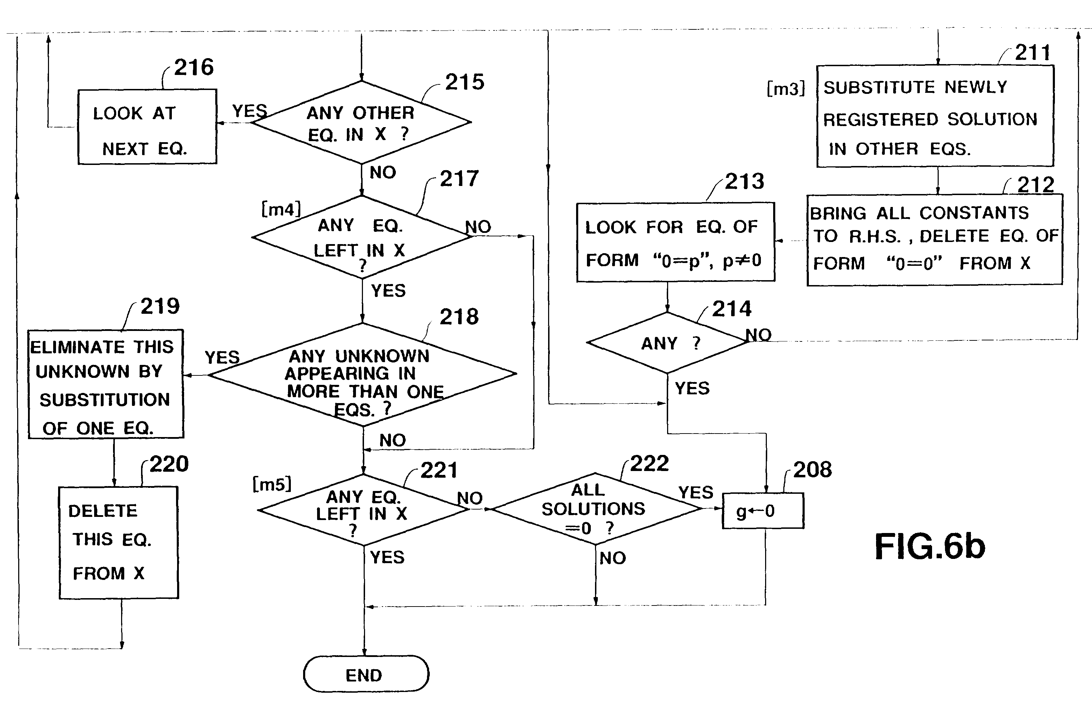

Next the analyzing means 30 attempts to solve the proof equation specified by the coefficient matrix constructed in the area U of the storing means 30, so as to be able to answer the problem, in accordance with a flow chart of Fig. 6, as follows.

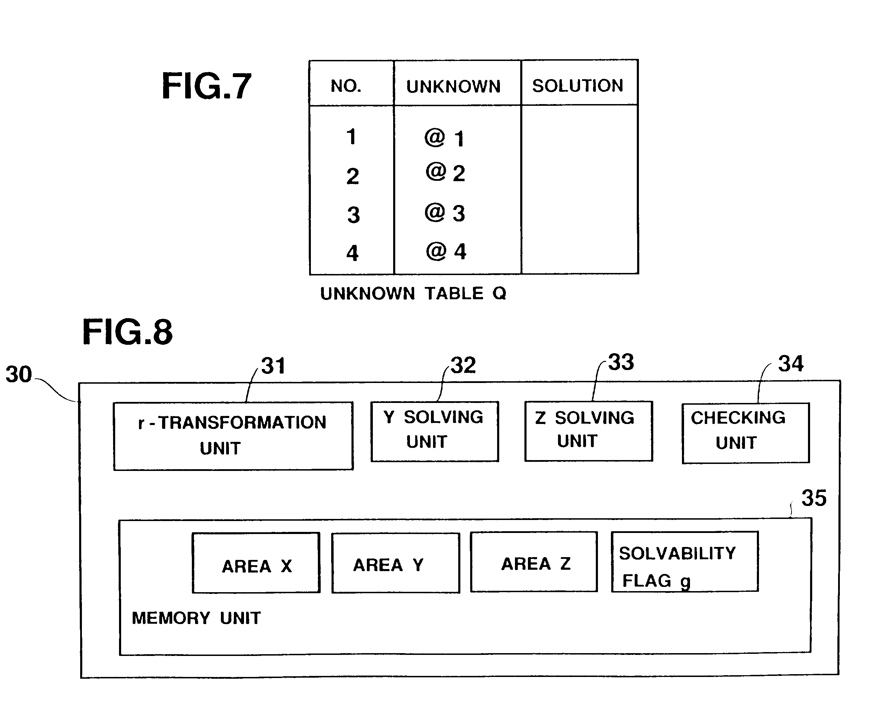

First, at the step 201, the coefficient matrix in the area U of the storing means 30 is copied to the area X in the memory unit 35. Next, at the step 202, a number of unknowns needed, which is the same as the number of columns of the coefficient matrix, is counted, and distinctive unknown symbols are given to these unknowns which are tabulated in a form of a unknown table Q, as shown in Fig. 7 for the problem A which requires four unknowns **@1, @2, @3**, and **@4**. Then, at the step 203, for each row of the coefficient matrix, a coefficient number (either +1 or -1) of the entry in the i-th column multiplied by the i-th unknown symbol are summed for all columns, and the sum is equated with 1 for the first row and 0 for the other rows. Here, the unknown symbols are ordered by their order of appearance in the unknown table Q, from top to bottom.

It can easily be recognized that at this point, the proof equation in the simultaneous form has been constructed in the area X, which for the problem A appears as follows: (spaces inserted for the sake of clarity)

$$
\left\{
\begin{array}{rcl}
\mathbf{@3} + \mathbf{@4} &=& 1 \\
\mathbf{@1} - \mathbf{@2} + \mathbf{@3} &=& 0 \\
- \mathbf{@1} &=& 0 \\
\mathbf{@1} + \mathbf{@4} &=& 0 \\
\mathbf{@2} &=& 0
\end{array}
\right.
$$

Then, at the step 204, the solvability flag g in the memory unit 35 and is set to 1.

Then, the following steps are carried out.

[m1] Starting from the first equation(step 205), for each equation in the area X, repeat following [m2] and [m3] as many times as possible(steps 215, 216).

[m2] If there is an equation with only one unknown in the left hand side(step 206), compare the sign of the unknown with that of a constant in the right hand side(step 207). If they are different, change the solvability flag g to 0 and terminate(step 208). Otherwise, set the sign of the both sides to positive ( + ) (step 209), and register the constant as a solution for that unknown in the unknown table Q and delete this equation from the area X(step 210).

[m3] Substitute the newly registered solution in the other equations(step 211). Bring all the constants to the right hand side, and if an equation of a form "0 = 0" is obtained, delete it from the area X(step 212). If an equation of a form "0 = **p**", where **p** $\neq$ 0 is a constant, is obtained(step 214), set the solvability flag g to 0 and terminate(step 208).
[m4] If no equation is left in the area X, go to next [m5](step 217). Otherwise, each remaining equation has at least two unknowns in the left hand side. Search for an unknown appearing in more than one equations(step 218). If any, substitute one such equation into others so as to eliminate that unknown (step 219), delete this one equation used for substitution from the area X(step 220), and go to [m1].
[m5] If no equation is left in the area X(step 221) and the solutions for all the unknowns registered in the unknown table Q are 0s(step 222), set the solvability flag g to 0 and terminate(step 208). Otherwise, simply terminate.

For the problem A, the process after the step 204 goes as follows.

1. From the fifth equation (**@2** = 0), a solution 0 is registered for the unknown **@2** by [m2],
2. By [m3], this solution is substituted, leaving the following equations:

$$
\begin{cases}
& & & \textbf{@3} & + & \textbf{@4} & = & 1 \\
& \textbf{@1} & & + & \textbf{@3} & & = & 0 \\
- & \textbf{@1} & & & & & = & 0 \\
& \textbf{@1} & & & + & \textbf{@4} & = & 0
\end{cases}
$$

3. From the third equation (-**@1** = 0), a solution 0 is registered for the unknown @1 by [m2],
4. By [m3], this solution is substituted, leaving the following equations:

$$
\begin{cases}
& \textbf{@3} & + & \textbf{@4} & = & 1 \\
+ & \textbf{@3} & & & = & 0 \\
& & & \textbf{@4} & = & 0
\end{cases}
$$

5. From the last equation (**@4** = 0), a solution 0 is registered for the unknown **@4** by [m2],
6. By [m3], this solution is substituted, leaving the following equation:

$$0 = 1$$

so that the solvability flag g is set to 0 and the process terminates.

It can easily be seen that the solvability flag g indicates 0 when there is no non-negative solution, and 1 otherwise. Accordingly, the analyzing unit 30 determines the input data as satisfiable when the solvability flag g is 0, and unsatisfiable otherwise. On the basis of such determination of the satisfiability of the input data, the output is produced to indicate that the problem is provable if the input data are determined as unsatisfiable, or not so otherwise.

For the problem A, since the process terminates with the solvability flag g = 0, the input data are determined as satisfiable, so that the problem is not provable, in agreement with the earlier discussion of this problem.

It is to be noted that this embodiment can be modified such that instead of providing the analyzing means 30 with its own memory unit 35, the operation of analysis is performed by the analyzing means 30 and the storing means 20 interactively.

It is also to be noted that the steps involved in [m1] to [m5] above shows only one exemplary implementation of a method of determining the existence of non-negative solutions to the proof equation, which can suitably be modified to accommodate other implementations or other methods.

## 9.2 Second embodiment (for predicate logic of first order)

This second embodiment of an apparatus for automated theorem proving according to the present invention is designed to deal with the problems in the predicate logic of first order.

This second embodiment generally has the same configuration as that of the first embodiment shown in Fig. 1, except that now, as shown in Fig. 8, the analyzing means 30 further comprises an r-transformation unit 31, a Y solving unit 32, a Z solving unit 33, and a checking unit 34, in addition to the memory unit 35. Furthermore, there are now provided an area Y and an area z in addition to the area X and the solvability flag g in this memory unit 35.

The outline of the operation of this second embodiment of an apparatus for automated theorem proving is also the same as that of the first embodiment shown in Fig. 2, which will not be repeated here.

A detail of the operation will now be described. Here, for the sake of definiteness, the problem used in the section 8.2 above (referred hereafter as the problem B) will be taken as a worked out example to illustrate the operation.

First of all, in this embodiment, externally supplied input data are to be given in a form of a set of clauses which is described by representing each predicate by a capital letter, and negation by "-", with the whole set as well as each clause in the set being enclosed between "(" and ")" and adjacent clauses in the set being separated by ";".

For the problem B, the input data have the following form:

$$( \, (\text{-F(X), -B(yy(X), X)}); \, (\text{-B(X, Y), B(Y, X)});$$

$$(\text{B(Y, X), -B(Z, X)}); \, (\text{F(a)}); \, (\text{B(b, c)}) \, )$$

It is also assumed that the input data are already put in such a form that the set is satisfying one of the Horn conditions.

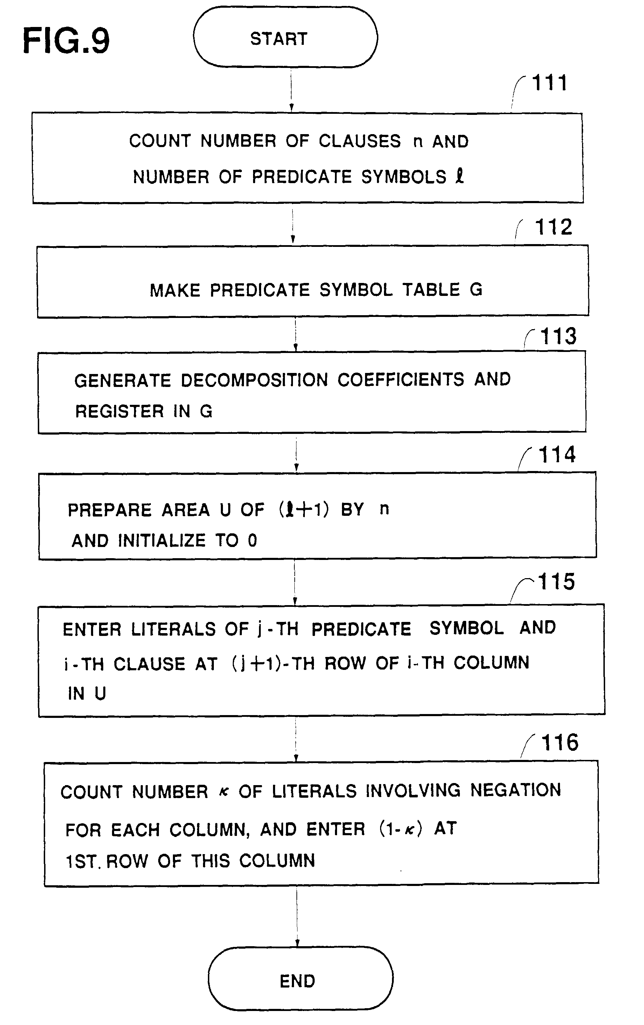

The transformation means 10 utilizes the storing means 20 to transform such input data, in accordance with a flow chart of Fig. 9, as follows.

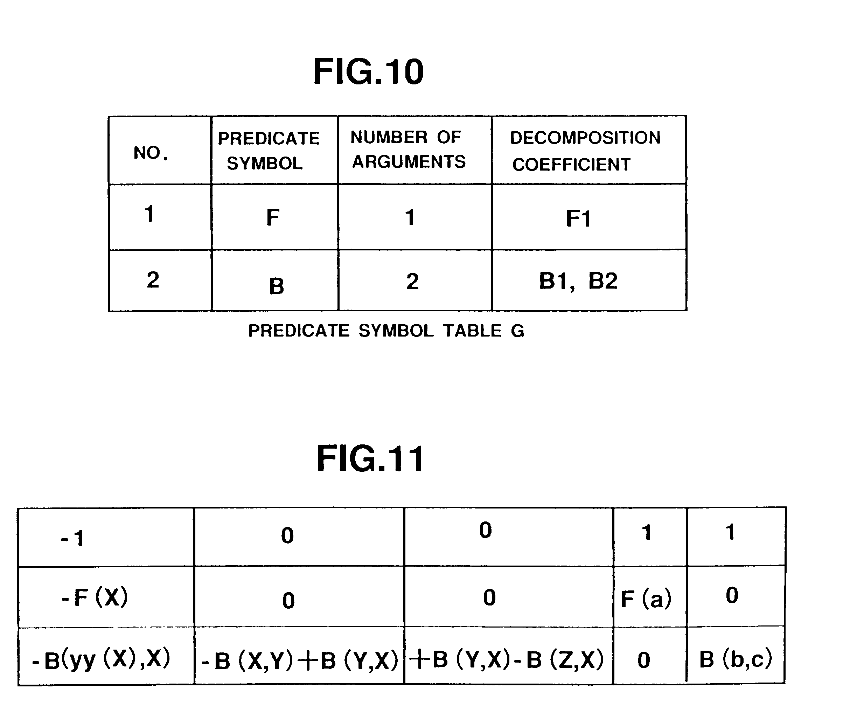

At the step 111, a number of clauses $\underline{n}$ and a number of predicate symbols $\underline{\ell}$ are counted. Meanwhile, at the step 112, all the predicate symbols are tabulated in a form of a predicate symbol table G, along with a number of their arguments, as shown in Fig. 10 for the problem B which involves two predicate symbols **F** and **B**. In addition, at the step 113, decomposition coefficients are given for each predicate symbol as many as the number of its arguments, each decomposition coefficient being given a distinct label made by attaching an integer numbering of the arguments to the predicate symbol. These decomposition coefficients are also registered in the predicate symbol table G. For the problem B, the predicate **F** involves one argument whereas the predicate **B** involves two, as shown in Fig. 10.

Then, at the step 114, an area U of ($\ell$+1) rows by $\underline{n}$ columns are prepared in the storing means 20. An entire area U is initialized to 0 at this point. For the problem B which involves five clauses and two predicate symbols, the area U has the size of 3 by 5.

Next, at the step 115, the literals in each clause are registered at the area U by the rule that a literal having the j-th predicate symbol in the i-th clause is to be entered at the (j+1)-th row of the i-th column. Here, the propositional symbols are ordered by their order of appearance in the predicate symbol table G, from top to bottom, whereas the clauses are ordered by their order of appearance in the input data, from left to right.

Finally, at the step 116, a number $\underline{\kappa}$ of literals involving the negation symbol "-" is counted for each clause, and a number (1 - $\kappa$) is entered at the first row of the respective column. This completes the transformation.

At this point, the entries in the area U, for the problem B, appears as shown in Fig. 11. Note that these entries of the area U corresponds to the coefficient matrix of the simultaneous form of the proof equation, eq.(5).

Next, the analyzing means 30 attempts to solve the proof equation specified by the coefficient matrix constructed in the area U of the storing means 30, so as to be able to answer the problem.

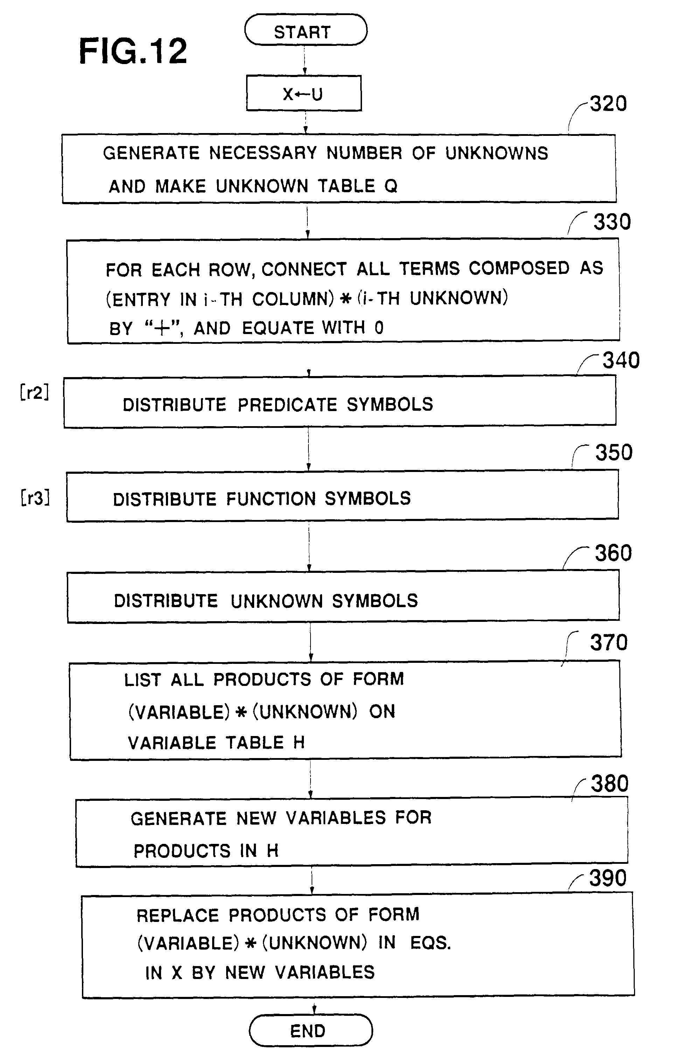

First of all, the r-transformation unit 31 performs the r-transformation to the second and lower rows of the coefficient matrix constructed in the area U. As explained in the section 8.2 above, this is done by the three rules [r1], [r2], and [r3] described there, which are carried out by the r-transformation unit 31, in accordance with a flow chart of Fig. 12, as follows.

First, at the step 310, the coefficient matrix in the area U of the storing means 30 is copied to the area X in the memory unit 35.

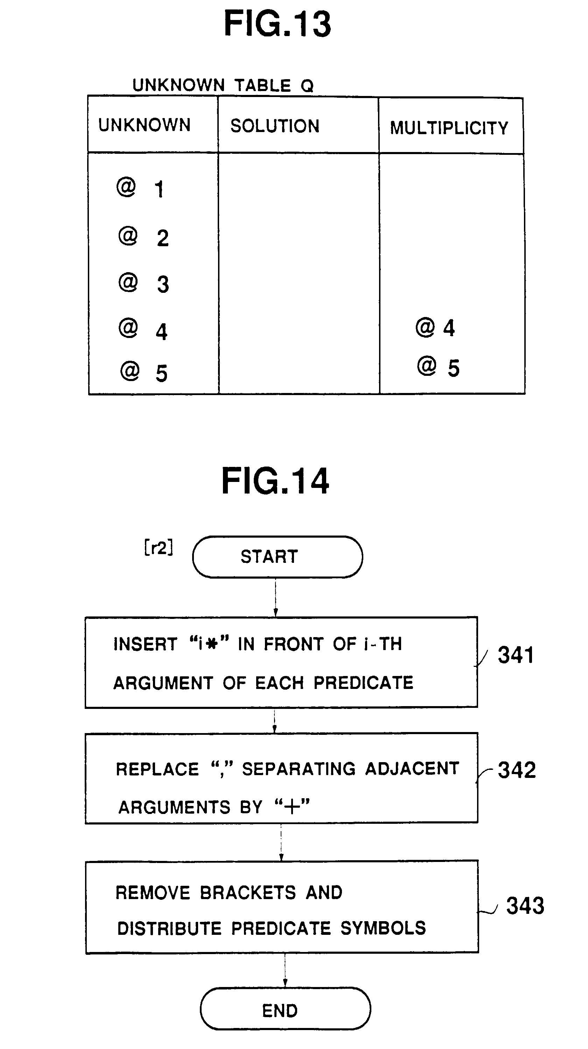

Next, at the step 320, a number of unknowns needed, which is the same as the number of columns of the coefficient matrix, is counted, and distinctive unknown symbols are given to these unknowns which are tabulated in a form of a unknown table Q, as shown in Fig. 13 for the problem B which requires five unknowns **@1, @2, @3, @4**, and **@5**. At this point, entries for the multiplicities as well as those for the solutions in the unknown table Q are yet to be filled.

Then, at the step 330, for each row of the coefficient matrix, all the terms composed as the entry in the i-th column followed by "*" followed by the i-th unknown symbol are connected by "+", and these are equated with 0. Here, the unknown symbols are ordered in by their order of appearance in the unknown table Q, from top to bottom.

Now, since in this embodiment the transformation corresponding to [r1] has already been taken care of in the input data, nothing needs to be done in this regard here.

So, next at the step 340, the distributing of the predicate symbols corresponding to [r2] is carried out. This is done in accordance with a subroutine shown in Fig. 14. Namely, at the step 341, for the i-th argument of each predicate, "i*" is inserted. Here, the arguments are ordered in by their order of appearance in the input data, from left to right. Then, at the step 342, "," separating adjacent arguments in each predicate is replaced by "+". Finally, at the step 343, the brackets enclosing the arguments are removed, and at the same time the predicate symbol is attached in front of each term of its arguments.

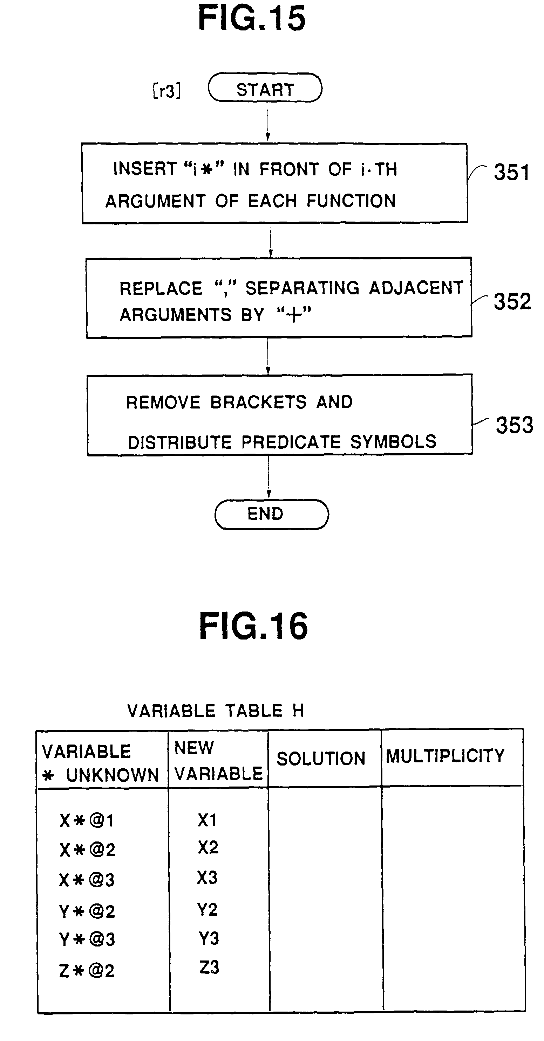

Next at the step 350, the distributing of the function symbols corresponding to [r3] is carried out. This is done in accordance with a subroutine shown in Fig. 15. Namely, at the step 351, for the i-th argument of each function, "i*" is inserted. Then, at the step 352, "," separating adjacent arguments in each predicate is replaced by "+". Finally, at the step 353, the brackets enclosing the arguments are removed, and at the same time the function symbol is attached in front of each term of its arguments.

Then, at the step 360, all the remaining brackets are removed and at the same time the unknowns are distributed according to the usual distribution law, such that every equation is in a form of a sum of terms.

At this point, for the problem B, eqs.(7a) and (7b) are produced in the area X.

Next, at the step 370, all the products of the form: (variable)*(unknown) are listed on a variable table H, as shown in Fig. 16 for the problem B. It can be seen that this variable table H corresponds to eq. (8). At the same time, for those unknowns which do not appear in the products listed on the variable table H, the entries for the multiplicities in the unknown table Q is filled by the unknown itselt. As shown in Fig. 13, for the problem B such unknowns are **@4** and **@5**.

Next, at the step 380, for each listed product a new distinct variable symbol is assigned and recorded in the variable table H.

Finally, at the step 390, these listed products in the equations on the area X are replaced by their newly assigned variable symbols. This completes the operation of the r-transformation unit 31.

At this point, for the problem B, eqs.(9a) and (9b) are produced in the area X.

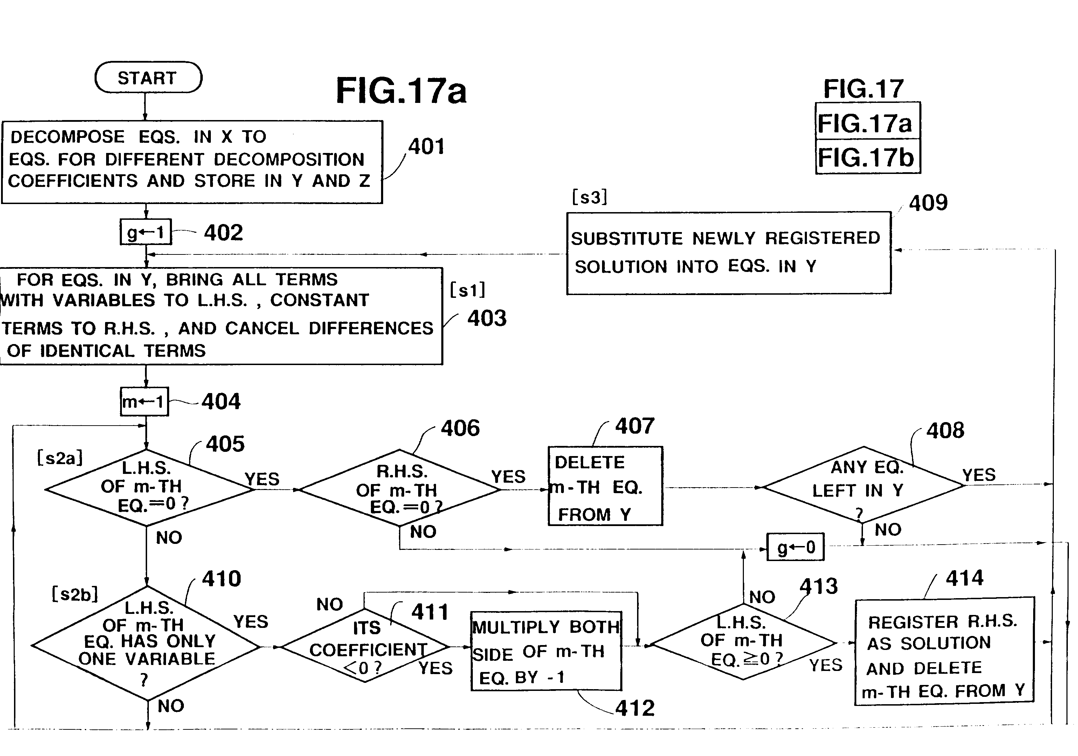

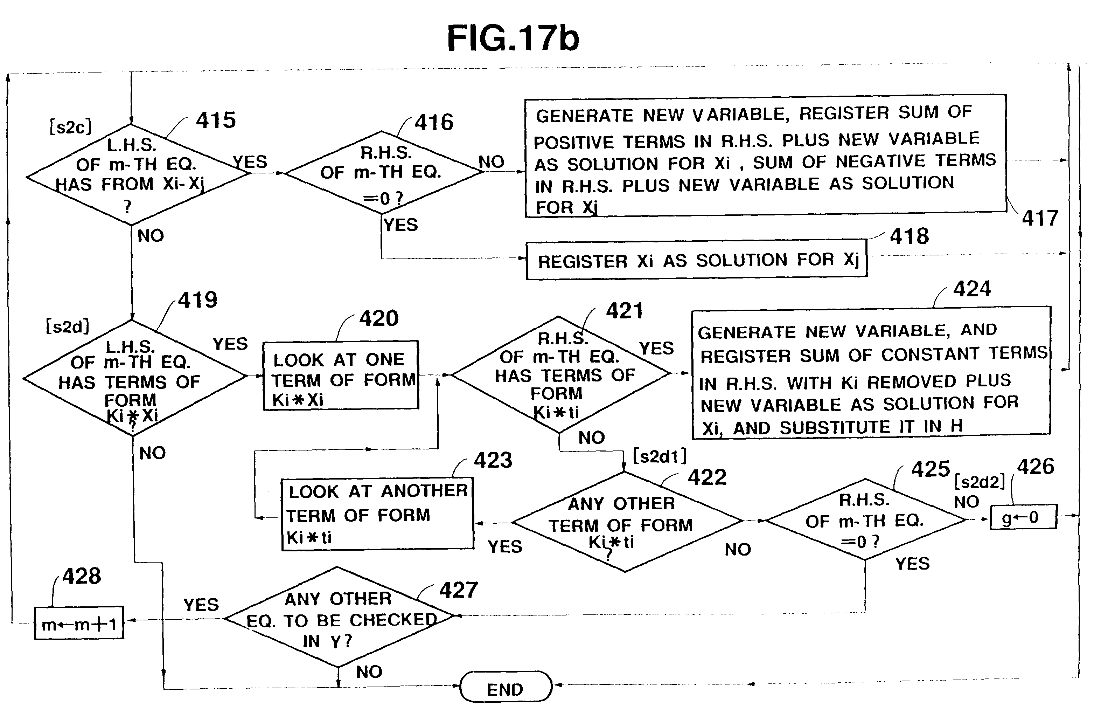

Following the completion of the operation by the r-transformation unit 31, the Y solving unit 32 begins its operation, in accordance with a flow chart of Fig. 17.

First, at the step 401, this Y solving unit 32 decomposes the equations in the area X to equations for different decomposition coefficients in which each equation involves the terms with a particular decomposition coefficient. The Y solving unit 32 then stores the results in the area Y and the area Z of the memory unit 35.

Next, at the step 402, the Y solving unit 32 sets the solvability flag g in the memory unit 35 to 1, and proceeds to carry out the following steps.

[s1] For equations in the area Y, bring all the terms involving the variables to the left hand side, all the constant terms to the right hand side, and cancel the differences of the identical terms(step 403), and set a counter m to 1 (step 404).

[s2] For the m-th equation in the area Y,

[s2a] if the left hand side is 0(step 405) and

(a)if the right hand side is also 0(step 406), delete the m-th equation from the area Y(step 407) and if no equation is left in the area Y(step 408) then terminate.
(b)if the right hand side is not zero(step 406), set the solvability flag g to 0 and terminate(step 409)

[s2b] if the left hand side is a single variable(step 410), then if its coefficient is negative(step 411) multiply both sides by -1 (step 412), then if the right hand side is not negative, register this as a solution to the entry for the solution in the variable table H(step 414), and remove this m-th equation from the area Y.

[s2c] if the left hand side is two terms of pure variables of the form: $X_i - X_j$(step 415), and if the right hand side is not 0(step 416) then register a new variable in the variable table H, and register a sum of the positive terms in the right hand side plus the new variable as a solution for $X_i$, a sum of the negative terms in the right hand side plus the new variable as a solution for $X_j$ in the variable table H(step 417), or if the right hand side is 0 (step 416) register $X_i$ as a solution for $X_j$ in the variable table H(step 418).

[s2d] if the left hand side is not zero and has a term of a form $K_i*X_i$($k_i$ coefficient, $X_i$ variable) (step 419), then for each such term(steps 420),

[s2d1] if the right hand side has a term of a form $K_i*t_i$ with the same $K_i$ including sign($t_i$ constant) (step 421) then for each such term(step 422, 423) register a new variable in the variable table H, and register a sum of all the constant terms in the right hand side with $K_i$ removed plus the new variable as a solution for $X_i$, and substitute this solution for other occurrences of $X_i$ in the entries for solutions in the variable table H(step 424).

[s2d2] if the right hand side does not have a term of a form $K_i*t_i$ with the same $K_i$ including sign($t_i$ constant) (step 421) and if it is not zero(step step 425), then set the solvability flag g to 0 and terminate(step 426), or if it is zero(step 425) and m-th equation is not the last equation in the area Y(step 427), then set the counter to m+1(step 428) and go back to [s2] above, i.e., step 405, otherwise terminate(step 427).

[s3] If there is a new solution registered in the variable table H, substitute this into the other equations in the area Y, and go back to [s1] above, i.e. step 403(step 429).

This completes the operation of the Y solving unit 32.

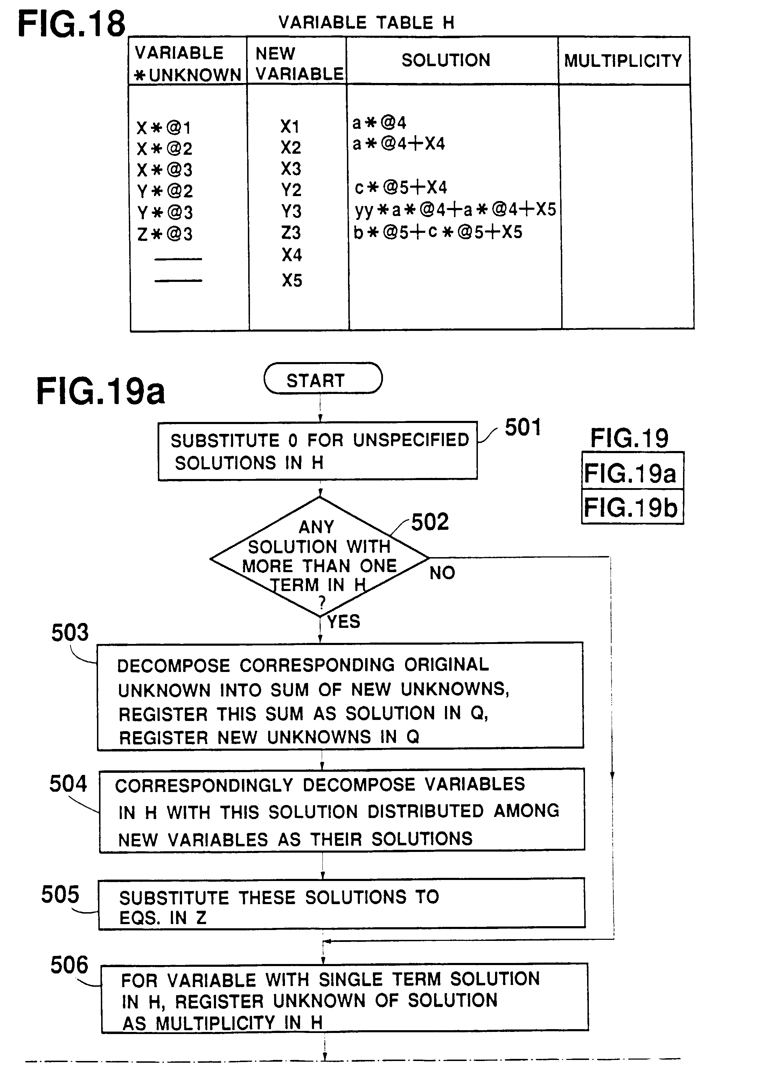

At this point, for the problem B, solutions of eqs. (10), (11), (12), (13), and (14) are produced in the area Y, so that the variable table H now appears as shown in Fig. 18.

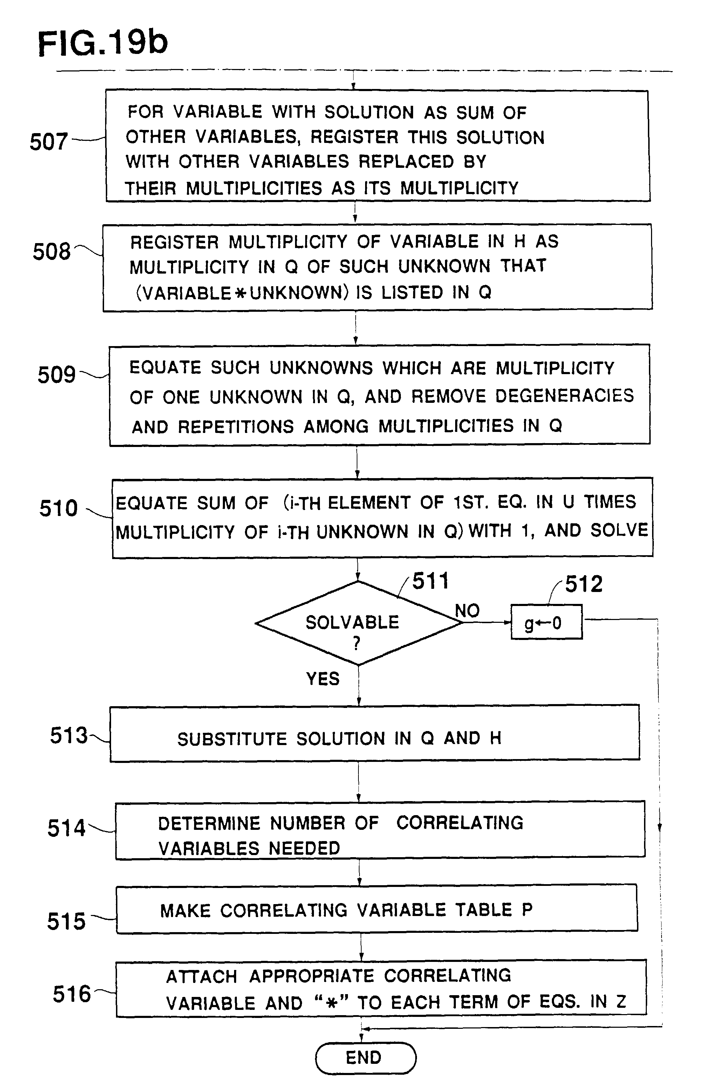

Following the completion of the operation by the Y solving unit 32, the Z solving unit 33 begins its operation. This Z solving unit 33 operates in two parts. The first part is carried out in accordance with a flow chart of Fig. 19.

First, at the step 501, 0 is substituted for those variable in the variable table H for which the solution has not been registered. Then at the step 502, those solutions registered in the variable table H which involves more than one terms are searched. If none is found, the step 506 will be taken next.

If there is any, then at the step 503, the original unknown of the proof equation (i.e., element of ring R) corresponding to that variable for which the searched solution is a solution is decomposed into a sum of as many new unknowns as the number of terms found in the searched solution, and an expression for such sum is registered in the unknown table Q as a solution to that original unknown, while these new unknowns are also added to the unknown table Q.

Next, at the step 504, corresponding decomposition is carried out in the variables in the variable table H, and the searched solution is suitably distributed among the new variables as their solutions.

Then, at the step 505, decomposed expression is substituted for the decomposed variable in the equations in the area Z.

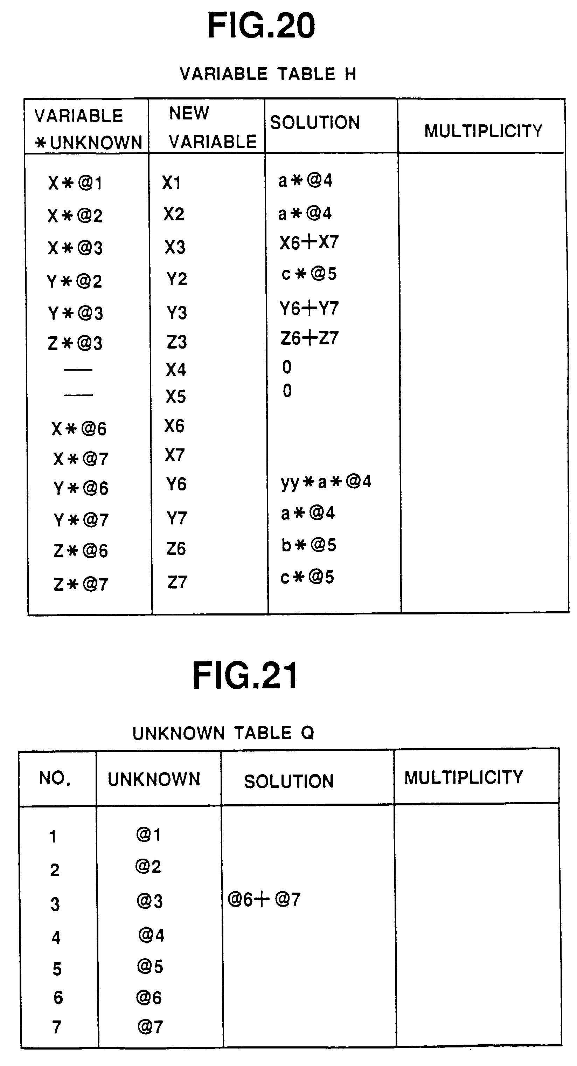

For the problem B, these operations of the Z solving unit 33 up to this point make the variable table H and the unknown table Q as shown in Figs. 20 and 21, respectively.

Next, at the step 506, for those variables for which the solution registered in the variable table H is in a form of a single term, the unknown appearing in such a single term is registered as the multiplicity for that variable.

Next, at the step 507, for those variables for which the solution registered in the variable table H is in a form of a sum of other variables, an expression in which these other variables are replaced by their multiplicities in the expression for that solution is registered as the multiplicity for that variable.

Next, at the step 508, for each line of the variable table H, the multiplicity of that line is copied to the unknown table Q as the multiplicity of such an unknown which appears in the (variable*unknown) expression of that line of the variable table H.

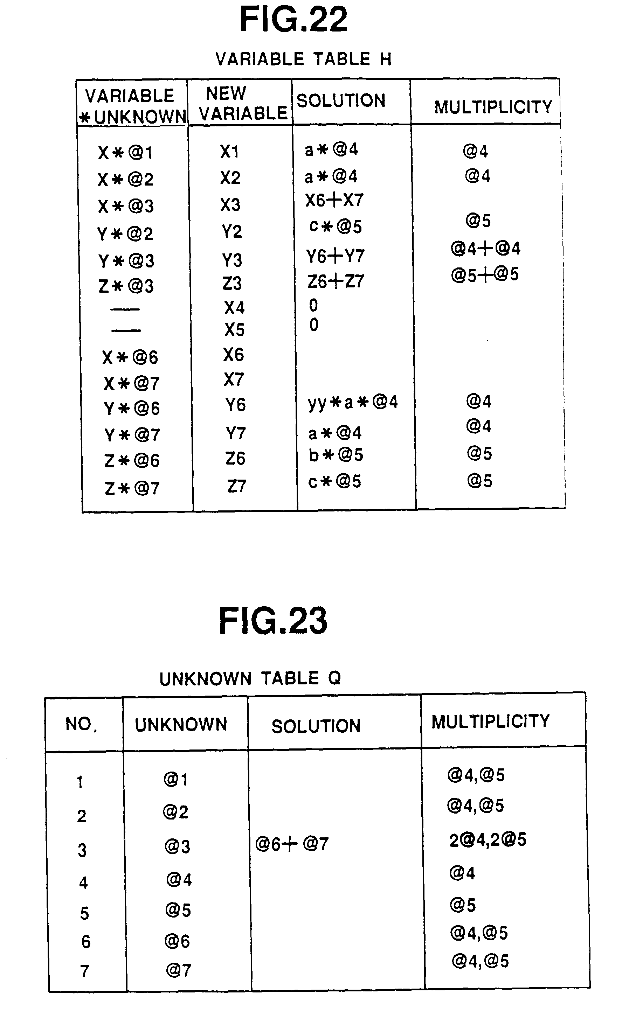

For the problem B, these operations of the Z solving unit 33 up to this point make the variable table H and the unknown table Q as shown in Figs. 22 and 23, respectively.

Next, at the step 509, those unknowns which are listed together as the multiplicity in one line of the unknown table Q are equated with each other, and one such unknown is substituted for the other equated unknowns in the unknown table Q so as to remove degeneracies among the unknowns, and the repetitions of the same unknown in one line of the unknown table Q are removed.

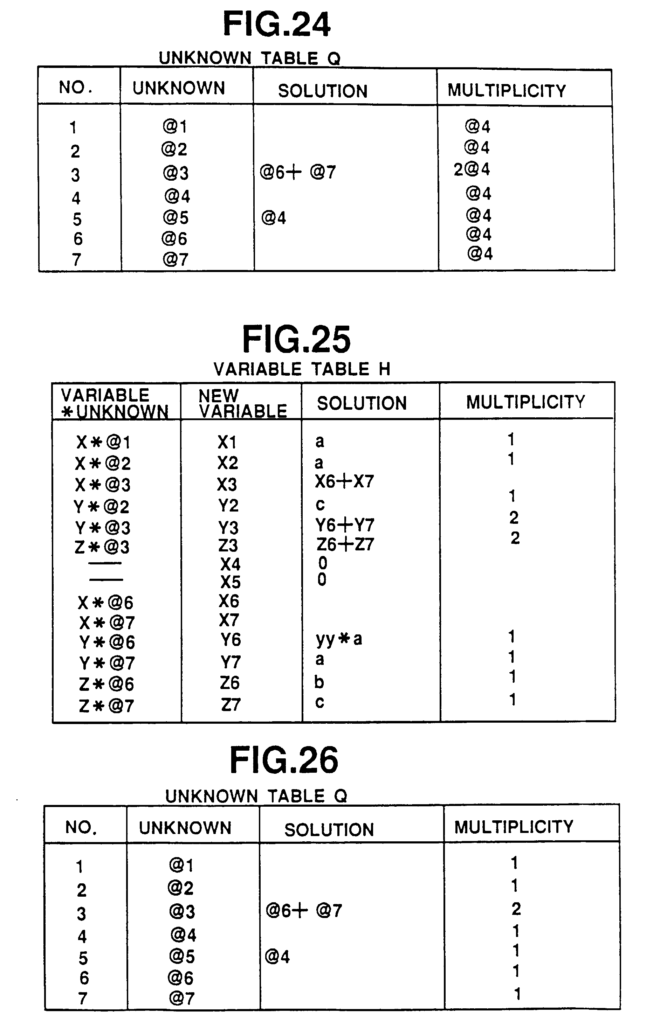

For the problem B, these operations of the Z solving unit 33 up to this point make the unknown table Q as shown in Fig. 24.

Next, at the step 510, the i-th element of the first line of the first equation in the area U of the storing means 20 multiplied by the multiplicity of the i-th unknown in the unknown table Q for all value of i are summed and equated with 1, and the solution to the resulting equation is sought. If unable to solve it(step 511), then the solvability flag g is set to 0 and terminate(step 512). If solved(step 511), then at the step 513, the solution found is substituted in the variable tables H as well as in the unknown table Q.

For the problem B, these operations of the Z solving unit 33 up to this point make the variable table H and the unknown table Q as shown in Figs. 25 and 26, respectively.

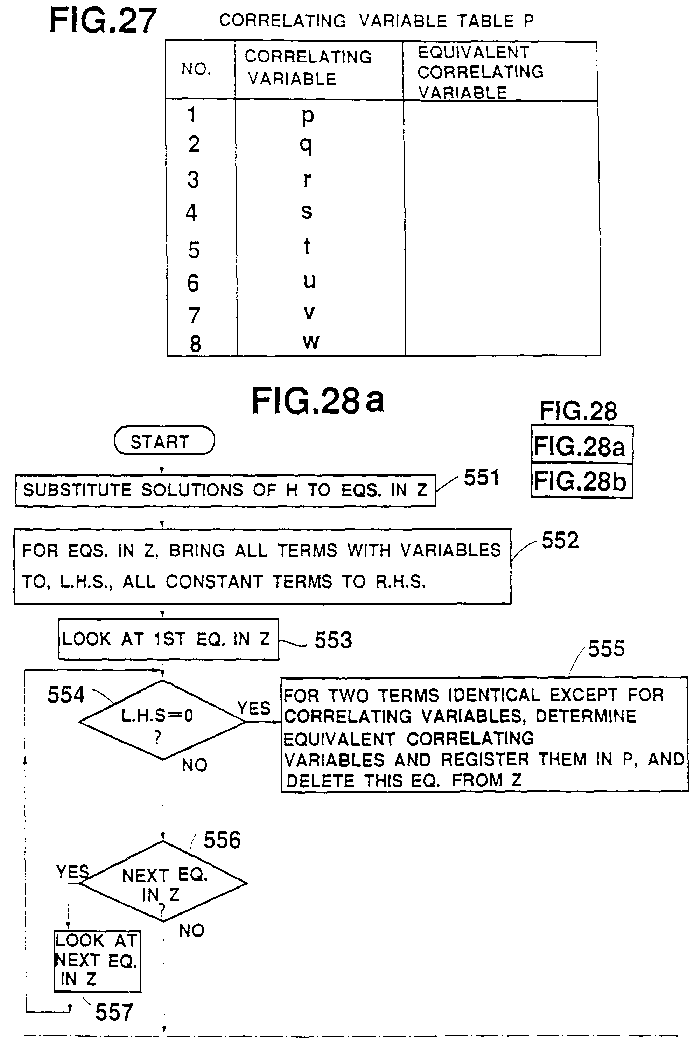

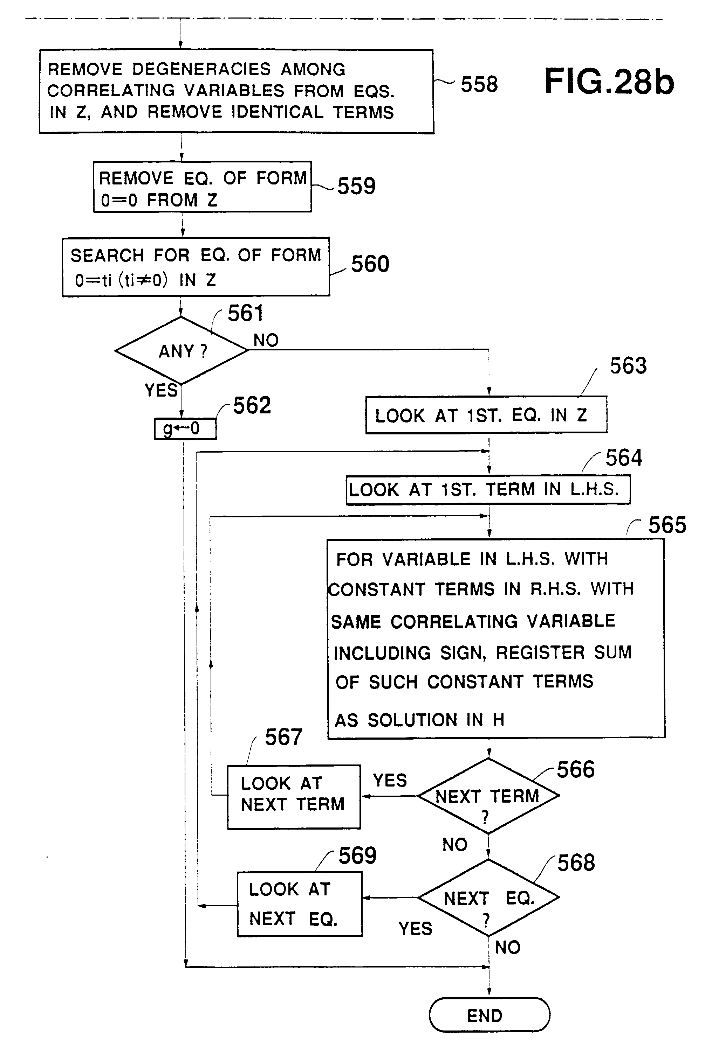

Next, the equations in the area Z are inspected to determine a number of correlating variables needed(step 514), and that number of correlating variables are produced and tabulated in a form of a corresponding variable table P, as shown in Fig. 27 for the problem B which requires eight correlating variables **p, q, r, s, t, u, v**, and **w**(step 515). Then, appropriate correlating variables accompanied by "*" are attached to each terms in the equations in the area Z(step 516). This completes the first part of the operation of the Z solving unit 33. At this point, for the problem B, eqs.(9b3) and (9b4) are produced in the area Z. Following the completion of the first part of its operation, the Z solving unit 33 begins the second part of its operation, which is carried out in accordance with a flow chart of Fig. 28.

Here, the following steps are carried out.

[x1] The solutions in the variable table H are substituted into the equations in the area Z(step 551).

[x2] For each equation in the area Z, all the terms involving the variables are brought to the left hand side, while all the constant terms are brought to the right hand side(step 552).

[x3] Among all the equation in the area Z(steps 553, 556, 557), for those equations in the area Z in which the left hand side is 0(step 554), any two constant terms in the right hand side which coincide with each other except for their correlating variables are paired together, and the relation between these terms necessary to make the left hand side equal to 0 is determined, and what is equal to each corresponding variable according to the determined relation is registered as equivalent correlating variables in the corresponding variable table P, and those equations are removed from the area Z(step 555).

[x4] For the equations in the area Z, the equivalent correlating variables according to the corresponding variable table P are replaced by a representative corresponding variable so as to remove degeneracies among the correlating variables, and the identical terms are removed(step 558), and any equation in a form of $0 = 0$ is removed from the area Z(step 559).

[x5] Among the equations in the area Z, one in a form of $0 = $ **ti** (**ti**$\neq 0$ constant)is searched(step 560). If any(step 561), then the solvability flag g is set to 0 and the operation terminates(step 562). Otherwise, among all the equations in the area Z(steps 563, 568, 569), for each term in the left hand side(steps 564, 566, 567), the variable in the left hand side is equated with a sum of those constant terms in the right hand side which have the same corresponding variable as that variable including signs, and obtained expression with corresponding variable dropped is registered as the solution for that variable in the variable table H(step 565). This completes the second part of the operation of the Z solving unit 33.

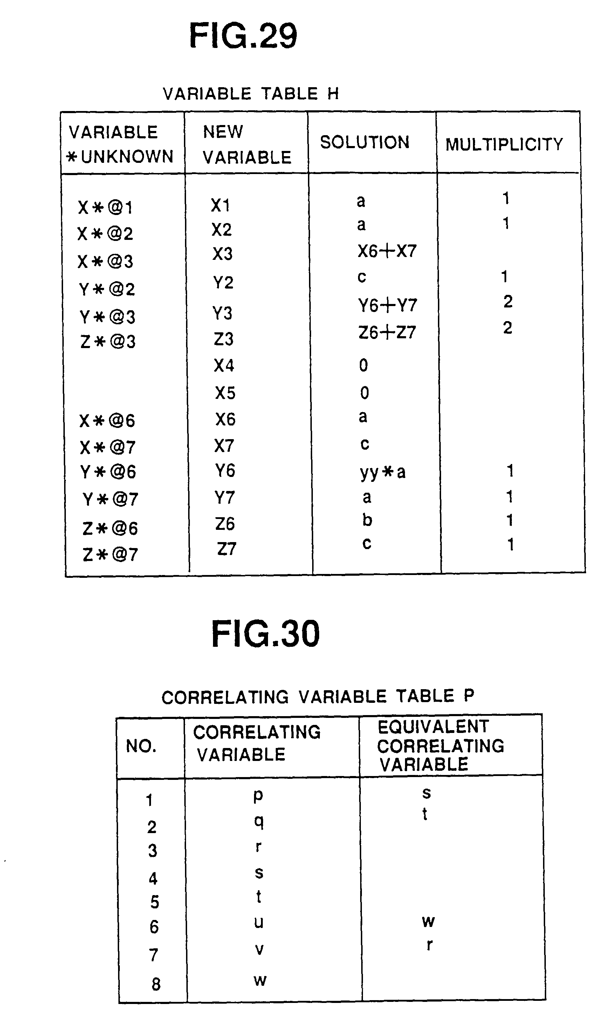

For the problem B, these operations of the Z solving unit 33 up to this point make the variable table H and the unknown table Q as shown in Figs. 29 and 30, respectively.

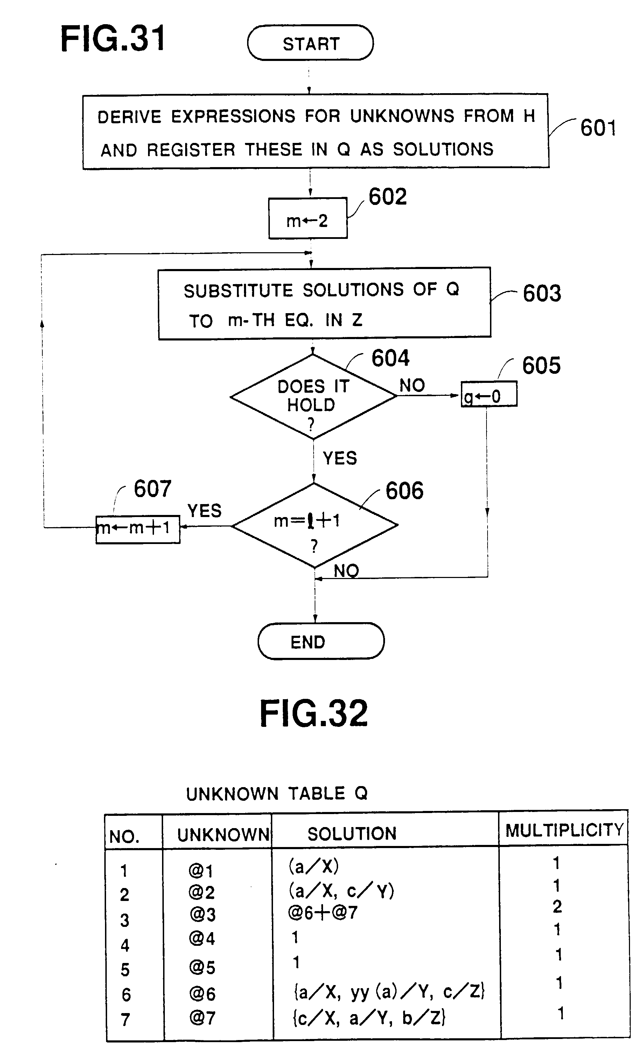

Following the completion of the operation by the Zsolving unit 33, the checking unit 34 begins its operation, in accordance with a flow chart of Fig. 31.

First, at the step 601, an expression for each unknown is derived from the solutions registered in the variable table H, and registered as a solution for the unknown in the unknown table Q.

For the problem B, this operation of the checking unit 34 makes the unknown table Q as shown in Fig. 32.

Then, the following steps are carried out.

[k0] Set a counter m to 2(step 602).

[k1] Substitute the solutions for the unknown from the unknown table Q into the m-th equation in the area Z(step 603) and check if it holds(step 604). If it does not hold, then set the solvability flag g to 0 and terminate(step 605).

[k2] If $m = \ell + 1$, simply terminate(step 606), otherwise set the counter m to m+1 and go back to [k1] (step 607).

This completes the operation of the checking unit 34.

Lastly, the analyzing unit 30 determines the input data as satisfiable when the solvability flag g is 0, and unsatisfiable otherwise. On the basis of such determination of the satisfiability of the input data, the output is produced to indicate that the problem is provable if the input data are determined as unsatisfiable, or not so otherwise.

For the problem B, since the process terminates with the solvability flag $g = 1$, the input data are determined as unsatisfiable, so that the problem is provable, in agreement with the earlier discussion of this problem.

It is to be pointed out that in this second embodiment, it is possible to have more than one candidates for the solutions in a course of analysis. In such a case, the analysis can be continued for one of the candidates while the others can temporarily be stored in the memory unit 35 along with the results of the completed steps and the solvability flag at the time of such storing, so that when that one candidate for which the analysis is continued turned out to be not yielding the desired non-negative solutions, then the analysis for one of the stored candidate can be resumed for the remaining steps, and so on. It is to be noted that if one such candidate is found to yield the desired non-negative solution, there is no need to carry out the analysis for the other candidates any further, since the existence of one such solution is sufficient. On the other hand, the analysis must be continued until all the candidates are found not to yield the desired non-negative solution.

It is also to be noted that this embodiment can be modified such that instead of providing the analyzing means 30 with its own memory unit 35, the operation of analysis is performed by the analyzing means 30 and the storing means 20 interactively.

10. EFFECT OF THE PRESENT INVENTION

The foregoing description of the present invention makes it clear that the use of the algebraic proving principle enable an apparatus for automated theorem proving according to the present invention to reach the final result in about the same amount of time for either a case of provable or that of not provable, so that it is highly efficient irrespective of a set of clause to be dealt with.

In addition, for the problems in the propositional logic, the problem reduces to that of simple algebraic equations on Z. It can be shown that in this case, the time required to solve the problem is about 2.81-th power of the magnitude of the problem. Furthermore, it is possible in this case to implement the method of the present invention such that the devoted vector processing using multiple pipelines can be employed, so that the very high speed apparatus can be realized.

As for the problems in the predicate logic of first order, the many specific methods for solving the proof equation are still in developing stage at the time of this application, except for one described above, but since the proof equation is given in terms of the modules and its ring of scalars, the subject which has been very actively studied in algebra, the significant progress in this direction is expected in near future. However, it is to be emphasized here that the essence of the present invention, i.e., the use of the algebraic proving principle, does not rely on the specific methods for solving the proof equations, for which any method known at a time can be employed with a suitable implementation.

**Claims**

1. A method of automated theorem proving for information processing in which the provability of a statement is automatically judged on a basis of a given set of knowledge,
   **characterized by** the steps of:

   (a) transforming (100) the statement and the set of knowledge into expressions in terms of elements of a module, wherein the elements of the module are ordered pairs of an integer and a collection of literals, wherein each collection of literals contains all the literals appearing in each clause belonging to set of clauses for the statement and the set of knowledge, with repeated occurrences of same literal allowed, said integer indicating the number of literals which are necessary to be true in order for the element of the module to be true;

   (b) constructing (200) a linear equation with the elements of the module as coefficients and elements of a ring of scalars of the module as unknowns, wherein the linear equation is in a form

   $$\sum_{i=1}^{n} \left(1, x_i\right) \cdot \alpha_i = \left(1, \phi\right)$$

   where (,) denotes an ordered pair of an integer and a collection of literals giving an element of the module, $x_i$ are collections of literals, $\emptyset$ is a collection of no literal, $\alpha_i$ are elements of the ring of scalars of the module, and • denotes a suitably defined operation of the elements of the ring of scalars of the module on the elements of the module;

   (c) checking (200) the existence of a non-negative solution to the linear equation; and

   (d) determining (300) that the statement is provable when the non-negative solution exists, and not provable otherwise.

2. The method of claim 1, wherein the statement and the set of knowledge are given in a language of the predicate logic of first order, and the elements of the ring of scalars comprises:

   (1) 0 (zero element)
   (2) 1 (unit element)
   (3) substitutions of variables for predicates
   (4) properly defined products of (1), (2), and (3)
   (5) properly defined additions of (1), (2), and (3).

3. The method of claim 1, wherein the step (c) includes the steps of:

   (e) expressing the linear equation as a system of simultaneous equations; and

   (f) checking the existence of non-negative solutions to the system of simultaneous equations.

4. The method of claim 3, wherein the statement and the set of knowledge are given in a language of the predicate logic of first order, and wherein the step (f) includes the steps of:

   (f1) transforming the system of simultaneous equations into a transformed system of simultaneous equations which is homorphic to the system of simultaneous equations;

   (f2) checking the existence of non-negative solutions to the transformed system of simultaneous equations; and

(f3) determining the existence of non-negative solutions to the system of simultaneous equations on a basis of a result of checking at the step (f2).

5. The method of claim 4, wherein the step (f1) utilizes a mapping $\mu$ from the ring to integers defined as follows:

$$\mu(0) = 0$$

$$\mu(1) = 1$$

$$\mu(\sigma) = 1$$

$$\mu(\alpha \cdot \beta) = \mu(\alpha) \cdot \mu(\beta)$$

$$\mu(\alpha + \beta) = \mu(\alpha) + \mu(\beta)$$

$$\mu(-\alpha) = -\mu(\alpha)$$

where $\sigma$ is a substitution, • denotes the product of the ring, + denotes the addition of the ring, and $-\alpha$ is an additive inverse of an element $\alpha$ of the ring.

6. The method of claim 4, wherein the step (f1) utilizes a transformation in which each predicate symbol is distributed to each one of its arguments, and each function symbol is distributed to each one of its arguments.

7. The method of claim 4, wherein the step (f2) utilizes variables adjusting correspondences between terms in the system of simultaneous equations and the transformed system of simultaneous equations.

8. An apparatus of automated theorem proving for information processing in which the provability of a statement is automatically judged on a basis of a given set of knowledge, the apparatus being characterized by comprising:

(a) means (10) for transforming the statement and the set of knowledge into expressions in terms of elements of a module, wherein the elements of a module are ordered pairs of an integer and a collection of literals, wherein each collection of literals contains all the literals appearing in each clause belonging to set of clauses for the statement and the set of knowledge, with repeated occurrences of same literal allowed, said integer indicating the number of literals which are necessary to be true in order for the element of the module to be true;

(b) means (20, 30) for constructing a linear equation with the elements of the module as coefficients and elements of a ring of scalars of the module as unknowns, wherein the linear equation is in a form:

$$\sum_{i=1}^{n} \left(1, x_i\right) \cdot \alpha_i = \left(1, \phi\right)$$

where (,) denotes an ordered pair of an integer and a collection of literals giving an element of the module, $x_i$ are collections of literals, $\varnothing$ is a collection of no literal, $\alpha_i$ are elements of the ring of scalars of the module, and • denotes a suitably defined operation of the elements of the ring of scalars of the module on the elements of the module;

(c) means (30) for checking the existence of a non-negative solution to the linear equation, and

(d) means (30) for determining that the statement is provable when the non-negative solution exists, and not provable otherwise.

9. The apparatus of claim 8, wherein the statement and the set of knowledge are given in a language of the predicate logic of first order, and the elements of the ring of scalars comprises:

(1) 0 (zero element)
(2) 1 (unit element)
(3) substitutions of variables for predicates
(4) properly defined products of (1), (2), and (3)

(5) properly defined additions of (1), (2) and (3).

10. The apparatus of claim 8, wherein (c) includes:

   (e) means for expressing the linear equation as a system of simultaneous equations; and
   (f) means for checking the existence of non-negative solutions to the system of simultaneous equations.

11. The apparatus of claim 10, wherein the statement and the set of knowledge are given in a language of the predicate logic of first order, and wherein (f) includes:

   (f1) means for transforming the system of simultaneous equations into a transformed system of simultaneous equations which is homomorphic to the system of simultaneous equations;
   (f2) means for checking the existence of non-negative solutions to the transformed system of simultaneous equations; and
   (f3) means for determining the existence of non-negative solutions to the system of simultaneous equations on a basis of a result of checking by (f2).

12. The apparatus of claim 11, wherein the means for transforming the system utilizes a mapping $\mu$ from the ring to integers defined as follows:

$$\mu(0) = 0$$

$$\mu(1) = 1$$

$$\mu(\sigma) = 1$$

$$\mu(\alpha \cdot \beta) = \mu(\alpha) \cdot \mu(\beta)$$

$$\mu(\alpha + \beta) = \mu(a) + \mu(\beta)$$

$$\mu(-\alpha) = -\mu(\alpha)$$

where $\sigma$ is a substitution, $\cdot$ denotes the product of the ring, $+$ denotes the addition of the ring, and $-\alpha$ is an additive inverse of an element $\alpha$ of the ring.

13. The apparatus of claim 11, wherein the means for transforming the system utilizes a transformation in which each predicate symbol is distributed to each one of its arguments, and each function symbol is distributed to each one of its arguments.

14. The apparatus of claim 11, wherein the means for checking the existence of non-negative solutions to the transformed system of simultaneous equations utilizes variables adjusting correspondences between terms in the system of simultaneous equations and the transformed system of simultaneous equations.

## Patentansprüche

1. Verfahren einer automatisierten Theorem-Bestätigung zur Informationsverarbeitung, in welcher die Bestätigbarkeit einer Aussage automatisch auf einer Basis einer gegebenen Wissensmenge entschieden wird, gekennzeichnet durch die Schritte:

   (a) Transformieren (100) der Aussage und der Wissensmenge in Ausdrücke in Termen von Elementen eines Moduls, wobei die Elemente des Moduls geordnete Paare einer Ganzzahl und einer Sammlung von Literalen sind, wobei jede Sammlung von Literalen all die Literalen enthält, die in jeder Klausel auftreten, die zu der Klauselmenge für die Aussage und die Wissensmenge gehört, wobei ein wiederholtes Auftreten desselben Literals zulässig ist, die Ganzzahl die Anzahl der Literalen angibt, welche notwendigerweise in Reihenfolge wahr sein müssen, damit das Element des Moduls wahr ist;

   (b) Konstruieren (200) einer Linear-Gleichung mit den Elementen des Moduls als Koeffizienten und Elementen eines Skalarenrings des Moduls als Unbekannten, wobei die Linear-Gleichung in einer Form

$$\sum_{i=1}^{n} (1, \; x_i)\cdot\alpha_i \; = \; (1, \phi$$

vorliegt, wobei (,) ein geordnetes Paar einer Ganzzahl und einer Sammlung von Literalen darstellt, die ein Element des Moduls ergeben, $x_i$ Sammlungen von Literalen sind, $\phi$ eine Sammlung von Nicht-Literalen ist, $\alpha_i$ Elemente des Skalarenrings des Moduls sind, und · eine geeignet definierte Operation der Elemente des Skalarenrings des Moduls an den Elementen des Moduls bezeichnet;

(c) Prüfen (200) der Existenz einer nicht-negativen Lösung der Linear-Gleichung; und

(d) Ermitteln, daß die Aussage bestätigbar ist, wenn die nicht-negative Lösung existiert, und anderenfalls nicht bestätigbar ist.

2. Verfahren nach Anspruch 1, wobei die Aussage und die Wissensmenge in einer Sprache der Prädikatenlogik erster Ordnung gegeben sind, und die Elemente des Skalenrings umfassen.

(1) 0 (Null-Element)
(2) 1 (Eins-Element)
(3) Substitution von Variablen für Prädikate
(4) geeignet definierte Produkte von (1), (2), und (3)
(5) geeignet definierte Additionen von (1), (2), und (3).

3. Verfahren nach Anspruch 1, wobei der Schritt (c) die Schritte enthält:

(e) Ausdrücken der Linear-Gleichung als ein System simultaner Gleichungen; und
(f) Prüfen der Existenz nicht-negativer Lösungen für das System simultaner Gleichungen.

4. Verfahren nach Anspruch 3, wobei die Aussage und die Wissensmenge in einer Sprache der Prädikatenlogik erster Ordnung gegeben sind, wobei der Schritt (f) die folgenden Schritte enthält:

(f1) Transformieren des Systems simultaner Gleichungen in ein transformiertes System simultaner Gleichungen, welches zu dem System der simultanen Gleichungen homomorph ist;
(f2) Prüfen der Existenz nicht-negativer Lösungen für das transformierte System simultaner Gleichungen; und
(f3) Ermitteln der Existenz nicht-negativer Lösungen für das System simultaner Gleichungen auf einer Basis eines Ergebnisses der Prüfung bei dem Schritt (f2).

5. Verfahren nach Anspruch 4, wobei der Schritt (f1) eine Abbildung $\mu$ aus dem Ring auf Ganzzahlen gemäß nachstehender Definition:

$$\mu(0) = 0$$

$$\mu(1) = 1$$

$$\mu(\sigma) = 1$$

$$\mu(\alpha\cdot\beta) = \mu(\alpha)\cdot\mu(\beta)$$

$$\mu(\alpha + \beta) = \mu(\alpha) + \mu(\beta)$$

$$\mu(-\alpha) = -\mu(\alpha)$$

anwendet, wobei $\sigma$ eine Substitution ist, · das Produkt des Rings bezeichnet, + die Addition des Rings bezeichnet und $-\alpha$ eine additive Inverse eines Elementes $\alpha$ des Rings ist.

6. Verfahren nach Anspruch 4, wobei der Schritt (f1) eine Transformation anwendet, in welcher jedes Prädikatensymbol auf jedes seiner Argumente verteilt ist, und jedes Funktionssymbol auf jedes seiner Argumente verteilt ist.

7. Verfahren nach Anspruch 4, wobei der Schritt (f2) Variablen anwendet, die Entsprechungen zwischen den Termen in dem System simultaner Gleichungen und dem transformierten System simultaner Gleichungen anpassen.

8. Vorrichtung einer automatisierten Theorem-Bestätigung zur Informationsverarbeitung, in welcher die Bestätigbarkeit einer Aussage automatisch auf einer Basis einer gegebenen Wissensmenge entschieden wird, wobei die Vorrichtung dadurch gekennzeichnet ist, daß sie aufweist:

(a) eine Einrichtung (10) zum Transformieren der Aussage und der Wissensmenge in Ausdrücke in Termen von Elementen eines Moduls, wobei die Elemente eines Moduls geordnete Paare einer Ganzzahl und einer Sammlung von Literalen sind, wobei jede Sammlung von Literalen all die Literalen enthält, die in jeder Klausel auftreten, die zu der Klauselmenge für die Aussage und die Wissensmenge gehört, wobei ein wiederholtes Auftreten desselben Literals zulässig ist, die Ganzzahl die Anzahl der Literalen angibt, welche notwendigerweise in Reihenfolge wahr sein müssen, damit das Element des Moduls wahr ist;

(b) eine Einrichtung (20, 30) zum Konstruieren einer Linear-Gleichung mit den Elementen des Moduls als Koeffizienten und Elementen eines Skalarenrings des Moduls als Unbekannten, wobei die Linear-Gleichung in einer Form:

$$\sum_{i=1}^{n} (1, \ x_i) \cdot \alpha_i = (1, \phi)$$

vorliegt, wobei (,) ein geordnetes Paar einer Ganzzahl und einer Sammlung von Literalen darstellt, die ein Element des Moduls ergeben, $x_i$ Sammlungen von Literalen sind, $\phi$ eine Sammlung von Nicht-Literalen ist, $\alpha_i$ Elemente des Skalarenrings des Moduls sind, und $\cdot$ eine geeignet definierte Operation der Elemente des Skalarenrings des Moduls an den Elementen des Moduls bezeichnet;

(c) eine Einrichtung (30) zum Prüfen der Existenz einer nicht-negativen Lösung der Linear-Gleichung; und

(d) eine Einrichtung (30) zum Ermitteln, daß die Aussage bestätigbar ist, wenn die nicht-negative Lösung existiert, und anderenfalls nicht bestätigbar ist.

9. Vorrichtung nach Anspruch 8, wobei die Aussage und die Wissensmenge in einer Sprache der Prädikatenlogik erster Ordnung gegeben sind, und die Elemente des Skalenringes umfassen:

(1) 0 (Null-Element)
(2) 1 (Eins-Element)
(3) Substitution von Variablen für Prädikate
(4) geeignet definierte Produkte von (1), (2), und (3)
(5) geeignet definierte Additionen von (1), (2), und (3).

10. Vorrichtung nach Anspruch 8, wobei (c) enthält:

(e) eine Einrichtung zum Ausdrücken der Linear-Gleichung als ein System simultaner Gleichungen; und
(f) eine Einrichtung zum Prüfen der Existenz nicht-negativer Lösungen für das System simultaner Gleichungen.

11. Vorrichtung nach Anspruch 10, wobei die Aussage und die Wissensmenge in einer Sprache der Prädikatenlogik erster Ordnung gegeben sind, und wobei (f) enthält:

(f1) eine Einrichtung zum Transformieren des Systems simultaner Gleichungen in ein transformiertes System simultaner Gleichungen, welches zu dem System der simultanen Gleichungen homomorph ist;
(f2) eine Einrichtung zum Prüfen der Existenz nicht-negativer Lösungen für das transformierte System simultaner Gleichungen; und
(f3) eine Einrichtung zum Ermitteln der Existenz nicht-negativer Lösungen für das System der simultanen Gleichungen auf einer Basis eines Ergebnisses der Prüfung bei dem Schritt (f2).

12. Vorrichtung nach Anspruch 11, wobei die Einrichtung zum Transformieren des Systems eine Abbildung $\mu$ aus dem Ring auf Ganzzahlen gemäß nachstehender Definition:

$$\mu(0) = 0$$

$$\mu(1) = 1$$

$$\mu(\sigma) = 1$$

$$\mu(\alpha \cdot \beta) = \mu(\alpha) \cdot \mu(\beta)$$

$$\mu(\alpha + \beta) = \mu(\alpha) + \mu(\beta)$$

$$\mu(-\alpha) = -\mu(\alpha)$$

anwendet, wobei $\sigma$ eine Substitution ist, $\cdot$ das Produkt des Rings bezeichnet, + die Addition des Rings bezeichnet und -$\alpha$ eine additive Inverse eines Elementes $\alpha$ des Rings ist.

13. Vorrichtung nach Anspruch 11, wobei die Einrichtung zum Transformieren des Systems eine Transformation anwendet, in welcher jedes Prädikatensymbol auf jedes seiner Argumente verteilt wird, und jedes Funktionssymbol auf jedes seiner Argumente verteilt wird.

14. Vorrichtung nach Anspruch 11, wobei die Einrichtung zum Prüfen der Existenz nicht-negativer Lösungen für das transformierte System simultaner Gleichungen Variablen anwendet, die Entsprechungen zwischen den Termen in dem System simultaner Gleichungen und dem transformierten System simultaner Gleichungen anpassen.

**Revendications**

1. Procédé de démonstration automatisée de théorème destiné au traitement d'informations dans lesquelles la démonstration d'une assertion est évaluée automatiquement sur la base d'un ensemble donné de connaissances, caractérisé par les étapes consistant à :

(a) transformer (100) l'assertion et l'ensemble de connaissances en expressions, exprimés en fonction d'éléments d'un module, dans lequel les éléments du module sont des paires ordonnées d'un nombre entier et d'une collection de chaînes littérales, dans lequel chaque collection de chaînes littérales contient toutes les chaînes littérales apparaissant dans chaque clause appartenant à l'ensemble de clauses pour l'assertion et l'ensemble de connaissances, les occurrences répétées de la même chaîne littérale étant autorisées, ledit nombre entier indiquant le nombre de chaînes littérales qui sont nécessairement vraies pour que l'élément du module soit vrai,

(b) construire (200) une équation linéaire avec les éléments du module en tant que coefficients et les éléments d'un anneau de scalaires du module en tant qu'inconnues, dans laquelle l'équation linéaire est sous la forme

$$\sum_{i=1}^{n} (1, \ x_i) \bullet \alpha_i = (1, \ \varnothing)$$

dans laquelle (,) représente une paire ordonnée d'un nombre entier et d'une collection de chaînes littérales donnant un élément du module, $x_i$ sont des collections de chaînes littérales, $\varnothing$ est une collection d'aucune chaîne littérale, $\alpha_i$ sont des éléments de l'anneau de scalaires du module, et $\cdot$ représente une opération définie de façon appropriée des éléments de l'anneau de scalaires du module sur les éléments du module,

(c) vérifier (200) l'existence d'une solution non négative à l'équation linéaire, et

(d) déterminer (300) que l'assertion peut être démontrée lorsque la solution non négative existe, et ne peut pas être démontrée dans les autres cas.

2. Procédé selon la revendication 1, dans lequel l'assertion et l'ensemble de connaissances sont exprimés dans un langage de logique de prédicats du premier ordre, et les éléments de l'anneau de scalaires comprennent :

(1) 0 (élément zéro)
(2) 1 (élément unité)
(3) substitutions de variables pour les prédicats
(4) produits définis de façon appropriée de (1), (2), et (3)
(5) additions définies de façon appropriée de (1), (2), et (3).

3. Procédé selon la revendication 1, dans lequel l'étape (c) comprend les étapes consistant à :

(e) exprimer l'équation linéaire en tant que système d'équations simultanées, et

(f) vérifier l'existence de solutions non négatives au système d'équations simultanées.

4. Procédé selon la revendication 3, dans lequel l'assertion et l'ensemble de connaissances sont donnés dans un langage de la logique de prédicats du premier ordre, et dans lequel l'étape (f) comprend les étapes consistant à :

(f1) transformer le système d'équations simultanées en un système transformé d'équations simultanées qui est homomorphique au système d'équations simultanées,

(f2) vérifier l'existence de solutions non négatives au système transformé d'équations simultanées, et

(f3) déterminer l'existence de solutions non négatives au système d'équations simultanées sur la base du résultat de la vérification de l'étape (f2).

5. Procédé selon la revendication 4, dans lequel l'étape (f1) utilise une application $\mu$ de l'anneau sur les nombres entiers définis comme suit :

$$\mu(0) = 0$$

$$\mu(1) = 1$$

$$\mu(\sigma) = 1$$

$$\mu(\alpha \bullet \beta) = \mu(\alpha) \bullet \mu(\beta)$$

$$\mu(\alpha + \beta) = \mu(\alpha) + \mu(\beta)$$

$$\mu(-\alpha) = -\mu(\alpha)$$

dans lequel $\sigma$ est une substitution, $\bullet$ représente l'opération produit de l'anneau, + représente l'opération addition de l'anneau, et $-\alpha$ est un élément inverse additif d'un élément $\alpha$ de l'anneau.

6. Procédé selon la revendication 4, dans lequel l'étape (f1) utilise une transformation dans laquelle chaque symbole de prédicat est distribué sur chacun de ses arguments, et chaque symbole de fonction est distribué sur chacun de ses arguments.

7. Procédé selon la revendication 4, dans lequel l'étape (f2) utilise des correspondances d'ajustement de variables entre des termes dans le système d'équations simultanées et le système transformé d'équations simultanées.

8. Appareil de démonstration automatisée de théorème destiné au traitement d'informations dans lequel la démonstration d'une assertion est évaluée automatiquement sur la base d'un ensemble donné de connaissances, l'appareil étant caractérisé en ce qu'il comprend :

(a) un moyen (10) destiné à transformer l'assertion et l'ensemble de connaissances en expressions exprimées par les éléments d'un module, dans lequel les éléments d'un module sont des paires ordonnées d'un nombre entier et d'une collection de chaînes littérales, dans lequel chaque collection de chaînes littérales contient toutes les chaînes littérales apparaissant dans chaque clause appartenant à l'ensemble de clauses pour l'assertion et l'ensemble de connaissances, les occurrences répétées de la même chaîne littérale étant autorisées, ledit nombre entier indiquant le nombre de chaînes littérales qui sont nécessairement vraies pour que l'élément du module soit vrai,

(b) un moyen (20, 30) destiné à construire une équation linéaire avec les éléments du module en tant que coefficients et les éléments d'un anneau de scalaires du module en tant qu'inconnues, dans lequel l'équation linéaire est sous la forme

$$\sum_{i=1}^{n} (1, \ x_i) \bullet \alpha_i = (1, \ \varnothing)$$

dans lequel (,) représente une paire ordonnée d'un nombre entier et d'une collection de chaînes littérales donnant un élément du module, $x_i$ sont des collections de chaînes littérales, $\varnothing$ est une collection d'aucune

chaîne littérale, $\alpha_i$ sont des éléments de l'anneau de scalaires du module, et • représente une opération définie de façon appropriée des éléments de l'anneau de scalaires du module sur les éléments du module,

(c) un moyen (30) destiné à vérifier l'existence d'une solution non négative à l'équation linéaire, et

(d) un moyen (30) destiné à déterminer que l'assertion peut être démontrée lorsque la solution non négative existe, et qu'elle n'est pas démontrable dans les autres cas.

**9.** Appareil selon la revendication 8, dans lequel l'assertion et l'ensemble de connaissances sont donnés dans un langage de logique de prédicats du premier ordre, et les éléments de l'anneau de scalaires comprennent :

(1) 0 (élément zéro)
(2) 1 (élément unité)
(3) substitutions de variables aux prédicats
(4) produits définis de façon appropriée de (1), (2), et (3)
(5) additions définies de façon appropriée de (1), (2), et (3).

**10.** Appareil selon la revendication 8, dans lequel (c) comprend :

(e) un moyen destiné à exprimer l'équation linéaire en tant que système d'équations simultanées, et

(f) un moyen destiné à vérifier l'existence de solutions non négatives au système d'équations simultanées.

**11.** Appareil selon la revendication 10, dans lequel l'assertion et l'ensemble de connaissances sont donnés dans un langage de logique de prédicats du premier ordre, et dans lequel (f) comprend :

(f1) un moyen destiné à transformer le système d'équations simultanées en un système transformé d'équations simultanées qui est homomorphique au système d'équations simultanées,

(f2) un moyen destiné à vérifier l'existence de solutions non négatives au système transformé d'équations simultanées, et

(f3) un moyen destiné à déterminer l'existence de solutions non négatives au système d'équations simultanées sur la base du résultat de la vérification par (f2).

**12.** Appareil selon la revendication 11, dans lequel le moyen destiné à transformer le système utilise une application $\mu$ de l'anneau vers les nombres entiers défini comme suit :

$$\mu(0) = 0$$

$$\mu(1) = 1$$

$$\mu(\sigma) = 1$$

$$\mu(\alpha \bullet \beta) = \mu(\alpha) \bullet \mu(\beta)$$

$$\mu(\alpha + \beta) = \mu(\alpha) + \mu(\beta)$$

$$\mu(-\alpha) = -\mu(\alpha)$$

dans lequel $\sigma$ est une substitution, • représente l'opération produit de l'anneau, + représente l'opération addition de l'anneau, et $-\alpha$ est un élément inverse additif d'un élément $\alpha$ de l'anneau.

**13.** Appareil selon la revendication 11, dans lequel le moyen destiné à transformer le système utilise une transformation dans laquelle chaque symbole de prédicat est distribué vers chacun de ses arguments, et chaque symbole de fonction est distribué vers chacun de ses arguments.

**14.** Appareil selon la revendication 11, dans lequel le moyen destiné à vérifier l'existence de solutions non négatives au système transformé d'équations simultanées, utilise des correspondances d'ajustement de variables entre les termes dans le système d'équations simultanées et le système transformé d'équations simultanées.

# FIG.1

INPUT DATA

OUTPUT

TRANSFORMATION MEANS

10

ANALYZING MEANS

30

MEMORY UNIT

FLAG g  AREA X

35

STORING MEANS

20

AREA U

# FIG.2

START

**100**

TRANSFORMING INPUT DATA INTO EXPRESSION IN TERMS OF ELEMENTS OF MODULE

**200**

CHECKING EXISTENCE OF NON-NEGATIVE SOLUTIONS FOR PROOF EQUATION WITH ELEMENTS OF MODULE AS COEFFICIENTS AND ELEMENTS OF RING OF SCALARS OF MODULE AS UNKNOWNS

**300**

DETERMINING THAT INPUT DATA ARE PROVABLE WHEN NON-NEGATIVE SOLUTIONS EXIST, AND NOT PROVABLE OTHERWISE

END

## FIG.3

START

101
COUNT NUMBER OF CLAUSES n AND
NUMBER OF PROPOSITIONAL SYMBOLS $\ell$

102
MAKE PROPOSITIONAL SYMBOL TABLE F

103
PREPARE AREA U OF $(\ell+1)$ BY n,
AND INITIALIZE TO 0

104
ENTER LITERALS OF j-TH PROPOSITIONAL SYMBOL
AND i-TH CLAUSE AT $(j+1)$-TH ROW OF i-TH COLUMN
IN U

105
COUNT NUMBER $\kappa$ OF LITERALS INVOLVING NEGATION
FOR EACH COLUMN, AND ENTER $(1-\kappa)$ AT
1ST ROW OF THIS COLUMN

END

## FIG.4

PROPOSITIONAL SYMBOL TABLE F

| NO. | PROPOSITIONAL SYMBOL |
|-----|----------------------|
| 1   | P                    |
| 2   | Q                    |
| 3   | R                    |
| 4   | T                    |

## FIG.5

| 0   | 0   | 1   | 1   |
|-----|-----|-----|-----|
| P   | -P  | P   | 0   |
| -Q  | 0   | 0   | 0   |
| R   | 0   | 0   | R   |
| 0   | T   | 0   | 0   |

# FIG.6a

FIG.6
FIG.6a
FIG.6b

**FIG.6b**

EP 0 351 842 B1

## FIG.7

| NO. | UNKNOWN | SOLUTION |
|-----|---------|----------|
| 1 | @ 1 | |
| 2 | @ 2 | |
| 3 | @ 3 | |
| 4 | @ 4 | |

UNKNOWN TABLE Q

## FIG.8

30

31
r - TRANSFORMATION UNIT

32
Y SOLVING UNIT

33
Z SOLVING UNIT

34
CHECKING UNIT

35

AREA X

AREA Y

AREA Z

SOLVABILITY FLAG g

MEMORY UNIT

EP 0 351 842 B1

**FIG.9**

```
          ┌─────────────┐
          │    START    │
          └──────┬──────┘
                 │                              111
   ┌─────────────▼─────────────────────────────────┐
   │  COUNT NUMBER OF CLAUSES n AND                 │
   │  NUMBER OF PREDICATE SYMBOLS ℓ                 │
   └─────────────┬─────────────────────────────────┘
                 │                              112
   ┌─────────────▼─────────────────────────────────┐
   │  MAKE PREDICATE SYMBOL TABLE G                 │
   └─────────────┬─────────────────────────────────┘
                 │                              113
   ┌─────────────▼─────────────────────────────────┐
   │  GENERATE DECOMPOSITION COEFFICIENTS AND       │
   │  REGISTER IN G                                 │
   └─────────────┬─────────────────────────────────┘
                 │                              114
   ┌─────────────▼─────────────────────────────────┐
   │  PREPARE AREA U OF (ℓ+1) BY n                  │
   │  AND INITIALIZE TO 0                           │
   └─────────────┬─────────────────────────────────┘
                 │                              115
   ┌─────────────▼─────────────────────────────────┐
   │  ENTER LITERALS OF j-TH PREDICATE SYMBOL AND   │
   │  i-TH CLAUSE AT (j+1)-TH ROW OF i-TH COLUMN    │
   │  IN U                                          │
   └─────────────┬─────────────────────────────────┘
                 │                              116
   ┌─────────────▼─────────────────────────────────┐
   │  COUNT NUMBER κ OF LITERALS INVOLVING NEGATION │
   │  FOR EACH COLUMN, AND ENTER (1-κ) AT           │
   │  1ST. ROW OF THIS COLUMN                       │
   └─────────────┬─────────────────────────────────┘
                 │
          ┌──────▼──────┐
          │     END     │
          └─────────────┘
```

# FIG.10

| NO. | PREDICATE SYMBOL | NUMBER OF ARGUMENTS | DECOMPOSITION COEFFICIENT |
|---|---|---|---|
| 1 | F | 1 | F1 |
| 2 | B | 2 | B1, B2 |

PREDICATE SYMBOL TABLE G

# FIG.11

| -1 | 0 | 0 | 1 | 1 |
|---|---|---|---|---|
| -F (X) | 0 | 0 | F (a) | 0 |
| -B(yy (X),X) | -B (X,Y)+B (Y,X) | +B (Y,X)-B (Z,X) | 0 | B (b,c) |

EP 0 351 842 B1

## FIG.12

START

X←U

320

GENERATE NECESSARY NUMBER OF UNKNOWNS
AND MAKE UNKNOWN TABLE Q

330

FOR EACH ROW, CONNECT ALL TERMS COMPOSED AS
(ENTRY IN i-TH COLUMN) * (i-TH UNKNOWN)
BY "+", AND EQUATE WITH 0

340

[r2]   DISTRIBUTE PREDICATE SYMBOLS

350

[r3]   DISTRIBUTE FUNCTION SYMBOLS

360

DISTRIBUTE UNKNOWN SYMBOLS

370

LIST ALL PRODUCTS OF FORM
(VARIABLE) * (UNKNOWN) ON
VARIABLE TABLE H

380

GENERATE NEW VARIABLES FOR
PRODUCTS IN H

390

REPLACE PRODUCTS OF FORM
(VARIABLE) * (UNKNOWN) IN EQS.
IN X BY NEW VARIABLES

END

# FIG.13

UNKNOWN TABLE Q

| UNKNOWN | SOLUTION | MULTIPLICITY |
|---------|----------|--------------|
| @ 1 | | |
| @ 2 | | |
| @ 3 | | |
| @ 4 | | @ 4 |
| @ 5 | | @ 5 |

# FIG.14

[r2]

START

INSERT "i*" IN FRONT OF i-TH ARGUMENT OF EACH PREDICATE — 341

REPLACE "," SEPARATING ADJACENT ARGUMENTS BY "+" — 342

REMOVE BRACKETS AND DISTRIBUTE PREDICATE SYMBOLS — 343

END

# FIG.15

[r3]   ( START )

INSERT "i*" IN FRONT OF i-TH
ARGUMENT OF EACH FUNCTION          351

REPLACE "," SEPARATING ADJACENT
ARGUMENTS BY "+"                    352

REMOVE BRACKETS AND
DISTRIBUTE PREDICATE SYMBOLS        353

( END )

# FIG.16

VARIABLE TABLE H

| VARIABLE<br>* UNKNOWN | NEW<br>VARIABLE | SOLUTION | MULTIPLICITY |
|---|---|---|---|
| X*@1 | X1 | | |
| X*@2 | X2 | | |
| X*@3 | X3 | | |
| Y*@2 | Y2 | | |
| Y*@3 | Y3 | | |
| Z*@2 | Z3 | | |

**FIG.17a**

FIG.17

FIG.17a

FIG.17b

# FIG.17b

[s2c] 415 L.H.S. OF m-TH EQ. HAS FROM Xi-Xj ?

YES → 416 R.H.S. OF m-TH EQ. =0 ?

NO → 417 GENERATE NEW VARIABLE, REGISTER SUM OF POSITIVE TERMS IN R.H.S. PLUS NEW VARIABLE AS SOLUTION FOR Xi , SUM OF NEGATIVE TERMS IN R.H.S. PLUS NEW VARIABLE AS SOLUTION FOR Xj

YES → 418 REGISTER Xi AS SOLUTION FOR Xj

[s2d] 419 L.H.S. OF m-TH EQ. HAS TERMS OF FORM Ki*Xi ?

YES → 420 LOOK AT ONE TERM OF FORM Ki*Xi

421 R.H.S. OF m-TH EQ. HAS TERMS OF FORM Ki*ti ?

YES → 424 GENERATE NEW VARIABLE, AND REGISTER SUM OF CONSTANT TERMS IN R.H.S. WITH Ki REMOVED PLUS NEW VARIABLE AS SOLUTION FOR Xi, AND SUBSTITUTE IT IN H

NO → [s2d1] 422 ANY OTHER TERM OF FORM Ki*ti ?

YES → 423 LOOK AT ANOTHER TERM OF FORM Ki*ti

NO → 425 [s2d2] R.H.S. OF m-TH EQ. =0 ?

NO → 426 g←0

YES →

428 m←m+1

YES ← 427 ANY OTHER EQ. TO BE CHECKED IN Y?

NO → END

# FIG.18

VARIABLE TABLE H

| VARIABLE *UNKNOWN | NEW VARIABLE | SOLUTION | MULTIPLICITY |
|---|---|---|---|
| X * @1 | X1 | a * @4 | |
| X * @2 | X2 | a * @4+X4 | |
| X * @3 | X3 | | |
| Y * @2 | Y2 | c * @5+X4 | |
| Y * @3 | Y3 | yy * a * @4+a * @4+X5 | |
| Z * @3 | Z3 | b * @5+c * @5+X5 | |
| —— | X4 | | |
| —— | X5 | | |

# FIG.19a

START

SUBSTITUTE 0 FOR UNSPECIFIED SOLUTIONS IN H — 501

FIG.19

FIG.19a
FIG.19b

ANY SOLUTION WITH MORE THAN ONE TERM IN H ? — 502   NO

YES

503 — DECOMPOSE CORRESPONDING ORIGINAL UNKNOWN INTO SUM OF NEW UNKNOWNS, REGISTER THIS SUM AS SOLUTION IN Q, REGISTER NEW UNKNOWNS IN Q

504 — CORRESPONDINGLY DECOMPOSE VARIABLES IN H WITH THIS SOLUTION DISTRIBUTED AMONG NEW VARIABLES AS THEIR SOLUTIONS

505 — SUBSTITUTE THESE SOLUTIONS TO EQS. IN Z

506 — FOR VARIABLE WITH SINGLE TERM SOLUTION IN H, REGISTER UNKNOWN OF SOLUTION AS MULTIPLICITY IN H

57

# FIG.19b

507 — FOR VARIABLE WITH SOLUTION AS SUM OF OTHER VARIABLES, REGISTER THIS SOLUTION WITH OTHER VARIABLES REPLACED BY THEIR MULTIPLICITIES AS ITS MULTIPLICITY

508 — REGISTER MULTIPLICITY OF VARIABLE IN H AS MULTIPLICITY IN Q OF SUCH UNKNOWN THAT (VARIABLE*UNKNOWN) IS LISTED IN Q

509 — EQUATE SUCH UNKNOWNS WHICH ARE MULTIPLICITY OF ONE UNKNOWN IN Q, AND REMOVE DEGENERACIES AND REPETITIONS AMONG MULTIPLICITIES IN Q

510 — EQUATE SUM OF (i-TH ELEMENT OF 1ST. EQ. IN U TIMES MULTIPLICITY OF i-TH UNKNOWN IN Q) WITH 1, AND SOLVE

511 SOLVABLE ? — NO → 512 g←0

YES

513 — SUBSTITUTE SOLUTION IN Q AND H

514 — DETERMINE NUMBER OF CORRELATING VARIABLES NEEDED

515 — MAKE CORRELATING VARIABLE TABLE P

516 — ATTACH APPROPRIATE CORRELATING VARIABLE AND "*" TO EACH TERM OF EQS. IN Z

END

# FIG.20

VARIABLE TABLE H

| VARIABLE *UNKNOWN | NEW VARIABLE | SOLUTION | MULTIPLICITY |
|---|---|---|---|
| X*@1 | X1 | a*@4 | |
| X*@2 | X2 | a*@4 | |
| X*@3 | X3 | X6+X7 | |
| Y*@2 | Y2 | c*@5 | |
| Y*@3 | Y3 | Y6+Y7 | |
| Z*@3 | Z3 | Z6+Z7 | |
| — | X4 | 0 | |
| — | X5 | 0 | |
| X*@6 | X6 | | |
| X*@7 | X7 | | |
| Y*@6 | Y6 | yy*a*@4 | |
| Y*@7 | Y7 | a*@4 | |
| Z*@6 | Z6 | b*@5 | |
| Z*@7 | Z7 | c*@5 | |

# FIG.21

UNKNOWN TABLE Q

| NO. | UNKNOWN | SOLUTION | MULTIPLICITY |
|---|---|---|---|
| 1 | @1 | | |
| 2 | @2 | | |
| 3 | @3 | @6+@7 | |
| 4 | @4 | | |
| 5 | @5 | | |
| 6 | @6 | | |
| 7 | @7 | | |

# FIG.22

VARIABLE TABLE H

| VARIABLE *UNKNOWN | NEW VARIABLE | SOLUTION | MULTIPLICITY |
|---|---|---|---|
| X*@1 | X1 | a*@4 | @4 |
| X*@2 | X2 | a*@4 | @4 |
| X*@3 | X3 | X6+X7 | |
| Y*@2 | Y2 | c*@5 | @5 |
| Y*@3 | Y3 | Y6+Y7 | @4+@4 |
| Z*@3 | Z3 | Z6+Z7 | @5+@5 |
| — | X4 | 0 | |
| — | X5 | 0 | |
| X*@6 | X6 | | |
| X*@7 | X7 | | |
| Y*@6 | Y6 | yy*a*@4 | @4 |
| Y*@7 | Y7 | a*@4 | @4 |
| Z*@6 | Z6 | b*@5 | @5 |
| Z*@7 | Z7 | c*@5 | @5 |

# FIG.23

UNKNOWN TABLE Q

| NO. | UNKNOWN | SOLUTION | MULTIPLICITY |
|---|---|---|---|
| 1 | @1 | | @4,@5 |
| 2 | @2 | | @4,@5 |
| 3 | @3 | @6+@7 | 2@4,2@5 |
| 4 | @4 | | @4 |
| 5 | @5 | | @5 |
| 6 | @6 | | @4,@5 |
| 7 | @7 | | @4,@5 |

# FIG.24

UNKNOWN TABLE Q

| NO. | UNKNOWN | SOLUTION | MULTIPLICITY |
|-----|---------|----------|--------------|
| 1 | @1 | | @4 |
| 2 | @2 | | @4 |
| 3 | @3 | @6+ @7 | 2@4 |
| 4 | @4 | | @4 |
| 5 | @5 | @4 | @4 |
| 6 | @6 | | @4 |
| 7 | @7 | | @4 |

# FIG.25

VARIABLE TABLE H

| VARIABLE *UNKNOWN | NEW VARIABLE | SOLUTION | MULTIPLICITY |
|-------------------|--------------|----------|--------------|
| X*@1 | X1 | a | 1 |
| X*@2 | X2 | a | 1 |
| X*@3 | X3 | X6+X7 | |
| Y*@2 | Y2 | c | 1 |
| Y*@3 | Y3 | Y6+Y7 | 2 |
| Z*@3 | Z3 | Z6+Z7 | 2 |
| —— | X4 | 0 | |
| —— | X5 | 0 | |
| X*@6 | X6 | | |
| X*@7 | X7 | | |
| Y*@6 | Y6 | yy*a | 1 |
| Y*@7 | Y7 | a | 1 |
| Z*@6 | Z6 | b | 1 |
| Z*@7 | Z7 | c | 1 |

# FIG.26

UNKNOWN TABLE Q

| NO. | UNKNOWN | SOLUTION | MULTIPLICITY |
|-----|---------|----------|--------------|
| 1 | @1 | | 1 |
| 2 | @2 | | 1 |
| 3 | @3 | @6+ @7 | 2 |
| 4 | @4 | | 1 |
| 5 | @5 | @4 | 1 |
| 6 | @6 | | 1 |
| 7 | @7 | | 1 |

# FIG.27

CORRELATING VARIABLE TABLE P

| NO. | CORRELATING VARIABLE | EQUIVALENT CORRELATING VARIABLE |
|---|---|---|
| 1 | p | |
| 2 | q | |
| 3 | r | |
| 4 | s | |
| 5 | t | |
| 6 | u | |
| 7 | v | |
| 8 | w | |

# FIG.28 a

FIG.28

FIG.28a

FIG.28b

START

SUBSTITUTE SOLUTIONS OF H TO EQS. IN Z — 551

FOR EQS. IN Z, BRING ALL TERMS WITH VARIABLES TO, L.H.S., ALL CONSTANT TERMS TO R.H.S. — 552

LOOK AT 1ST EQ. IN Z — 553

554 — L.H.S=0 ?

YES → 555 FOR TWO TERMS IDENTICAL EXCEPT FOR CORRELATING VARIABLES, DETERMINE EQUIVALENT CORRELATING VARIABLES AND REGISTER THEM IN P, AND DELETE THIS EQ. FROM Z

NO

556 — NEXT EQ. IN Z ?

YES → LOOK AT NEXT EQ. IN Z — 557

NO

# FIG.28b

REMOVE DEGENERACIES AMONG CORRELATING VARIABLES FROM EQS. IN Z, AND REMOVE IDENTICAL TERMS — 558

REMOVE EQ. OF FORM 0=0 FROM Z — 559

SEARCH FOR EQ. OF FORM 0=ti (ti≠0) IN Z — 560

561 — ANY ?

NO

YES

562 — $g \leftarrow 0$

563 — LOOK AT 1ST. EQ. IN Z

564 — LOOK AT 1ST. TERM IN L.H.S.

565 — FOR VARIABLE IN L.H.S. WITH CONSTANT TERMS IN R.H.S. WITH SAME CORRELATING VARIABLE INCLUDING SIGN, REGISTER SUM OF SUCH CONSTANT TERMS AS SOLUTION IN H

567 — LOOK AT NEXT TERM

YES

566 — NEXT TERM ?

NO

569 — LOOK AT NEXT EQ.

YES

568 — NEXT EQ. ?

NO

END

# FIG.29

VARIABLE TABLE H

| VARIABLE *UNKNOWN | NEW VARIABLE | SOLUTION | MULTIPLICITY |
|---|---|---|---|
| X＊@1 | X1 | a | 1 |
| X＊@2 | X2 | a | 1 |
| X＊@3 | X3 | X6+X7 | |
| Y＊@2 | Y2 | c | 1 |
| Y＊@3 | Y3 | Y6+Y7 | 2 |
| Z＊@3 | Z3 | Z6+Z7 | 2 |
| | X4 | 0 | |
| | X5 | 0 | |
| X＊@6 | X6 | a | |
| X＊@7 | X7 | c | |
| Y＊@6 | Y6 | yy＊a | 1 |
| Y＊@7 | Y7 | a | 1 |
| Z＊@6 | Z6 | b | 1 |
| Z＊@7 | Z7 | c | 1 |

# FIG.30

CORRELATING VARIABLE TABLE P

| NO. | CORRELATING VARIABLE | EQUIVALENT CORRELATING VARIABLE |
|---|---|---|
| 1 | p | s |
| 2 | q | t |
| 3 | r | |
| 4 | s | |
| 5 | t | |
| 6 | u | w |
| 7 | v | r |
| 8 | w | |

## FIG.31

START

DERIVE EXPRESSIONS FOR UNKNOWNS FROM H
AND REGISTER THESE IN Q AS SOLUTIONS — 601

$m \leftarrow 2$ — 602

SUBSTITUTE SOLUTIONS OF Q
TO m-TH EQ. IN Z — 603

604
DOES IT
HOLD
? — NO → $g \leftarrow 0$ — 605

YES

607
$m \leftarrow m+1$ ← YES — 606 — $m = \ell+1$ ?

NO

END

## FIG.32

UNKNOWN TABLE Q

| NO. | UNKNOWN | SOLUTION | MULTIPLICITY |
|---|---|---|---|
| 1 | @1 | (a/X) | 1 |
| 2 | @2 | (a/X, c/Y) | 1 |
| 3 | @3 | @6+@7 | 2 |
| 4 | @4 | 1 | 1 |
| 5 | @5 | 1 | 1 |
| 6 | @6 | {a/X, yy (a)/Y, c/Z} | 1 |
| 7 | @7 | {c/X, a/Y, b/Z} | 1 |